# EUROPEAN PATENT APPLICATION

(11) **EP 4 443 960 A1**
(43) Date of publication of application: **09.10.2024**
(21) Application number: 22909882.7
(22) Date of filing: 16.12.2022
(51) Int. Cl.: H04W 36/00

(54) **SWITCHING METHOD, COMMUNICATION APPARATUS, AND COMMUNICATION SYSTEM**

(30) Priority: 21.12.2021 CN 202111568633
(71) Applicant: Huawei Technologies Co., Ltd., Shenzhen, Guangdong 518129 (CN)
(72) Inventor: ZONG, Zaifeng, Shenzhen, Guangdong 518129 (CN); ZHANG, Chengchen, Shenzhen, Guangdong 518129 (CN); QU, Qin, Shenzhen, Guangdong 518129 (CN)
(74) Representative: Gill Jennings & Every LLP
(86) International application number: PCT/CN2022/139599
(87) International publication number: WO 2023/116568

(57) **Abstract**

This application provides a switching method, a communication apparatus, and a communication system. The method includes: When a user plane network element that provides services for a first terminal device is switched, a target user plane network element after switching sends, to a session management network element, information indicating that the user plane network element of the first terminal device is switched, and includes tunnel information of the target user plane network element after the switching in the information. In this way, the session management network element may provide the tunnel information of the target user plane network element of the first terminal device after the switching to a user plane network element of a second terminal device in a timely manner, to ensure correct switching.

## Description

### CROSS-REFERENCE TO RELATED APPLICATION

This application claims priority to Chinese Patent Application No. 202111568633.9, filed with the China National Intellectual Property Administration on December 21, 2021 and entitled "SWITCHING METHOD, COMMUNICATION APPARATUS, AND COMMUNICATION SYSTEM", which is incorporated herein by reference in its entirety.

### TECHNICAL FIELD

This application relates to the field of communication technologies, and in particular, to a switching method, a communication apparatus, and a communication system.

### BACKGROUND

Currently, both an access network device and a user plane network element that provide services for a terminal device may be deployed on a satellite. Based on this scenario, when switching occurs on the access network device or the user plane network element and both that provide the services for the terminal device, how to implement correct switching is to be resolved.

### SUMMARY

Embodiments of this application provide a switching method, a communication apparatus, and a communication system, to implement correct switching on an access network device or a user plane network element and both that provide services for a terminal device.

According to a first aspect, an embodiment of this application provides a switching method. A first terminal device is switched. The method may be performed by a session management network element or a module (for example, a chip) used in the session management network element. The method includes: The session management network element receives, through a target access network device of the first terminal device, information that is from a target user plane network element of the first terminal device and that indicates that a user plane network element of the first terminal device is switched, where the information includes tunnel information of the target user plane network element of the first terminal device; and the session management network element sends the tunnel information of the target user plane network element of the first terminal device to a user plane network element of a second terminal device, to update user plane network element information of the first terminal device in the user plane network element of the second terminal device, where the tunnel information of the target user plane network element of the first terminal device is used to send downlink data of the first terminal device to the target user plane network element of the first terminal device.

According to the foregoing solution, when the user plane network element that provides services for the first terminal device is switched, the target user plane network element after switching sends, to the session management network element, the information indicating that a user plane network element of the first terminal device is switched, and includes the tunnel information of the target user plane network element after the switching in the information. In this way, the session management network element may provide the tunnel information of the target user plane network element of the first terminal device after the switching to the user plane network element of the second terminal device in a timely manner, to ensure correct switching.

In a possible implementation, the session management network element sends an end marker indication to the user plane network element of the second terminal device. The end marker indication indicates to send an end marker to a source user plane network element of the first terminal device.

In a possible implementation, the second terminal device is switched, and the user plane network element of the second terminal device is a target user plane network element of the second terminal device; and before the session management network element receives, through the target access network device, the information that is from a target user plane network element of the first terminal device and that indicates that a user plane network element of the first terminal device is switched, the session management network element receives tunnel information of the target user plane network element of the second terminal device; the session management network element sends the tunnel information of the target user plane network element of the second terminal device to the source user plane network element of the first terminal device, to update user plane network element information of the second terminal device in the source user plane network element of the first terminal device; and the session management network element receives from the source user plane network element of the first terminal device a response message for rejecting the update.

In a possible implementation, after the session management network element receives, through the target access network device, the information that is from a target user plane network element of the first terminal device and that indicates that a user plane network element of the first terminal device is switched, the session management network element sends the tunnel information of the target user plane network element of the second terminal device to the target user plane network element of the first terminal device.

In a possible implementation, the second terminal device is switched, and the user plane network element of the second terminal device is a target user plane network element of the second terminal device; and after the session management network element receives, through the target access network device, the information that is from a target user plane network element of the first terminal device and that indicates that a user plane network element of the first terminal device is switched, the session management network element receives tunnel information of the target user plane network element of the second terminal device; and the session management network element sends the tunnel information of the target user plane network element of the second terminal device to the target user plane network element of the first terminal device.

In a possible implementation, the session management network element sends an end marker indication to the target user plane network element of the first terminal device. The end marker indication indicates to send an end marker to a source user plane network element of the second terminal device.

In a possible implementation, the session management network element receives a session modification request from a mobility management network element. The session modification request includes the information indicating that a user plane network element of the first terminal device is switched.

In a possible implementation, the second terminal device is switched, and the user plane network element of the second terminal device is a target user plane network element of the second terminal device; and before the session management network element receives, through the target access network device, the information that is from a target user plane network element of the first terminal device and that indicates that a user plane network element of the first terminal device is switched, the session management network element receives tunnel information of the target user plane network element of the second terminal device; and the session management network element sends the tunnel information of the target user plane network element of the second terminal device to a source user plane network element of the first terminal device.

In a possible implementation, the session management network element sends an end marker indication to the source user plane network element of the first terminal device. The end marker indication indicates to send an end marker to a source access network device of the first terminal device.

In a possible implementation, the session management network element sends an end marker indication to a source user plane network element of the second terminal device. The end marker indication indicates to send an end marker to a source access network device of the second terminal device.

In a possible implementation, after the session management network element receives, through the target access network device, the information that is from a target user plane network element of the first terminal device and that indicates that a user plane network element of the first terminal device is switched, the session management network element sends the tunnel information of the target user plane network element of the second terminal device to the target user plane network element of the first terminal device.

In a possible implementation, the session management network element receives source tunnel information of the user plane network element of the second terminal device from the target user plane network element of the first terminal device; and if the tunnel information of the source user plane network element of the second terminal device from the target user plane network element of the first terminal device is different from the tunnel information that is of the target user plane network element of the second terminal device and that is stored by the session management network element, the session management network element sends the tunnel information of the target user plane network element of the second terminal device to the target user plane network element of the first terminal device.

In a possible implementation, after the session management network element receives, through the target access network device, the information that is from a target user plane network element of the first terminal device and that indicates that a user plane network element of the first terminal device is switched, the session management network element receives tunnel information of a target user plane network element of the second terminal device; and the session management network element sends the tunnel information of the target user plane network element of the second terminal device to a source user plane network element of the first terminal device and the target user plane network element of the first terminal device.

In a possible implementation, the session management network element sends an end marker indication to the source user plane network element of the first terminal device. The end marker indication indicates to send an end marker to a source access network device of the first terminal device.

In a possible implementation, the session management network element receives a message that is from a mobility management network element or the target access network device and that indicates that the first terminal device is being switched. The message includes the information indicating that a user plane network element of the first terminal device is switched.

According to a second aspect, an embodiment of this application provides a switching method. A first terminal device is switched. The method may be performed by a user plane network element or a module (for example, a chip) used in a user plane network element. The method includes: A target user plane network element of the first terminal device receives first tunnel information of a user plane network element of a second terminal device from a source user plane network element of the first terminal device through a target access network device of the first terminal device, where the first tunnel information of the user plane network element of the second terminal device is used to send downlink data of the second terminal device to the user plane network element of the second terminal device; and the target user plane network element sends first tunnel information of the target user plane network element of the first terminal device to a session management network element through the target access network device, where the first tunnel information of the target user plane network element of the first terminal device is used to send downlink data of the first terminal device to the target user plane network element of the first terminal device.

According to the foregoing solution, when the user plane network element that provides services for the first terminal device is switched, the target user plane network element after switching receives the user plane network element of the second terminal device, and sends, to the session management network element, the first tunnel information of the target user plane network element after the switching. In this way, the session management network element may provide the first tunnel information of the target user plane network element of the first terminal device after the switching to the user plane network element of the second terminal device in a timely manner, to ensure correct switching.

In a possible implementation, the first tunnel information of the user plane network element of the second terminal device is included in a context of a session of the first terminal device. The context of the session further includes at least one of a session endpoint identifier of the session management network element, a packet detection rule corresponding to the session, and identification information of the session management network element. The session endpoint identifier of the session management network element identifies the session in the session management network element. The packet detection rule corresponding to the session is used by the target user plane network element of the first terminal device to process an uplink data packet and/or a downlink data packet of the first terminal device.

In a possible implementation, the session corresponds to a local area network LAN group. The target user plane network element receives a packet detection rule corresponding to the LAN group from the source user plane network element of the first terminal device through the target access network device. The packet detection rule corresponding to the LAN group is used by the target user plane network element to process a data packet sent to another UE in the LAN group.

In a possible implementation, the target user plane network element sends, to the session management network element through the target access network device, information indicating that a user plane network element of the first terminal device is switched. The information indicating that a user plane network element of the first terminal device is switched includes the first tunnel information of the target user plane network element of the first terminal device.

In a possible implementation, the information indicating that a user plane network element of the first terminal device is switched further includes a session endpoint identifier of the target user plane network element of the first terminal device. The session endpoint identifier of the target user plane network element of the first terminal device identifies the session in the target user plane network element of the first terminal device.

In a possible implementation, the target user plane network element allocates the first tunnel information of the target user plane network element.

In a possible implementation, the target user plane network element receives tunnel information of the target access network device from the target access network device; and the target user plane network element sends second tunnel information of the target user plane network element to the target access network device, where the second tunnel information of the target user plane network element is used by the target access network device of the first terminal device to send uplink data of the first terminal device to the target user plane network element.

In a possible implementation, the target user plane network element receives first tunnel information of a target user plane network element of the second terminal device from the session management network element; and the target user plane network element sends downlink data of the second terminal device to the target user plane network element of the second terminal device.

In a possible implementation, the target user plane network element receives an end marker indication from the session management network element; and the target user plane network element sends an end marker to a source user plane network element of the second terminal device according to the end marker indication.

According to a third aspect, an embodiment of this application provides a switching method. A first terminal device is switched. The method may be performed by an access network device or a module (for example, a chip) used in an access network device. The method includes: A source access network device of the first terminal device sends a switch preparation request message to a source user plane network element of the first terminal device, where the switch preparation request message includes an identifier of a session of the first terminal device; the source access network device receives a switch preparation response message from the source user plane network element, where the switch preparation response message includes tunnel information of a user plane network element of a second terminal device corresponding to the session; and the source access network device sends the tunnel information of the user plane network element of the second terminal device to a target user plane network element of the first terminal device through a target access network device.

According to the foregoing solution, the source user plane network element of the first terminal device before the switching provides the tunnel information of the user plane network element of the second terminal to the target user plane network element of the first terminal device after switching, through the source access network device of the first terminal device, so that a switching procedure is accelerated and accurate switching is ensured.

In a possible implementation, the source access network device receives, from the target access network device, radio resource information allocated by the target access network device to the session; and the source access network device sends the radio resource information to the first terminal device.

In a possible implementation, the source access network device receives, from the target access network device, forwarding tunnel information of the target access network device corresponding to the session; and the source access network device sends downlink data of the first terminal device to the target access network device based on the forwarding tunnel information.

According to a fourth aspect, an embodiment of this application provides a switching method. A first terminal device is switched. The method may be performed by an access network device or a module (for example, a chip) used in an access network device. The method includes: A target access network device of the first terminal device receives tunnel information of a user plane network element of a second terminal device from a source user plane network element of the first terminal device through a source access network device of the first terminal device; and the target access network device sends the tunnel information of the user plane network element of the second terminal device to a target user plane network element of the first terminal device.

According to the foregoing solution, the source user plane network element of the first terminal device before the switching provides the tunnel information of the user plane network element of the second terminal to the target user plane network element of the first terminal device after switching, through the source access network device of the first terminal device, so that a switching procedure is accelerated and accurate switching is ensured.

In a possible implementation, the target access network device receives information that is from the target user plane network element of the first terminal device and that indicates that a user plane network element of the first terminal device is switched, where the information includes tunnel information of the target user plane network element of the first terminal device; and the target access network device sends the information to a session management network element.

In a possible implementation, the information further includes a session endpoint identifier of the target user plane network element of the first terminal device. The session endpoint identifier of the target user plane network element of the first terminal device identifies a session in the target user plane network element of the first terminal device.

In a possible implementation, the tunnel information of the user plane network element of the second terminal device is included in a context of a session of the first terminal device. The context of the session further includes at least one of a session endpoint identifier of the session management network element, a packet detection rule corresponding to the session, and identification information of the session management network element. The session endpoint identifier of the session management network element identifies the session in the session management network element. The packet detection rule corresponding to the session is used by the target user plane network element of the first terminal device to process an uplink data packet and/or a downlink data packet of the first terminal device.

In a possible implementation, the session corresponds to a local area network LAN group. The target access network device receives a packet detection rule corresponding to the LAN group from the source user plane network element of the first terminal device, where the packet detection rule corresponding to the LAN group is used by the target user plane network element of the first terminal device to process a data packet sent to another UE in the LAN group; and the target access network device sends, to the target user plane network element of the first terminal device, the packet detection rule corresponding to the LAN group.

According to a fifth aspect, an embodiment of this application provides a switching method. Both a first terminal device and a second terminal device switch. The method may be performed by a session management network element or a module (for example, a chip) used in a session management network element. The method includes: The session management network element receives information indicating that the first terminal device is switched; the session management network element receives first tunnel information from a target user plane network element of a second terminal device; the session management network element sends the first tunnel information of the target user plane network element of the second terminal device to a source user plane network element of the first terminal device, to update user plane network element information of the second terminal device in the source user plane network element of the first terminal device; the session management network element sends the first tunnel information of the target user plane network element of the second terminal device to a target user plane network element of the first terminal device; and the session management network element sends second tunnel information of the target user plane network element of the first terminal device to a target access network device of the first terminal device.

In a possible implementation, before the session management network element receives the first tunnel information of the target user plane network element of the second terminal device from the target user plane network element of the second terminal device, the session management network element receives information indicating that the second terminal device is switched; and the session management network element sends first tunnel information of the source user plane network element of the first terminal device to the target user plane network element of the second terminal device.

In a possible implementation, before the session management network element sends the first tunnel information of the target user plane network element of the second terminal device to the target user plane network element of the first terminal device, the session management network element sends an end marker indication to the source user plane network element of the first terminal device. The end marker indication indicates to send an end marker to a source user plane network element of the second terminal device.

According to a sixth aspect, an embodiment of this application provides a communication apparatus. The apparatus may be a session management network element or a module (for example, a chip) used in a session management network element. The apparatus has a function of implementing any implementation of the first aspect or the fifth aspect. The function may be implemented by hardware, or may be implemented by hardware executing corresponding software. The hardware or the software includes one or more modules corresponding to the function.

According to a seventh aspect, an embodiment of this application provides a communication apparatus. The apparatus may be a user plane network element or a module (for example, a chip) used in a user plane network element. The apparatus has a function of implementing any implementation of the second aspect. The function may be implemented by hardware, or may be implemented by hardware executing corresponding software. The hardware or the software includes one or more modules corresponding to the function.

According to an eighth aspect, an embodiment of this application provides a communication apparatus. The apparatus may be a user plane network element or a module (for example, a chip) used in a user plane network element. The apparatus has a function of implementing any implementation of the third aspect or the fourth aspect. The function may be implemented by hardware, or may be implemented by hardware executing corresponding software. The hardware or the software includes one or more modules corresponding to the function.

According to a ninth aspect, an embodiment of this application provides a communication apparatus, including a processor coupled to a memory. The processor is configured to invoke a program stored in the memory, to perform any implementation in the first aspect to the fifth aspect. The memory may be located inside or outside the apparatus. There may be one or more processors.

According to a tenth aspect, an embodiment of this application provides a communication apparatus, including a processor and a memory. The memory is configured to store computer instructions. When the apparatus runs, the processor executes the computer instructions stored in the memory, to enable the apparatus to perform any implementation in the first aspect to the fifth aspect.

According to an eleventh aspect, an embodiment of this application provides a communication apparatus, including units or means (means) configured to perform the steps of any implementation in the first aspect to the fifth aspect.

According to a twelfth aspect, an embodiment of this application provides a communication apparatus, including a processor and an interface circuit. The processor is configured to communicate with another apparatus through the interface circuit and perform any implementation in the first aspect to the fifth aspect. There are one or more processors.

According to a thirteenth aspect, an embodiment of this application further provides a chip system, including a processor, configured to perform any implementation in the first aspect to the fifth aspect.

According to a fourteenth aspect, an embodiment of this application further provides a computer-readable storage medium. The computer-readable storage medium stores instructions. When the instructions are run on a communication apparatus, any implementation in the first aspect to the fifth aspect is performed.

According to a fifteenth aspect, an embodiment of this application further provides a computer program product. The computer program product includes a computer program or instructions. When the computer program or the instructions are run by a communication apparatus, any implementation in the first aspect to the fifth aspect is performed.

According to a sixteenth aspect, an embodiment of this application provides a communication system, including any plurality of the communication apparatus for performing any implementation of the first aspect, the communication apparatus for performing any implementation of the second aspect, the communication apparatus for performing any implementation of the third aspect, the communication apparatus for performing any implementation of the fourth aspect, or the communication apparatus for performing any implementation of the fifth aspect.

### BRIEF DESCRIPTION OF DRAWINGS

FIG. 1(a) is a schematic diagram of a 5G network architecture based on a service architecture;
FIG. 1(b) is a schematic diagram of a 5G network architecture based on a point-to-point interface;
FIG. 2 is a schematic diagram of a communication path between UEs;
FIG. 3 is a schematic diagram of a communication path between UEs;
FIG. 4 is a schematic diagram of a communication path between UEs;
FIG. 5A and FIG. 5B are a schematic flowchart of a switching method according to an embodiment of this application;
FIG. 6A and FIG. 6B are a schematic flowchart of a switching method according to an embodiment of this application;
FIG. 7(a) is a schematic flowchart of a switching method according to an embodiment of this application;
FIG. 7(b)-1 and FIG. 7(b)-2 are a schematic flowchart of a switching method according to an embodiment of this application;
FIG. 7(c)-1 and FIG. 7(c)-2 are a schematic flowchart of a switching method according to an embodiment of this application;
FIG. 7(d)-1 and FIG. 7(d)-2 are a schematic flowchart of a switching method according to an embodiment of this application;
FIG. 7(e)-1 and FIG. 7(e)-2 are a schematic flowchart of a switching method according to an embodiment of this application;

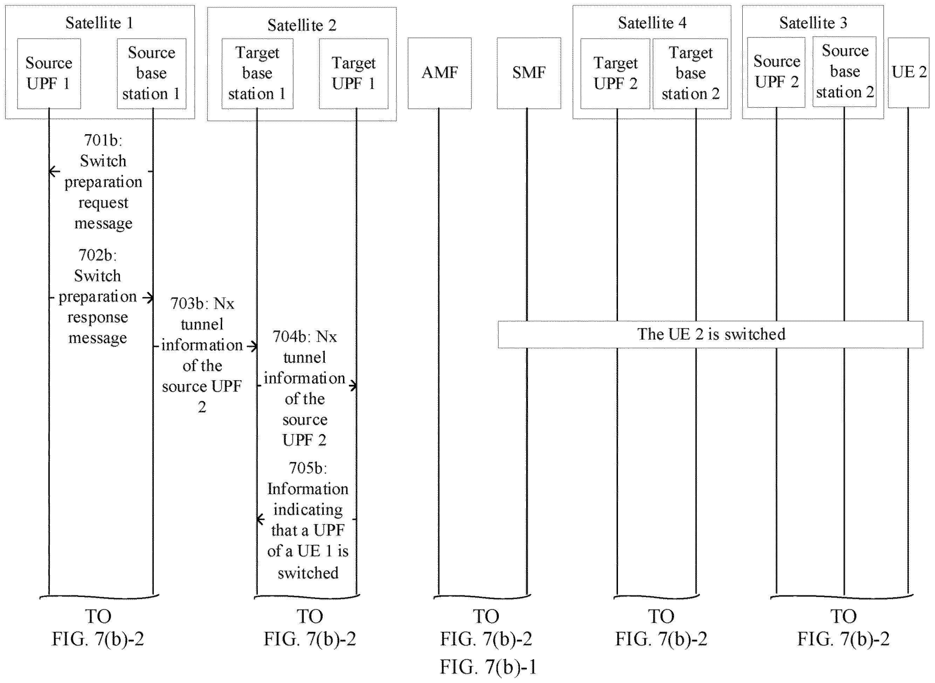

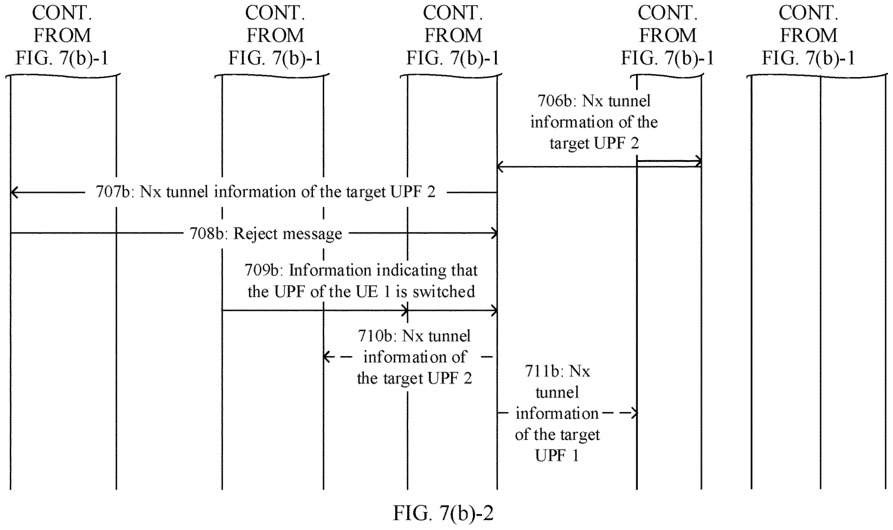

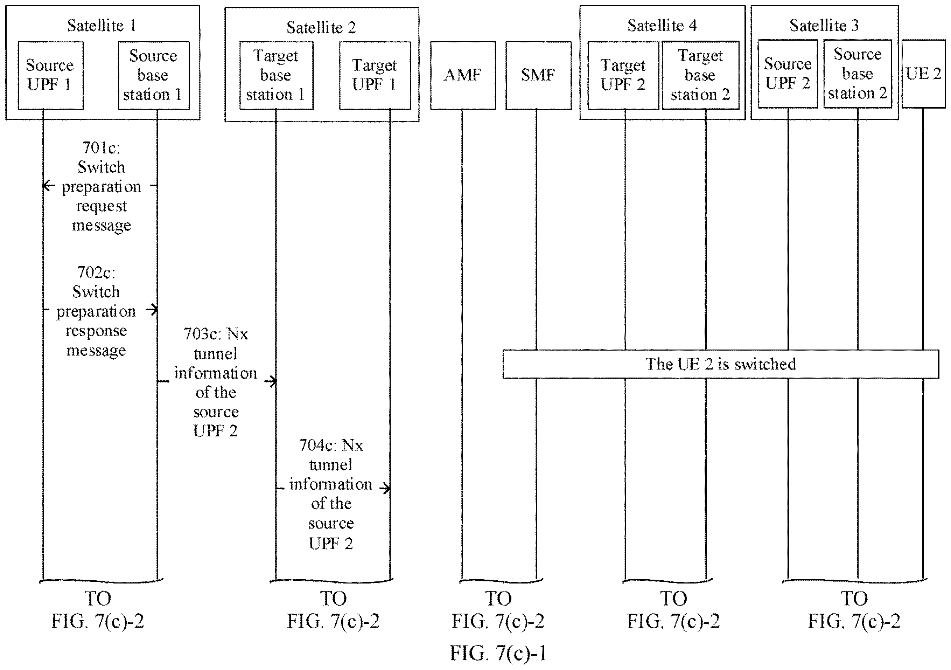

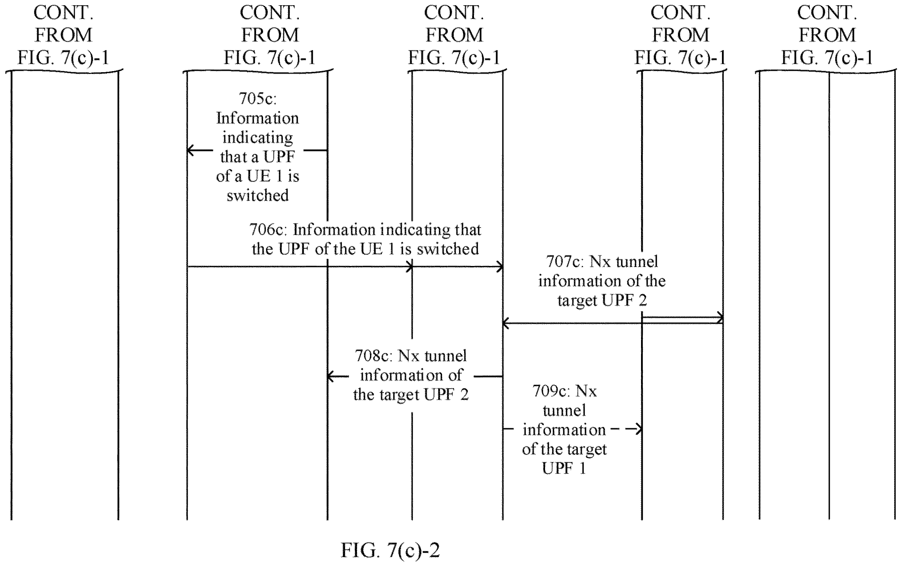

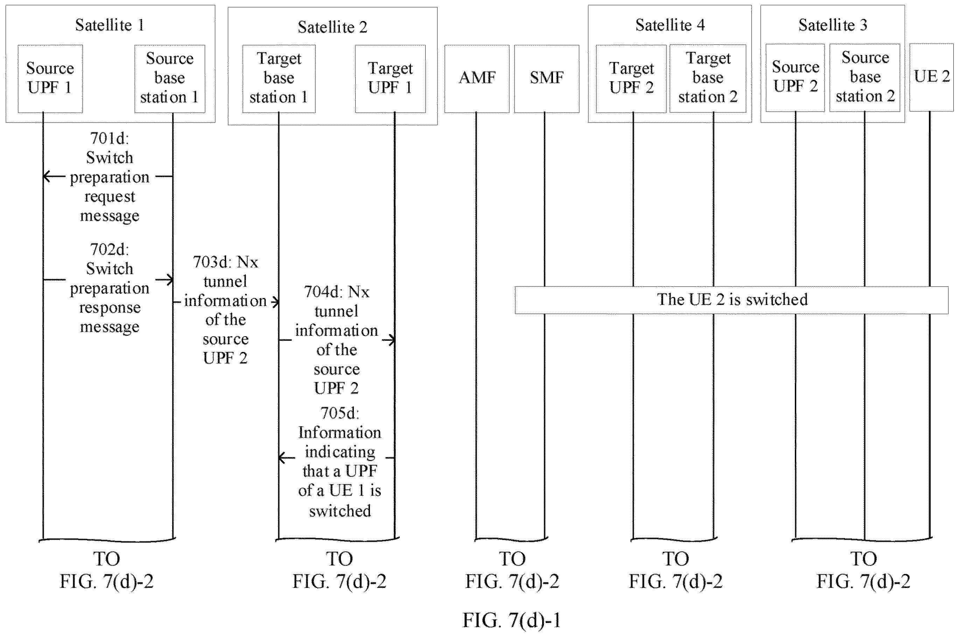

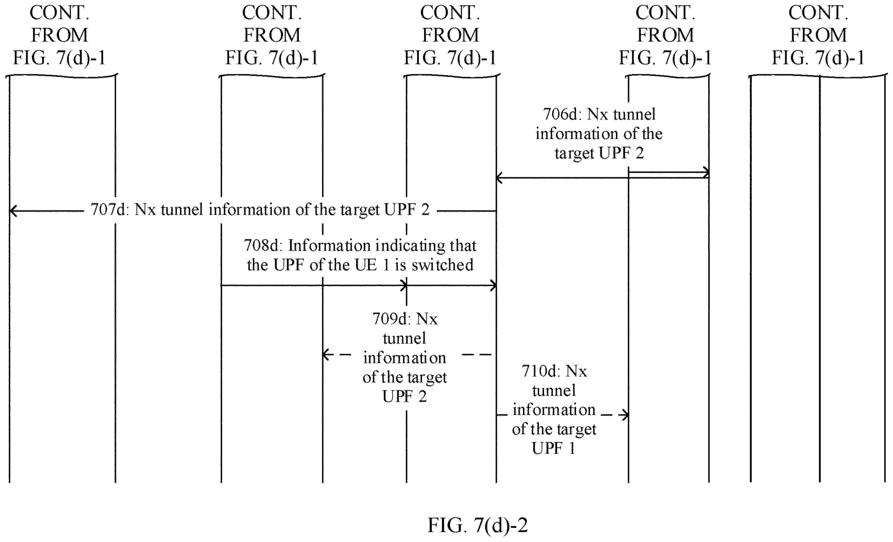

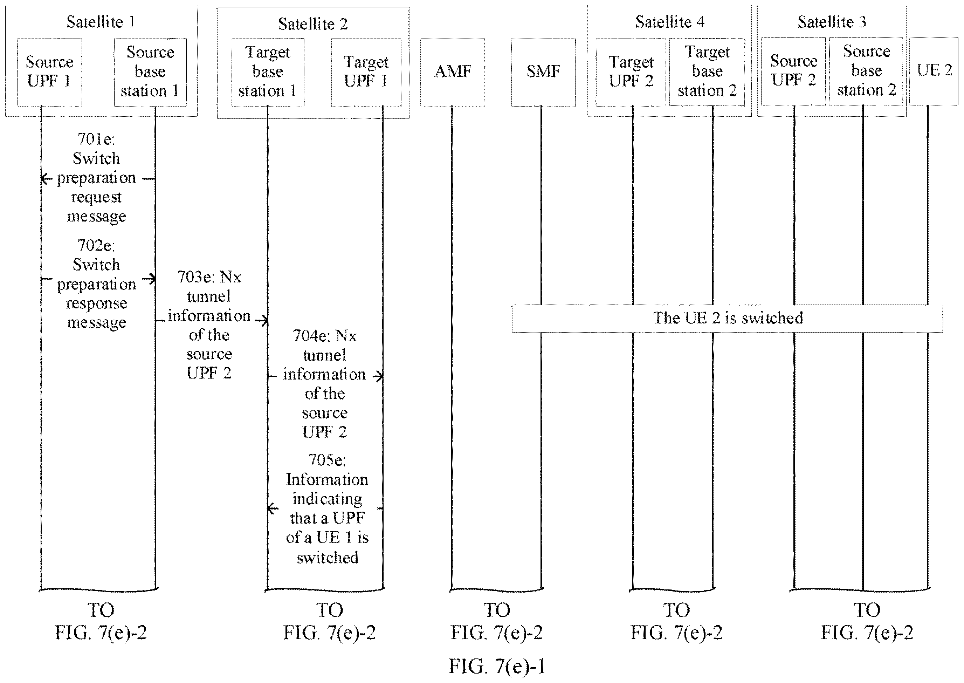

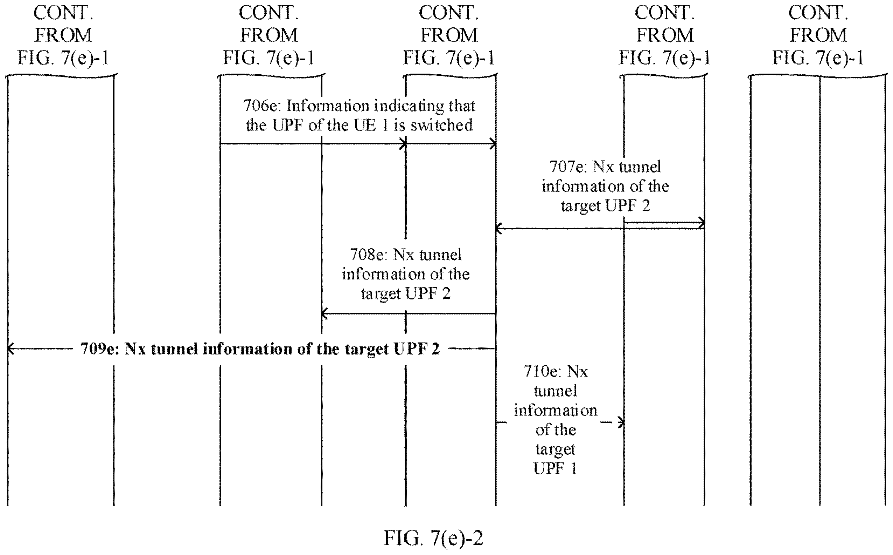

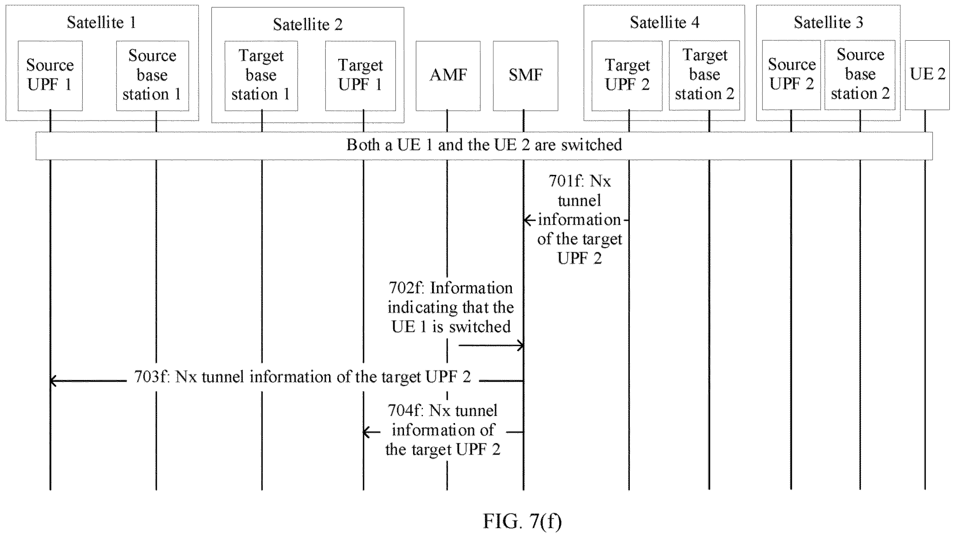

FIG. 7(f) is a schematic flowchart of a switching method according to an embodiment of this application;

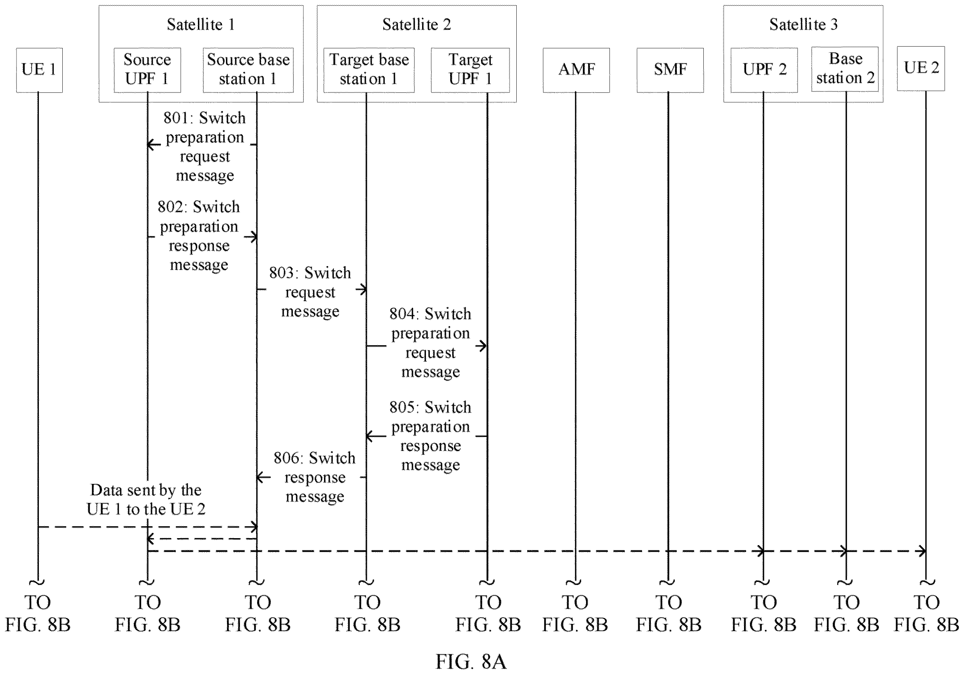

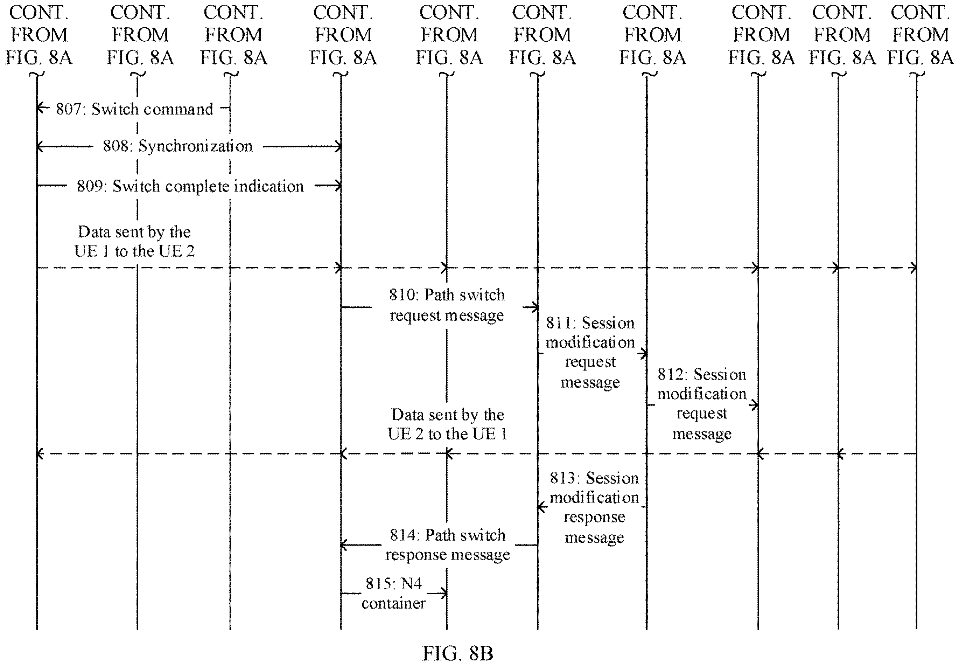

FIG. 8A and FIG. 8B are a schematic flowchart of a switching method according to an embodiment of this application;

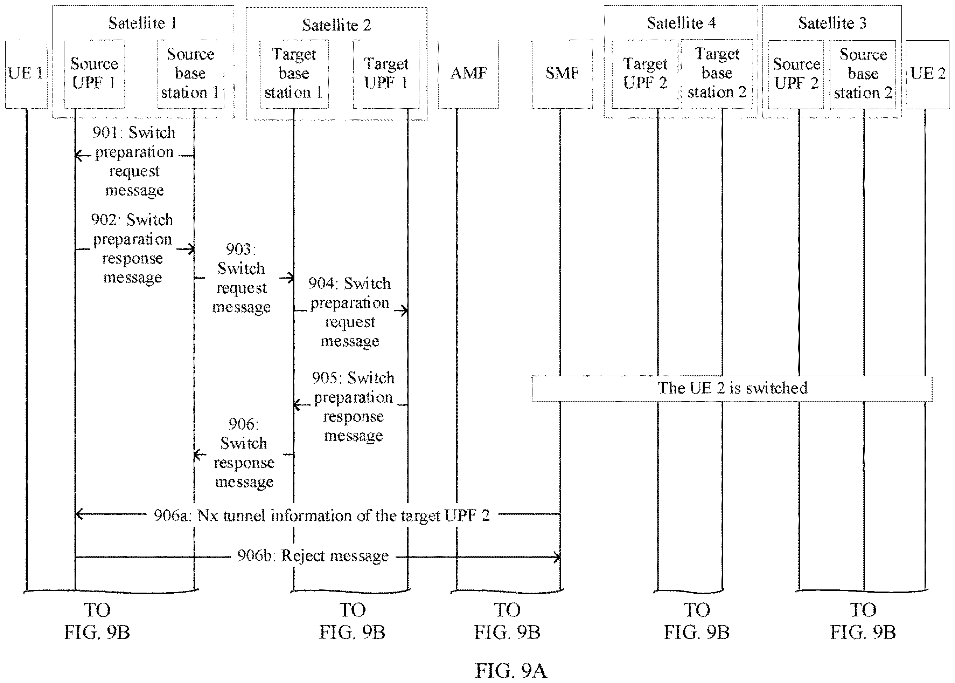

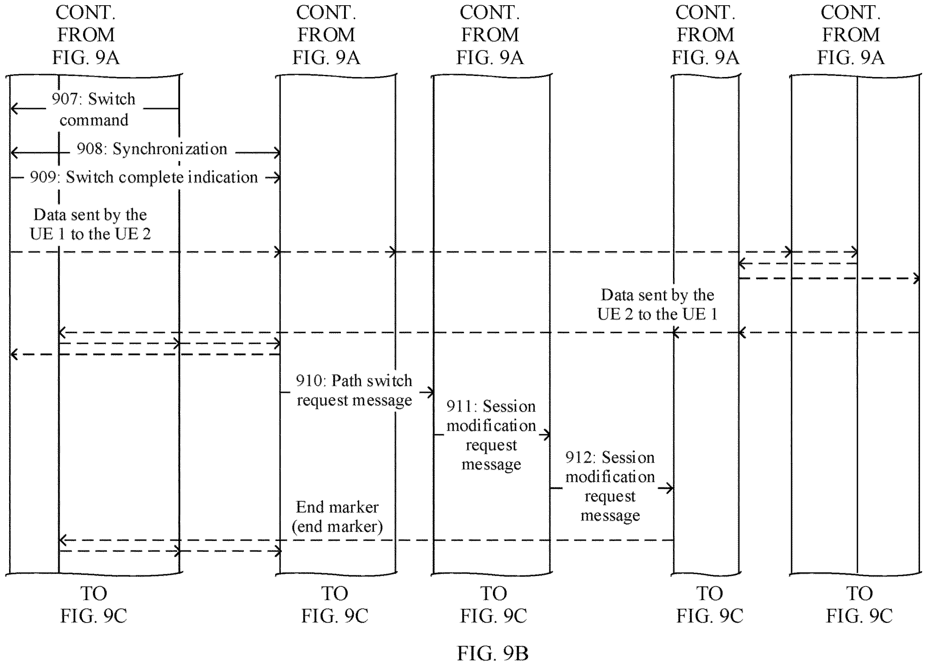

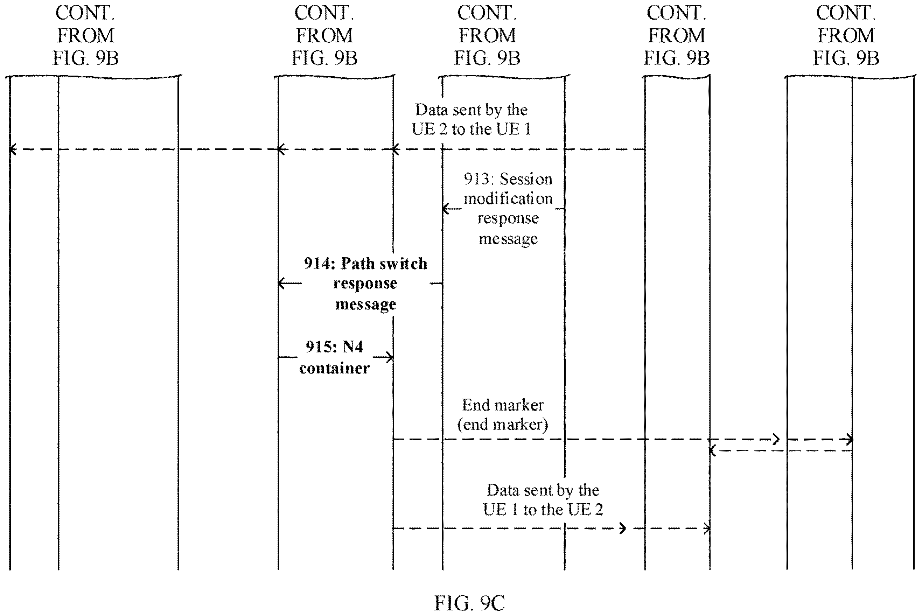

FIG. 9A, FIG. 9B, and FIG. 9C are a schematic flowchart of a switching method according to an embodiment of this application;

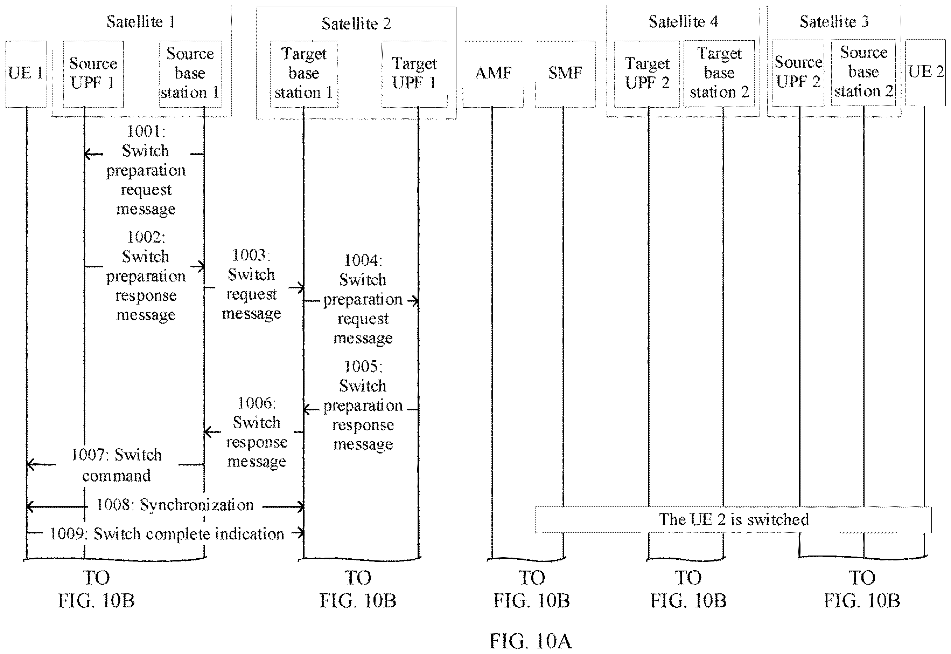

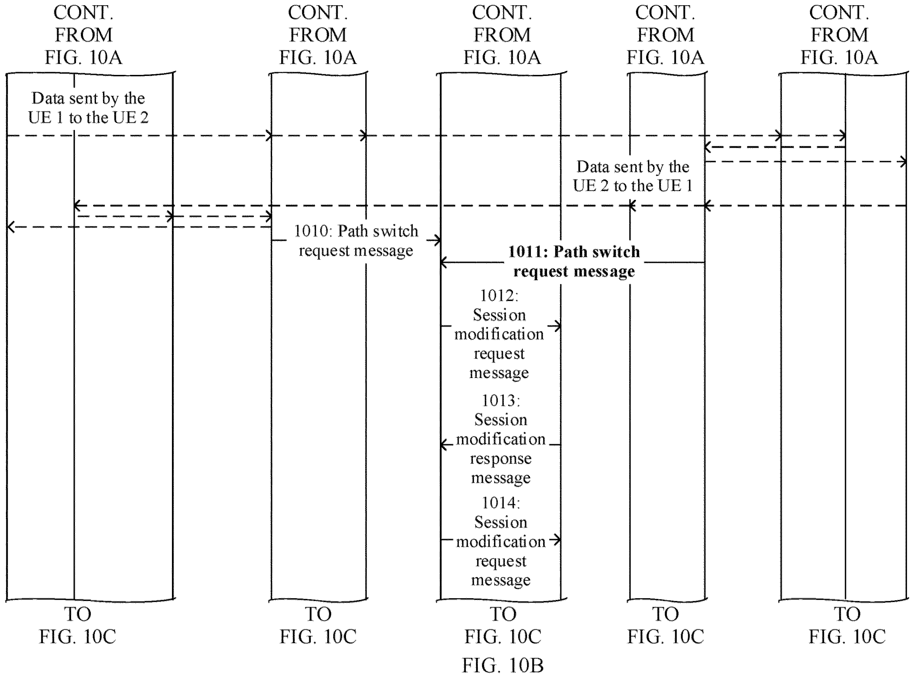

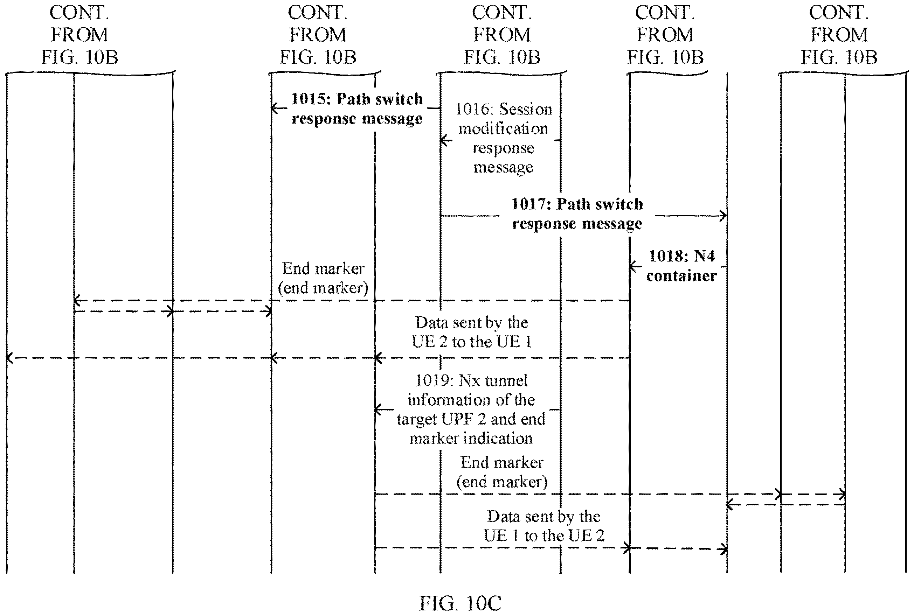

FIG. 10A, FIG. 10B, and FIG. 10C are a schematic flowchart of a switching method according to an embodiment of this application;

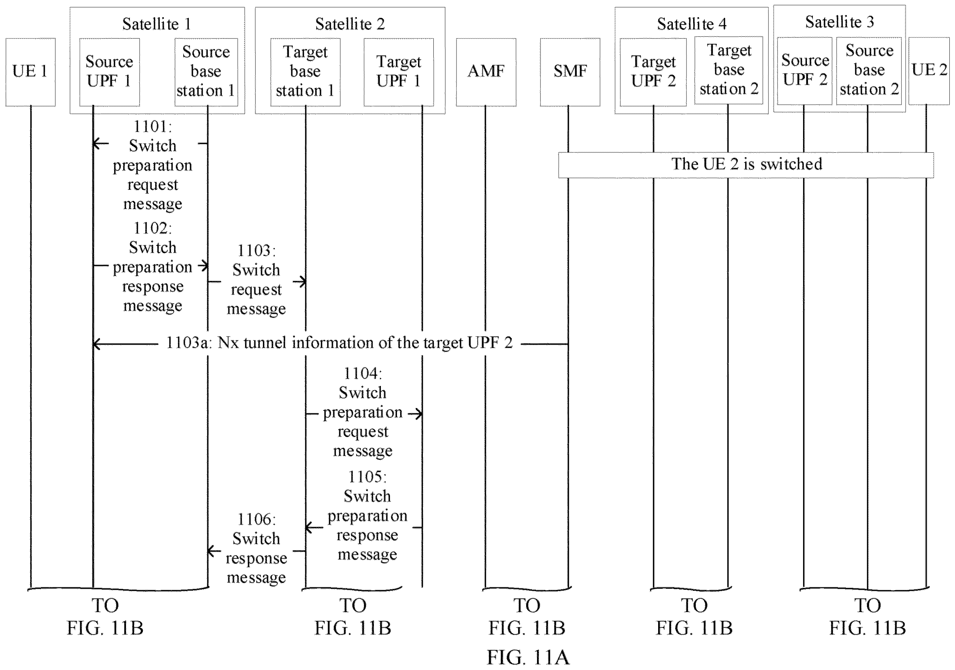

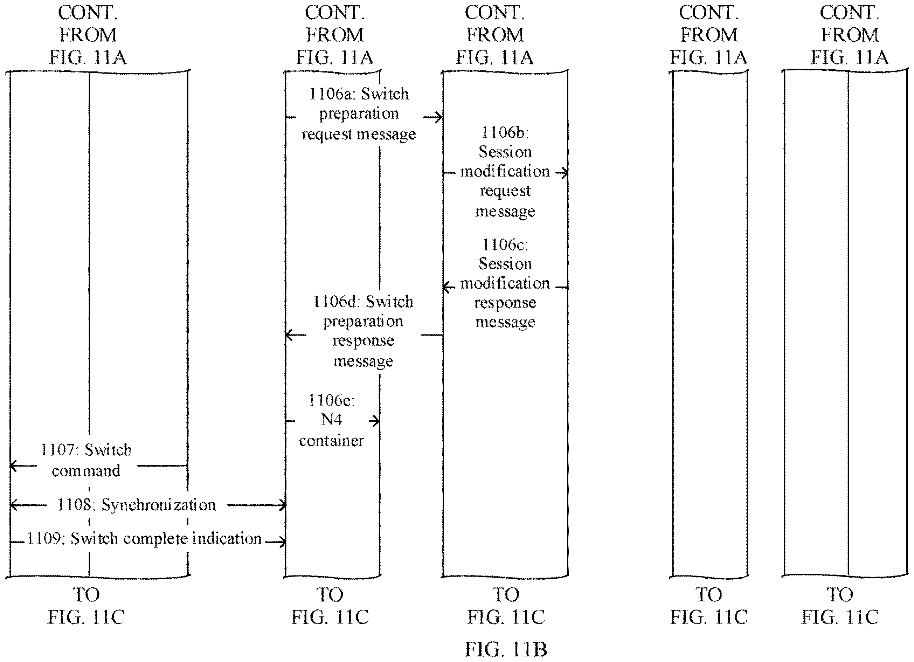

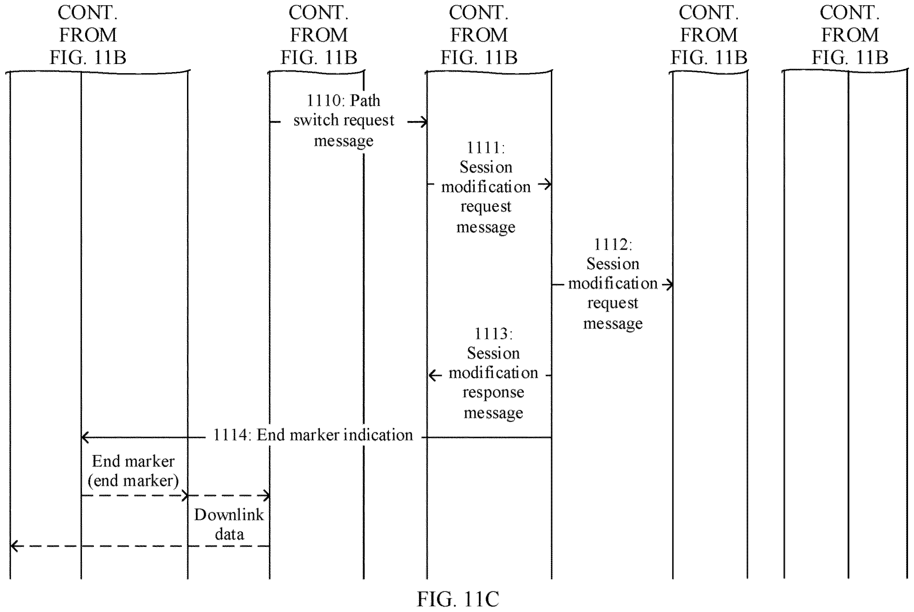

FIG. 11A, FIG. 11B, and FIG. 11C are a schematic flowchart of a switching method according to an embodiment of this application;

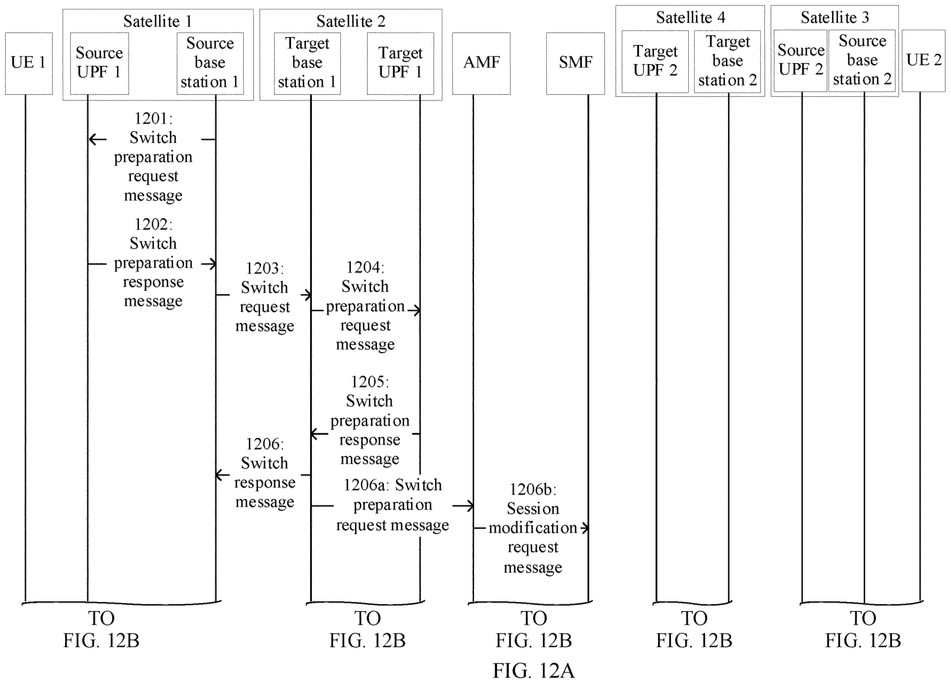

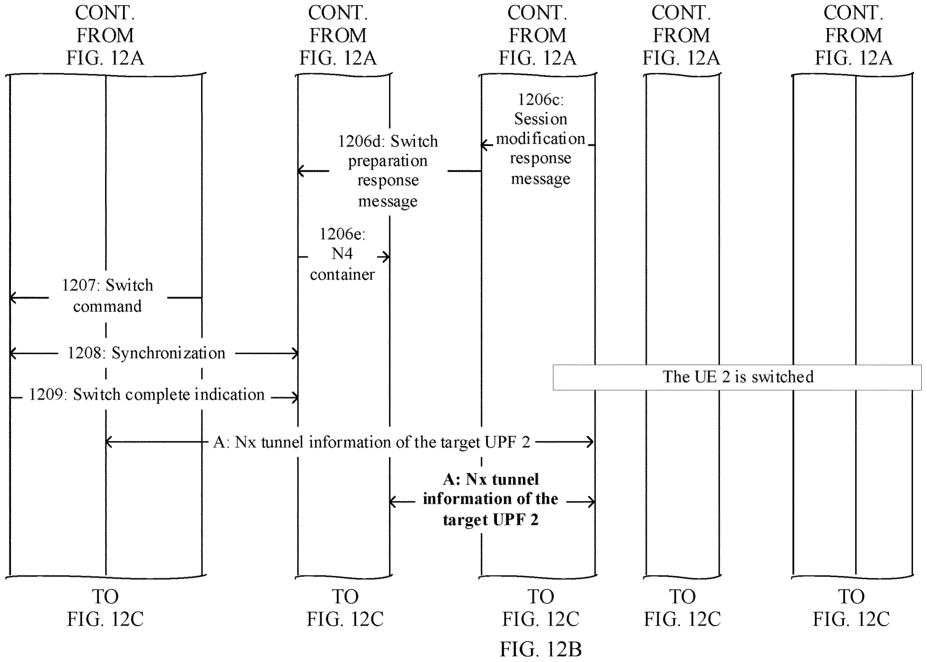

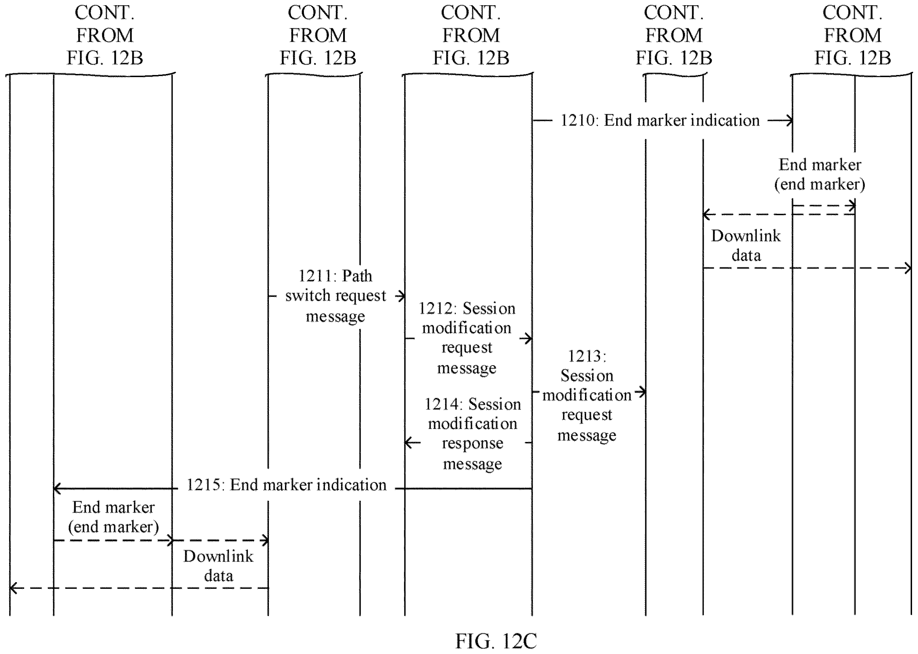

FIG. 12A, FIG. 12B, and FIG. 12C are a schematic flowchart of a switching method according to an embodiment of this application;

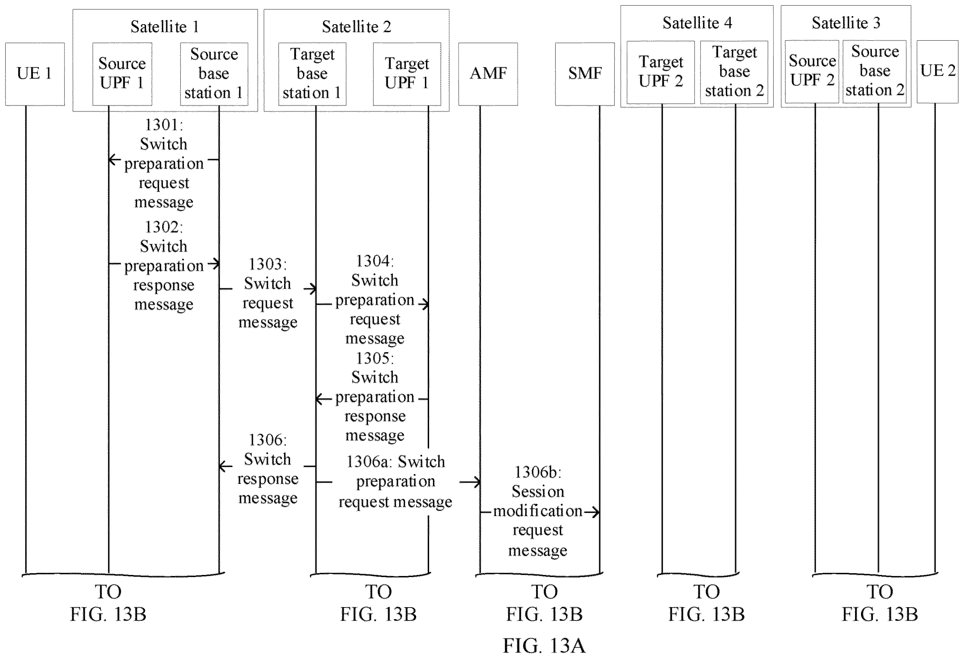

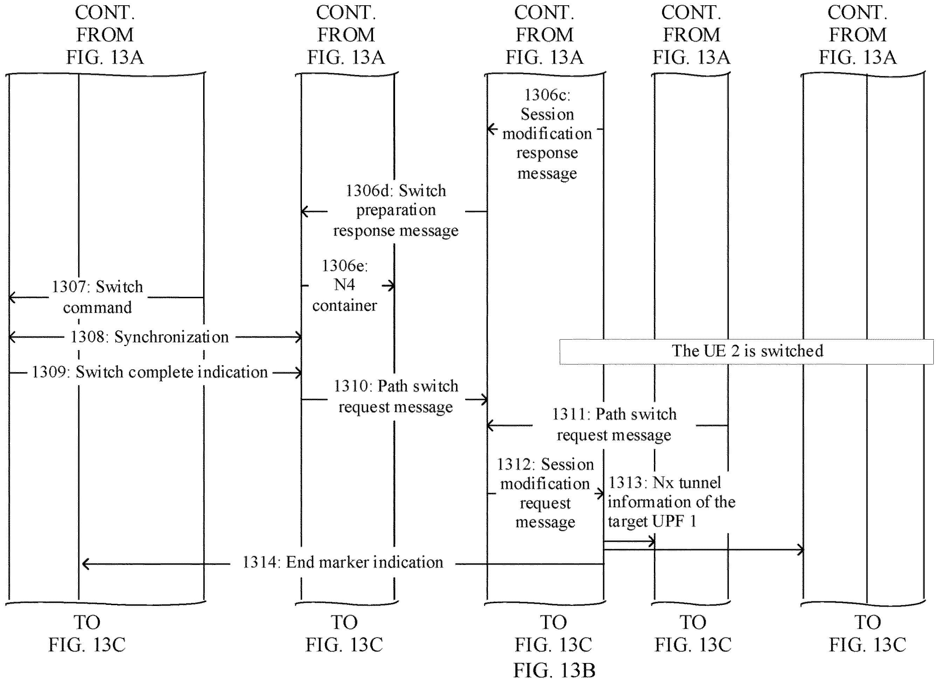

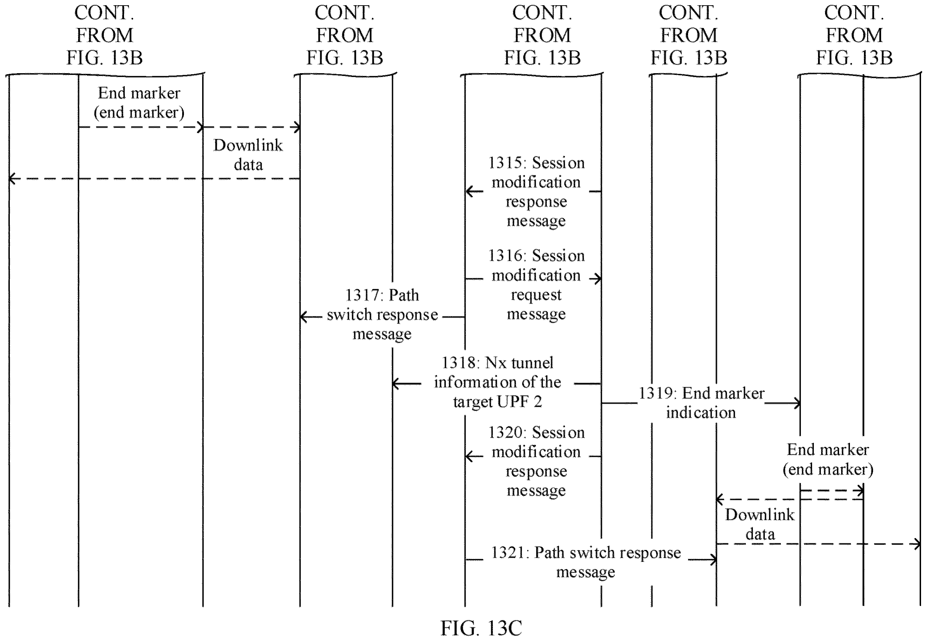

FIG. 13A, FIG. 13B, and FIG. 13C are a schematic flowchart of a switching method according to an embodiment of this application;

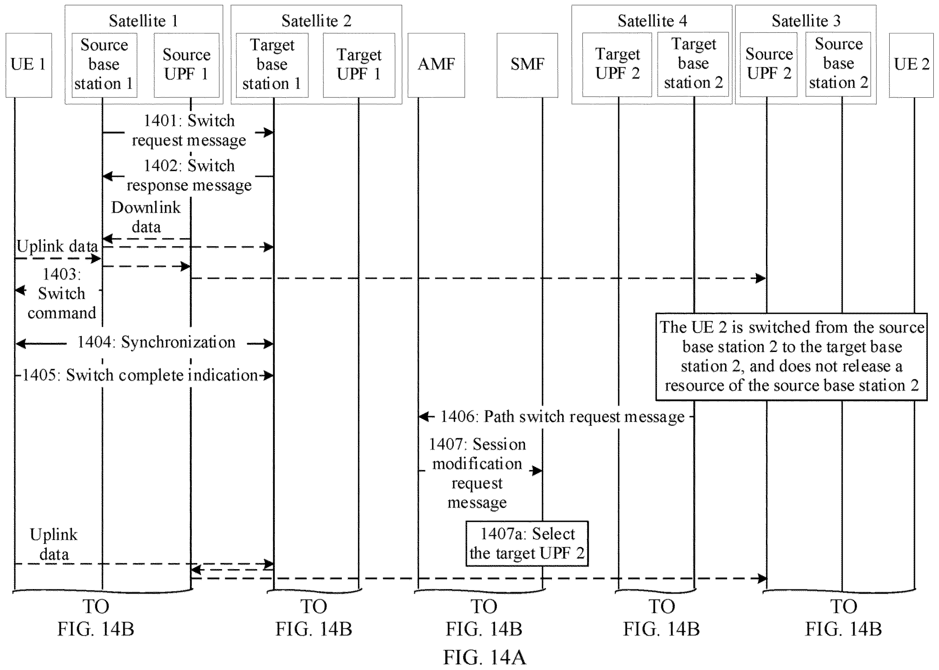

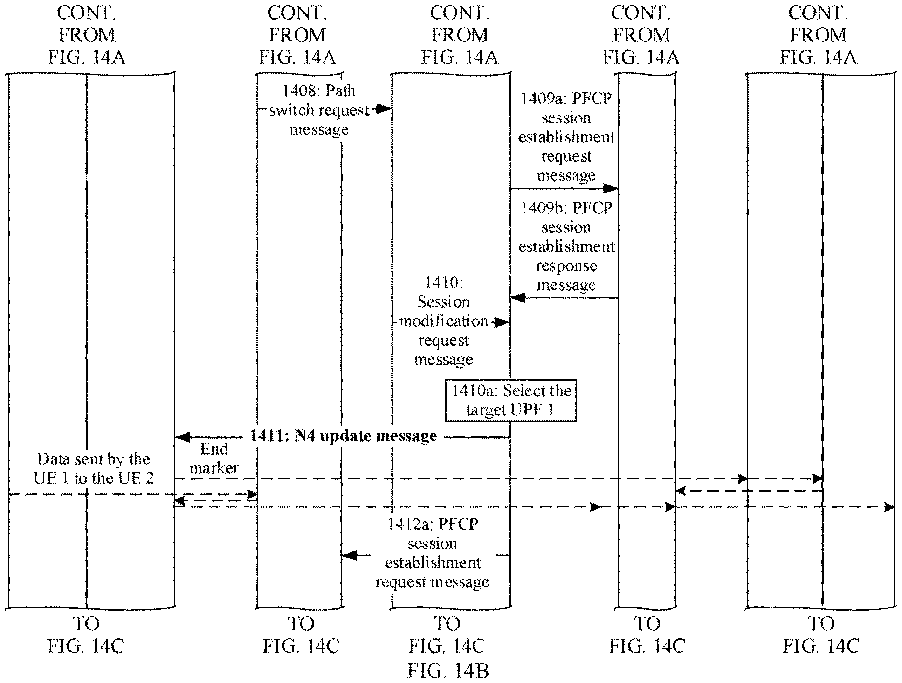

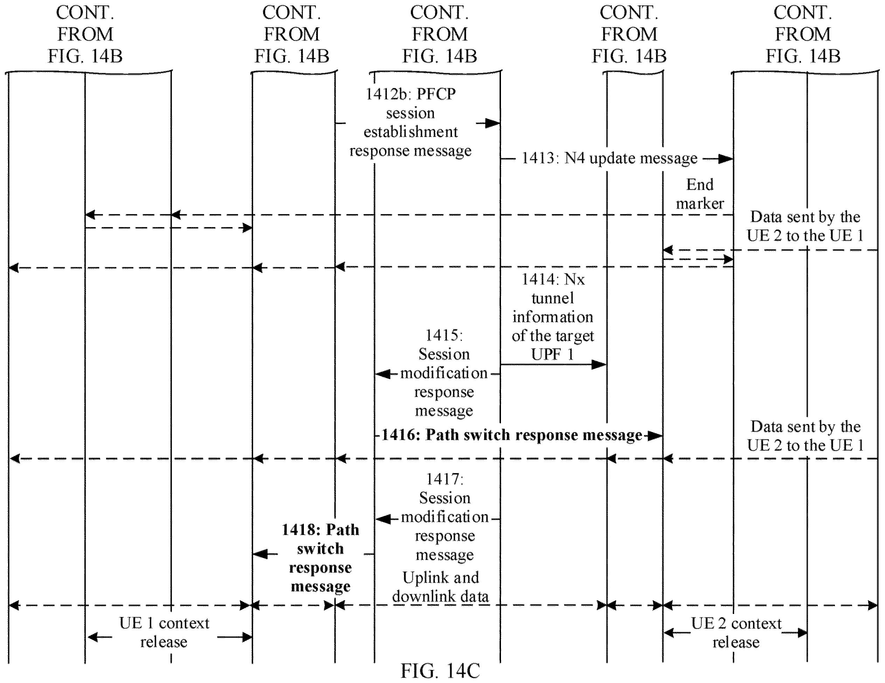

FIG. 14A, FIG. 14B, and FIG. 14C are a schematic flowchart of a switching method according to an embodiment of this application;

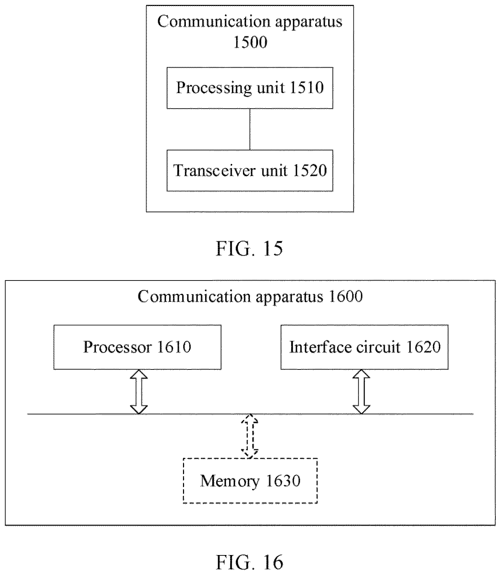

FIG. 15 is a schematic diagram of a communication apparatus according to an embodiment of this application; and
FIG. 16 is a schematic diagram of a communication apparatus according to an embodiment of this application.

### DESCRIPTION OF EMBODIMENTS

To address a challenge of wireless broadband technologies and maintain a leading edge of a 3rd generation partnership project (3rd generation partnership project, 3GPP) network, a 3GPP standard group formulates a next-generation mobile communication network system (Next Generation System) architecture, which is referred to as a 5G network architecture. The architecture not only supports access to a 5G core network (core network, CN) by using a radio access technology (such as a long term evolution (long term evolution, LTE) access technology or a 5G radio access network (radio access network, RAN) access technology) defined by the 3GPP standard group, but also supports access to a core network by using a non-3GPP (non-3GPP) access technology through a non-3GPP conversion function (non-3GPP interworking function, N3IWF) or a next generation access gateway (next generation packet data gateway, ngPDG).

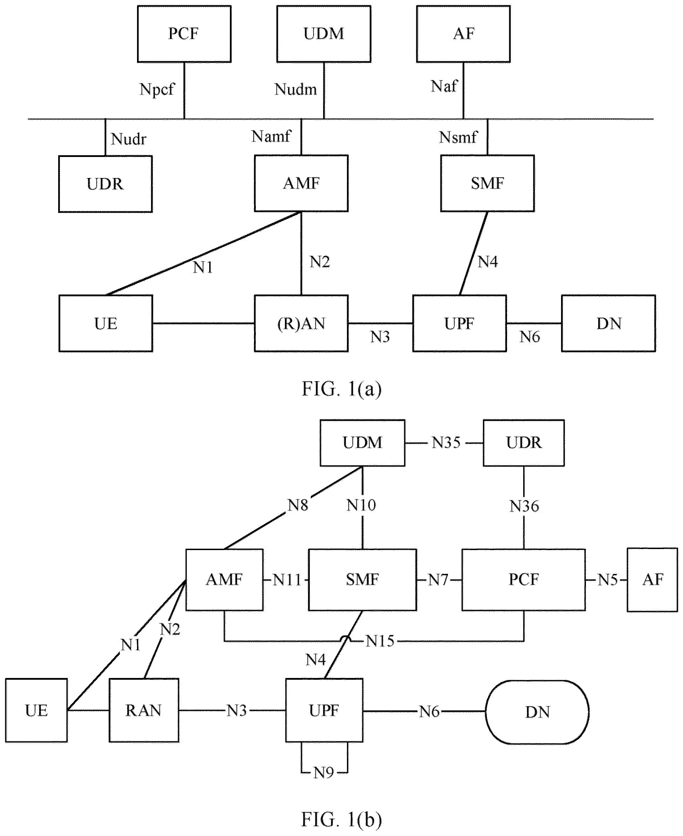

FIG. 1(a) is a schematic diagram of a 5G network architecture based on a service architecture. The 5G network architecture shown in FIG. 1(a) may include an access network device and a core network device. A terminal device accesses a data network (data network, DN) through the access network device and the core network device. The core network device includes but is not limited to some or all of the following network elements: an authentication server function (authentication server function, AUSF) network element (not shown in the figure), a unified data management (unified data management, UDM) network element, a unified data repository (unified data repository, UDR) network element, a network repository function (network repository function, NRF) network element (not shown in the figure), a network exposure function (network exposure function, NEF) network element (not shown in the figure), an application function (application function, AF) network element, a policy control function (policy control function, PCF) network element, an access and mobility management function (access and mobility management function, AMF) network element, a session management function (session management function, SMF) network element, a user plane function (user plane function, UPF) network element, and a binding support function (binding support function, BSF) network element (not shown in the figure).

The terminal device may be a user equipment (user equipment, UE), a mobile station, a mobile terminal device, or the like. The terminal device may be widely applied to various scenarios such as device-to-device (device-to-device, D2D), vehicle-to-everything (vehicle-to-everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, a smart city, and the like. The terminal device may be a mobile phone, a tablet computer, a computer with a wireless transceiver function, a wearable device, a vehicle, an urban air transportation vehicle (such as an uncrewed aerial vehicle or a helicopter), a ship, a robot, a robot arm, a smart home device, or the like.

The access network device may be a radio access network (RAN) device or a wireline access network (wireline access network, FAN) device. The radio access network device includes a 3GPP access network device, an untrusted non-3GPP access network device, and a trusted non-3GPP access network device. The 3GPP access network device includes but is not limited to an evolved NodeB (evolved NodeB, eNodeB) in LTE, a next generation NodeB (next generation NodeB, gNB) in a 5G mobile communication system, a base station in a future mobile communication system, or a module or unit that completes some functions of a base station, such as a central unit (central unit, CU) or a distributed unit (distributed unit, DU). The untrusted non-3GPP access network device includes but is not limited to an untrusted non-3GPP access gateway or an N3IWF device, an untrusted wireless local area network (wireless local area network, WLAN) access point (access point, AP), a switch, and a router. The trusted non-3GPP access network device includes but is not limited to a trusted non-3GPP access gateway, a trusted WLAN AP, a switch, and a router. The wireline access network device includes but is not limited to a wireline access gateway (wireline access gateway), a fixed telephone network device, a switch, and a router.

The access network device and the terminal device may be located at a fixed position, or may be movable. The access network device and the terminal device may be deployed on land, including an indoor or outdoor scenario and a handheld or vehicle-mounted scenario, or may be deployed on water, or may be deployed on an airplane, a balloon, and an artificial satellite in the air. Application scenarios of the access network device and the terminal device are not limited in embodiments of this application.

The AMF network element includes functions such as mobility management and access authentication/authorization. In addition, the AMF network element is further responsible for transferring a user policy between the terminal device and the PCF network element.

The SMF network element includes functions such as session management, execution of a control policy delivered by a PCF, UPF selection, and allocation of an internet protocol (internet protocol, IP) address of the terminal device.

The UPF network element includes functions such as user plane data forwarding, session/flow-level-based charging statistics collection, and bandwidth limitation.

The UDM network element includes functions such as subscription data management and user access authorization.

The UDR network element includes functions such as storage and retrieval of subscription data, policy data, application data, and other types of data.

The NEF network element is configured to support capability and event exposure.

The AF network element transfers a requirement of an application side for a network side, for example, a QoS requirement or a user status event subscription. The AF may be a third-party functional entity, or may be an operator-deployed application service, for example, an IP multimedia subsystem (IP Multimedia Subsystem, IMS) voice call service. The AF network element includes an AF network element (that is, an AF network element of an operator) in a core network and a third-party AF network element (for example, an application server of an enterprise).

The PCF network element includes policy control functions such as session-level or service flow-level charging, QoS bandwidth guarantee, mobility management, and terminal device policy decision-making. The PCF network element includes an access and mobility management policy control function (access and mobility management policy control function, AM PCF) network element and a session management policy control function (session management PCF, SM PCF) network element. The AM PCF network element is configured to formulate an AM policy for the terminal device. The AM PCF network element may also be referred to as a policy control network element (PCF for a UE) that provides services for the terminal device. The SM PCF network element is configured to formulate a session management policy (session management policy, SM policy) for a session. The SM PCF network element may also be referred to as a policy control network element (PCF for a PDU session) that provides services for the session.

The NRF network element may be configured to provide a network element discovery function, and provide, based on a request from another network element, network element information corresponding to a network element type. The NRF further provides network element management services such as registration, update, and deregistration of a network element, and subscription and push of a network element status.

The BSF network element provides functions such as registration, deregistration, and update of a BSF service, NRF connection detection, session binding information creation, UE information obtaining, and session binding information query for duplicate IP addresses.

The AUSF network element is responsible for authenticating a user, to determine whether the user or a device is allowed to access a network.

The DN is a network located outside an operator network. The operator network may access a plurality of DNs. A plurality of services may be deployed in the DN, and the DN may provide services such as a data service and/or a voice service for the terminal device. For example, the DN is a private network of a smart factory, a sensor installed in a workshop of the smart factory may be a terminal device, a control server of the sensor is deployed in the DN, and the control server may provide services for the sensor. The sensor may communicate with the control server, to obtain instructions of the control server, transmit collected sensor data to the control server based on the instructions, and the like. For another example, the DN is an internal office network of a company, a mobile phone or a computer of an employee of the company may be a terminal device, and the mobile phone or the computer of the employee may access information, a data resource, and the like in the internal office network of the company.

Npcf, Nufr, Nudm, Naf, Namf, and Nsmf in FIG. 1(a) are service-oriented interfaces provided by the PCF, the UDR, the UDM, the AF, the AMF, and the SMF, respectively, and are used to invoke corresponding service operations. An N1, an N2, an N3, an N4, and an N6 are interface sequence numbers. The meanings of these interface sequence numbers are as follows.
(1) N1: represents an interface between the AMF and the terminal device, and may be configured to transfer non-access stratum (non-access stratum, NAS) signaling (for example, including a QoS rule from the AMF) to the terminal device, and the like.
(2) N2: represents an interface between the AMF and the access network device, and may be configured to transfer radio bearer control information from a core network side to the access network device, and the like.
(3) N3: represents an interface between the access network device and the UPF, and may mainly be configured to transfer uplink and downlink user plane data between the access network device and the UPF.
(4) N4: represents an interface between the SMF and the UPF, and may be configured to transfer information between a control plane and a user plane, including delivery of a forwarding rule, a QoS rule, a traffic statistics rule, and the like from the control plane to the user plane, and reporting of user plane information.
(5) N6: represents an interface between the UPF and the DN, and is configured to transfer uplink and downlink user data flows between the UPF and the DN.

FIG. 1(b) is a schematic diagram of a 5G network architecture based on a point-to-point interface. For descriptions of functions of network elements thereof, refer to the descriptions of functions of corresponding network elements in FIG. 1(b). Details are not described again. A main difference between FIG. 1(b) and FIG. 1(a) lies in that interfaces between control plane network elements in FIG. 1(a) are service interfaces, and interfaces between control plane network elements in FIG. 1(b) are point-to-point interfaces.

In the architecture shown in FIG. 1(b), names and functions of the interfaces between the network elements are as follows.
(1) For meanings of the N1, N2, N3, N4, and N6 interfaces, refer to the foregoing descriptions.
(2) N5: represents an interface between an AF network element and a PCF network element, and may be configured to deliver an application service request and report a network event.
(3) N7: represents an interface between the PCF network element and an SMF network element, and may be configured to deliver a protocol data unit (protocol data unit, PDU) session granularity control policy and a service data flow granularity control policy.
(4) N8: represents an interface between an AMF network element and a UDM network element, and is used by the AMF network element to obtain subscription data and authentication data related to access and mobility management from the UDM network element, used by the AMF network element to register information related to terminal device mobility management with the UDM network element, and the like.
(5) N9: represents a user plane interface between a UPF network element and a UPF network element, and is configured to transfer uplink and downlink user data flows between the UPF network elements.
(6) N10: represents an interface between the SMF network element and the UDM network element, and may be used by the SMF network element to obtain subscription data related to session management from the UDM network element, used by the SMF network element to register information related to a terminal device session with the UDM network element, and the like.
(7) N11: represents an interface between the SMF network element and the AMF network element, and may be configured to transfer PDU session tunnel information between an access network device and the UPF, transfer a control message sent to the terminal device, transfer radio resource control information sent to the access network device, and the like.
(8) N15: represents an interface between the PCF network element and the AMF network element, and may be configured to deliver a terminal device policy and an access control related policy.
(9) N35: represents an interface between the UDM network element and a UDR network element, and is used by the UDM network element to obtain user subscription data information from the UDR network element.
(10) N36: represents an interface between the PCF network element and the UDR network element, and is used by the PCF network element to obtain policy-related subscription data and application data-related information from the UDR network element.

It may be understood that the foregoing network elements or functions may be network components in a hardware device, software functions running on dedicated hardware, or virtualized functions instantiated on a platform (for example, a cloud platform). Optionally, the foregoing network elements or the functions may be implemented by one device, may be implemented by a plurality of devices, or may be one functional module in one device. This is not specifically limited in embodiments of this application.

The user plane network element, the mobility management network element, and the session management network element in this application may be respectively a UPF network element, an AMF network element, and an SMF network element in a 5G system, or may be network elements that have functions of the UPF network element, the AMF network element, and the SMF network element in a future communication network such as a 6G network. This is not limited in this application. In embodiments of this application, an example in which the UPF network element, the AMF network element, and the SMF network element are respectively a user plane network element, a mobility management network element, and a session management network element is used for description. In addition, the UPF network element, the AMF network element, and the SMF network element are respectively a UPF, an AMF, and an SMF for short.

For ease of description, in embodiments of this application, a base station (for example, a 4G eNB, a 5G gNB, or a base station in future communication) is used as an example of an access network device for description, and a "base station" that appears subsequently may be replaced with an "access network device". In embodiment of this application, an example in which a UE is a terminal device is used for description, and a "UE" that appears subsequently may be replaced with a "terminal device".

In embodiments of this application, Nx tunnel information of the UPF or first tunnel information of the UPF is tunnel information used by another UPF to send data to the UPF. For example, a UPF 2 may send data to a UPF 1 based on Nx tunnel information of the UPF 1. In embodiments of this application, the Nx tunnel information of the UPF may also be referred to as tunnel information of the UPF, or may have another name, for example, may be referred to as N19 tunnel information of the UPF in a 5G local area network (local area network, LAN). This is not limited herein.

In embodiments of this application, N3 tunnel information of the UPF or second tunnel information of the UPF is tunnel information used by a base station to send data to the UPF. For example, the base station may send data to a UPF 1 based on N3 tunnel information of the UPF 1. In embodiments of this application, the N3 tunnel information of the UPF may also be referred to as tunnel information of the UPF, or may have another name. This is not limited herein.

In embodiments of this application, N3 tunnel information of the base station or tunnel information of the base station is tunnel information used by a UPF to send data to the base station. For example, the UPF may send data to a base station 1 based on N3 tunnel information of the base station 1. In embodiments of this application, the N3 tunnel information of the base station may also be referred to as tunnel information of the base station, or may have another name. This is not limited herein.

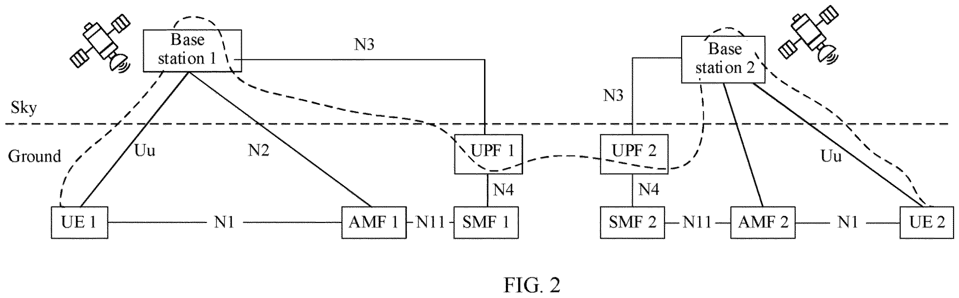

3GPP R17 proposes that a base station is deployed on a satellite. According to an existing architecture, only the base station is deployed on the satellite, and an anchor UPF of a session is still deployed on ground. FIG. 2 is a schematic diagram of a communication path between UEs. A communication path between a UE 1 and a UE 2 is as follows: UE 1 -> satellite base station 1 of the UE 1 -> ground UPF 1 of the UE 1 -> ground UPF 2 of the UE 2 -> satellite base station 2 of the UE 2 -> UE 2. The path includes four segments of sky-ground communication (also referred to as satellite-ground communication), and is specifically as follows: (1) UE 1 -> satellite base station 1 of the UE 1; (2) satellite base station 1 of the UE 1 -> ground UPF 1 of the UE 1; (3) ground UPF 2 of the UE 2 -> satellite base station 2 of the UE 2; (4) satellite base station 2 of the UE 2 -> UE 2. The path between a satellite base station and a ground UPF includes a feeding circuit between a satellite and a ground station, and a ground link between a ground station and a UPF. A 4G air interface, a 5G air interface, or an air interface in future communication is between a UE and a satellite base station.

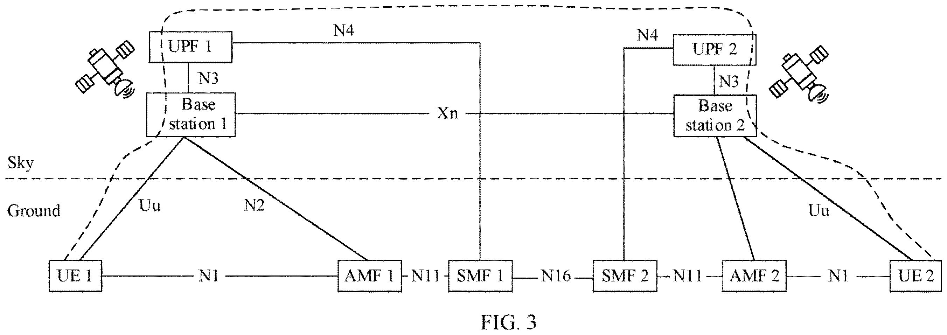

Because a satellite is deployed far away from the ground, a communication delay between UEs is large if four segments of a satellite-ground link are passed through. To reduce the communication delay, a UPF may be deployed on the satellite, so that communication between the UEs may be directly forwarded by using a link between satellites without passing through a ground UPF, thereby reducing a delay of two feeding circuits. FIG. 3 is a schematic diagram of a communication path between UEs. A communication path between a UE 1 and a UE 2 is as follows: UE 1 -> satellite base station 1 of the UE 1 -> satellite UPF 1 of the UE 1 -> satellite UPF 2 of the UE 2 -> satellite base station 2 of the UE 2 -> UE 2. The path includes two segments of satellite-ground communication, and is specifically as follows: (1) UE 1 -> satellite base station 1 of the UE 1; (2) satellite base station 2 of the UE 2 -> UE 2.

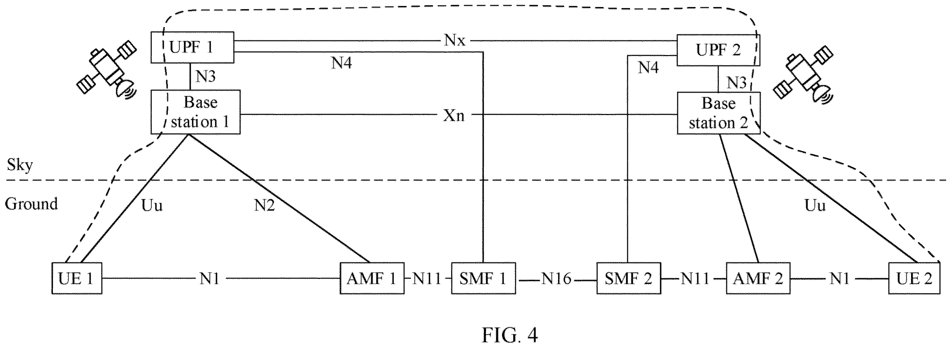

After the UPF is deployed on the satellite, to reduce complexity of inter-satellite routing, when direct communication is performed between the UE 1 and the UE 2, an Nx tunnel may be established between a satellite UPF of the UE 1 and a satellite UPF of the UE 2, to forward data between satellites of the UE 1 and the UE 2. Therefore, an IP address of a UE may not be exposed on an inter-satellite link interface, and a bottom-layer routing module of the inter-satellite link can see only an IP address of a satellite UPF, but cannot see the IP address of the UE. FIG. 4 is a schematic diagram of a communication path between UEs. It can be learned that an Nx interface is added between a satellite UPF 1 and a satellite UPF 2. That is, an Nx tunnel is established between the satellite UPF 1 and the satellite UPF 2. For example, the Nx tunnel may be an N19 tunnel, and the Nx tunnel may alternatively be a GPRS tunnelling protocol user plane (GRPS Tunnelling Protocol User Plane, GTP-U) tunnel. GPRS is a general packet radio service (general packet radio service).

In FIG. 4, to reduce a delay, a satellite UPF and a satellite base station that serve a UE may be located on a same satellite. The UPF 1 and a base station 1 are located on a same satellite, the UPF 2 and a base station 2 are located on a same satellite, and the Nx tunnel is established between the UPF 1 and the UPF 2. Therefore, when forwarding a data packet for communication between a UE 1 and a UE 2, the UPF 1 and the UPF 2 do not need to process UE IP address-based routing, thereby reducing complexity of inter-satellite routing. The UPF 1 of the UE 1 and the UPF 2 of the UE 2 may be controlled by different SMFs, or may be controlled by a same SMF. FIG. 4 shows a case in which the UPF 1 and the UPF 2 are separately controlled by different SMFs.

When a base station and a UPF are deployed on a satellite, because the satellite moves around the earth at a fixed frequency, and a low-orbit satellite moves at a high speed, satellite switching occurs even if a UE does not move on ground. In the foregoing architecture, the satellite switching means that both the satellite UPF and the satellite base station that serve the UE change.

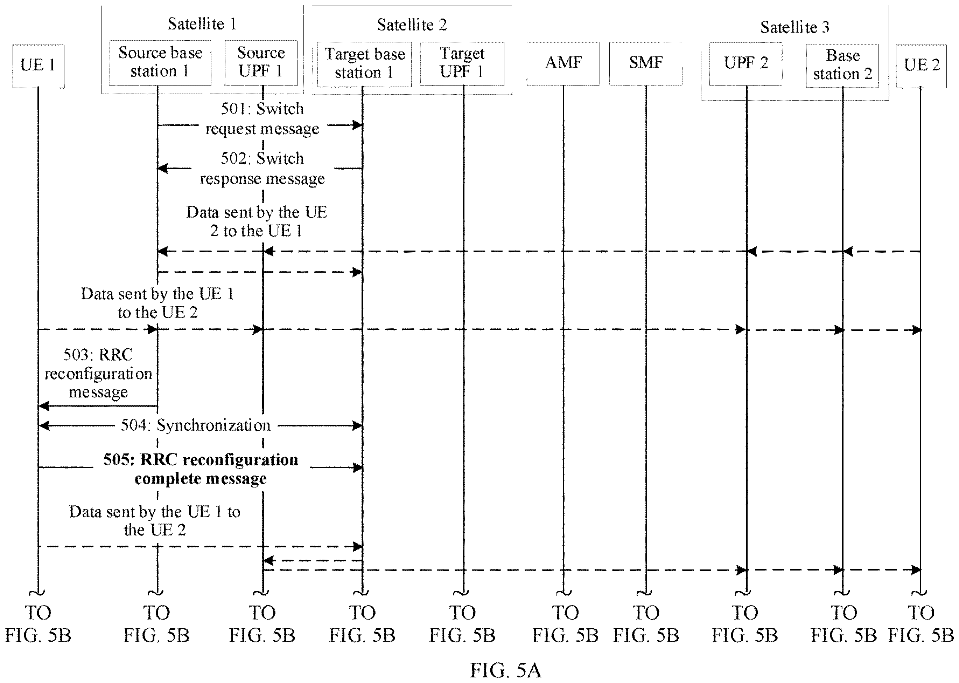

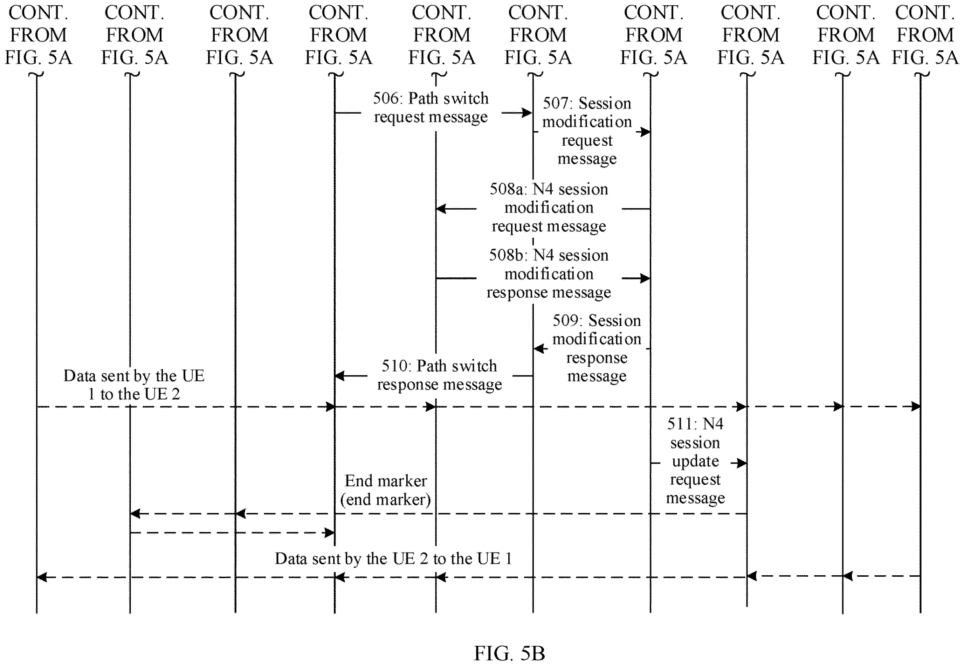

FIG. 5A and FIG. 5B are a schematic flowchart of a switching method according to an embodiment of this application. In this procedure, a satellite serving a UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving a UE 2 is not switched, and a base station 2 and a UPF 2 on a satellite 3 provide services for the UE 2. The procedure includes the following steps.

Step 501: The source base station 1 sends a switch request message to the target base station 1. Correspondingly, the target base station 1 receives the switch request message.

The switch request message includes N3 tunnel information of the source UPF 1, to establish an uplink tunnel from the target base station 1 to the source UPF 1. In other words, the target base station 1 may send, to the source UPF 1, uplink data received from the UE 1.

Step 502: The target base station 1 sends a switch response message to the source base station 1. Correspondingly, the source base station 1 receives the switch response message.

The switch response message includes radio resource information allocated by the target base station 1 to the UE 1.

A forwarding tunnel between the source base station 1 and the target base station 1 is further established by performing steps 501 and 502.

Step 503: The source base station 1 sends an RRC reconfiguration message to the UE 1. Correspondingly, the UE 1 receives the RRC reconfiguration message.

The RRC reconfiguration message includes the radio resource information allocated by the target base station 1 to the UE 1.

The source base station 1 may stop sending downlink data to the UE 1, and start to send, to the target base station 1 through the forwarding tunnel between the source base station 1 and the target base station 1, received downlink data that needs to be sent to the UE 1.

Step 504: The UE 1 performs synchronization with the target base station 1.

Based on the radio resource information allocated to the UE 1, the UE 1 performs wireless synchronization with the target base station 1.

Step 505: The UE 1 sends an RRC reconfiguration complete message to the target base station 1. Correspondingly, the target base station 1 receives the RRC reconfiguration complete message.

After step 505, in an uplink direction, the UE 1 may send uplink data to the target base station 1, the target base station 1 sends, to the source UPF 1, the uplink data received from the UE 1, and then the source UPF 1 sends the uplink data of the UE 1 to the UPF 2 based on Nx tunnel information of the UPF 2. In a downlink direction, the UPF 2 sends downlink data of the UE 1 to the source UPF 1, the source UPF 1 sends the downlink data of the UE 1 to the source base station 1, the source base station 1 sends the downlink data of the UE 1 to the target base station 1 through the forwarding tunnel between the source base station 1 and the target base station 1, and the target base station 1 sends the downlink data of the UE 1 to the UE 1.

Step 506: The target base station 1 sends a path switch request message (PATH SWITCH REQUEST) to an AMF. Correspondingly, the AMF receives the path switch request message.

The path switch request message includes N3 tunnel information of the target base station 1.

Step 507: The AMF sends a session modification request message to an SMF. Correspondingly, the SMF receives the session modification request message.

The session modification request message includes the N3 tunnel information of the target base station 1, and the session modification request message is used to notify the SMF that the UE 1 is switched.

Optionally, the session modification request message may be an Nsmf_PDUSession_SMContextUpdate Request message.

Step 508a: The SMF selects the target UPF 1 deployed on a same satellite with the target base station 1 as a new UPF of the UE 1, and sends an N4 session modification request message to the target UPF 1. Correspondingly, the target UPF 1 receives the N4 session modification request message.

The N4 session modification message includes the N3 tunnel information of the target base station 1 and the Nx tunnel information of the UPF 2.

Step 508b: The target UPF 1 sends an N4 session modification response message to the SMF. Correspondingly, the SMF receives the N4 session modification response message.

The N4 session modification response message includes N3 tunnel information of the target UPF 1 and Nx tunnel information of the target UPF 1.

Step 509: The SMF sends a session modification response message to the AMF. Correspondingly, the AMF receives the session modification response message.

The session modification response message includes the N3 tunnel information of the target UPF 1.

Optionally, the session modification response message may be an Nsmf_PDUSession_SMContextUpdate Response message.

Step 510: The AMF sends a path switch response message to the target base station 1. Correspondingly, the target base station 1 receives the path switch response message.

The path switch response message includes the N3 tunnel information of the target UPF 1.

In this case, in the uplink direction, the target base station 1 directly sends uplink data of the UE 1 to the target UPF 1, and the target UPF 1 sends the uplink data to the UPF 2.

Optionally, the path switch response message may be a PATH SWITCH REQUEST ACK message.

Step 511: The SMF sends an N4 session update request message to the UPF 2. Correspondingly, the UPF 2 receives the N4 session update request message.

The N4 session update request message includes an end marker (End Marker) indication and the Nx tunnel information of the target UPF 1.

The end marker indication indicates the UPF 2 to send an end marker through a source path (that is, to the source UPF 1). The UPF 2 sends the end marker to the source UPF 1 according to the end marker indication. The source UPF 1 sends the end marker to the source base station 1, and the source base station 1 forwards the end marker to the target base station 1. The end marker is a last downlink data packet of the UE 1 received by the target base station 1 on the forwarding tunnel between the target base station 1 and the source base station 1. Before receiving the end marker, the target base station 1 temporarily buffers downlink data of the UE 1 received from the target UPF 1. After receiving the end marker, the target base station 1 may send, to the UE 1, the data received from the target UPF 1.

After step 511, the UPF 2 starts to send, to the target UPF 1, a downlink data packet sent to the UE 1, and the target UPF 1 directly sends the downlink data packet to the target base station 1.

According to the foregoing solution, an out-of-order problem caused because data received by the UE through the source path (the source UPF 1) is later than data received through a target path (the target UPF 1) in a switching procedure can be avoided.

In the switching procedure shown in FIG. 5A and FIG. 5B, because the AMF and the SMF are located on the ground, steps 506, 508a, 508b, 510, and 511 all belong to satellite-ground communication. This increases satellite-ground communication signaling, prolongs a delay of the procedure, and needs to rely on inter-satellite forwarding to avoid a packet loss. In addition, inter-satellite detour exists. This not only increases a delay, but also increases load of an inter-satellite link.

Refer to FIG. 5A and FIG. 5B. For the UE 1, in the downlink direction, before step 503, the UPF 2 of the satellite 3 sends the downlink data of the UE 1 to the source UPF 1 of the satellite 1, the source UPF 1 sends the downlink data of the UE 1 to the source base station 1 of the satellite 1, and then the source base station 1 sends the downlink data of the UE 1 to the target base station 1 of the satellite 2. In other words, the UPF 2 forwards the downlink data of the UE 1 to the target base station 1 through the source UPF 1 and the source base station 1. Because the target base station 1, the source UPF 1, and the source base station 1 are not on a same satellite, inter-satellite detour exists for the downlink data. In other words, data sent by the satellite 3 to the satellite 2 needs to be forwarded to the satellite 2 through the satellite 1. In the uplink direction, after step 505 and before step 506, the UE 1 sends the uplink data of the UE 1 to the target base station 1 of the satellite 2, the target base station 1 sends the uplink data of the UE 1 to the source UPF 1 of the satellite 1, and then the source UPF 1 sends the uplink data to the UPF 2 of the satellite 3. Because the source UPF 1 and the target base station 1 are not on a same satellite, inter-satellite detour also exists for the uplink data. In other words, data sent by the satellite 2 to the satellite 3 needs to be forwarded to the satellite 3 through the satellite 1.

Therefore, in this embodiment of this application, the switching procedure shown in FIG. 5A and FIG. 5B is subsequently optimized, to decrease satellite-ground signaling that is generated in the switching procedure and reduce inter-satellite detour for data.

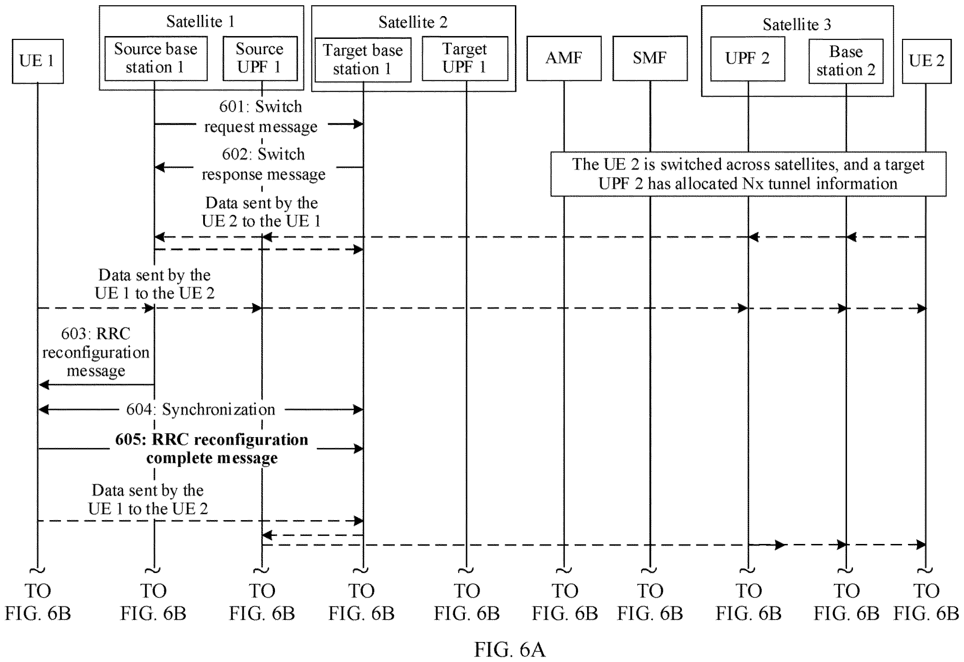

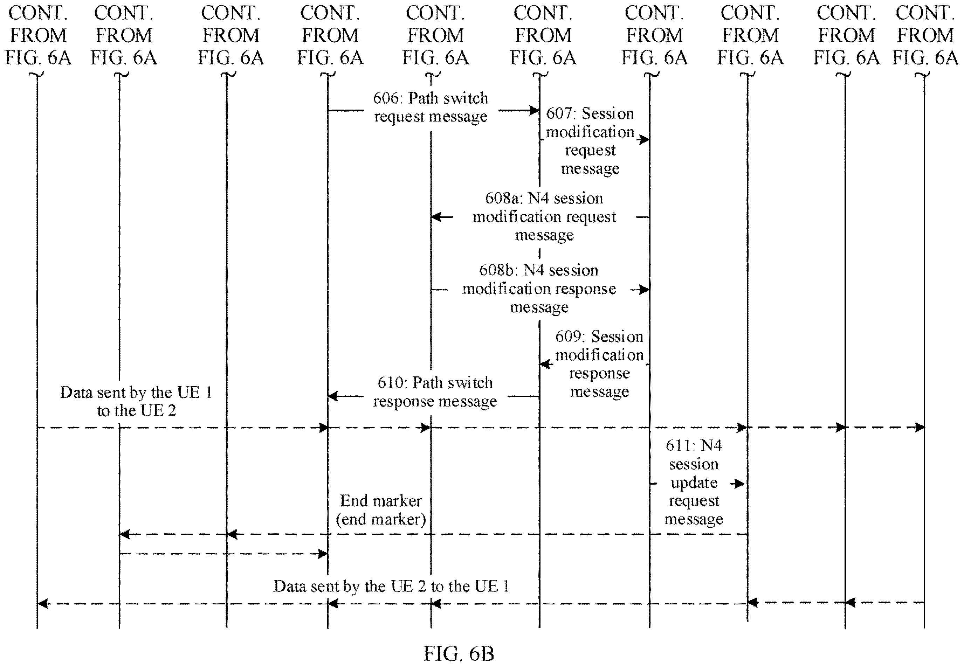

In a satellite scenario, there is also a high probability that UEs at both communication ends are switched across satellites at the same time. FIG. 6A and FIG. 6B are a schematic flowchart of a switching method according to an embodiment of this application. In this procedure, a satellite serving a UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving a UE 2 is also switched. Before switching, a source base station 2 and a source UPF 2 on a satellite 3 provide services for the UE 2. After the switching, a target base station 2 and a target UPF 2 on a satellite 4 provide services for the UE 2. In this procedure, for descriptions of steps of a switching procedure of the UE 1, refer to FIG. 5A and FIG. 5B. A difference between the switching procedure in FIG. 6A and FIG. 6B and the switching procedure in FIG. 5A and FIG. 5B lies in that the UE 2 is also switched in a process in which the UE 1 is switched, where a switching procedure of the UE 2 is similar to the switching procedure of the UE 1. Therefore, at any moment in the switching procedure of the UE 1, an SMF may receive Nx tunnel information of the target UPF 2 of the UE 2. Similarly, at any moment in the switching procedure of the UE 2, the SMF may also receive Nx tunnel information of the target UPF 1 of the UE 1.

Refer to FIG. 6A and FIG. 6B. When both the UE 1 and the UE 2 are switched across satellites at the same time, because UPFs separately corresponding to the UE 1 and the UE 2 change, a packet loss or data packet out-of-order problem may occur. For example, in step 608a, the SMF sends Nx tunnel information of the source UPF 2 of the UE 2 to the target UPF 1 of the UE 1. If the SMF receives Nx tunnel information of the target UPF 2 of the UE 2 after step 608a, the target UPF 1 of the UE 1 cannot obtain the Nx tunnel information of the target UPF 2 of the UE 2, and data of the target UPF 1 is still sent to the source UPF 2 of the UE 2. In this case, if an order of sending an end marker (End Marker) is inappropriate, after receiving the end marker, the source UPF 2 of the UE 2 still receives a data packet sent by the source UPF 1 or the target UPF 1. As a result, data packets that arrive at the source UPF 2 after the end marker are discarded. The end marker may be understood as a last data packet sent to the source UPF 2.

Therefore, in this embodiment of this application, the switching procedure shown in FIG. 6A and FIG. 6B is subsequently optimized, to avoid a packet loss or data packet out-of-order problem that occurs when UEs at two communication ends are switched across satellites at the same time.

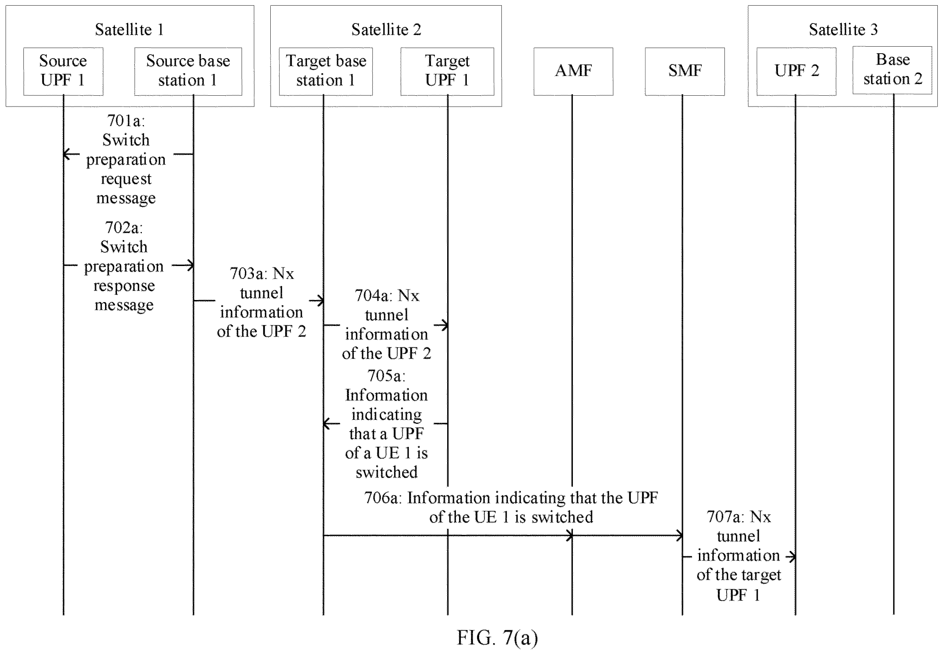

FIG. 7(a) is a schematic flowchart of a switching method according to an embodiment of this application. In this procedure, a satellite serving a UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving a UE 2 is not switched, and a base station 2 and a UPF 2 on a satellite 3 provide services for the UE 2.

The method includes the following steps.

Step 701a: The source base station 1 sends a switch preparation request message to the source UPF 1. The switch preparation request message includes an identifier of a session of the UE 1.

The switch preparation request message indicates the source UPF 1 to prepare for cross-satellite switching of the UE 1. A name of the switch preparation request message is not limited in this embodiment of this application, and the message may also have another name.

Step 702a: The source UPF 1 sends a switch preparation response message to the source base station 1. The switch preparation response message includes Nx tunnel information of the UPF 2 corresponding to the session.

The switch preparation response message is a response to the switch preparation request message.

Optionally, the Nx tunnel information of the UPF 2 is included in a context of the session of the UE 1. The context of the session further includes at least one of a session endpoint identifier of an SMF, a packet detection rule corresponding to the session, and identification information of the SMF. The session endpoint identifier of the SMF identifies the session in the SMF. The packet detection rule corresponding to the session is used by the target UPF 1 to process an uplink data packet and/or a downlink data packet of the UE 1.

Optionally, when the session of the UE 1 corresponds to a LAN group, the switch preparation response message further includes a packet detection rule corresponding to the LAN group. The packet detection rule corresponding to the LAN group is used by the target UPF 1 to process a data packet sent to another UE other than the UE 1 in the LAN group.

Step 703a: The source base station 1 sends the Nx tunnel information of the UPF 2 to the target base station 1.

Optionally, if the Nx tunnel information of the UPF 2 is included in the context of the session of the UE 1, step 703a is specifically as follows: The source base station 1 sends the context of the session of the UE 1 to the target base station 1.

Optionally, after step 703a, the target base station 1 further sends, to the source base station 1, radio resource information allocated by the target base station 1 to the session of the UE 1 so that the source base station 1 sends the radio resource information to the UE 1, and the UE 1 establishes an air interface connection with the target base station 1 based on the radio resource information. In this way, the UE 1 is switched from the source base station 1 to the target base station 1.

Optionally, after step 703a, the target base station 1 further sends, to the source base station 1, forwarding tunnel information of the target base station 1 corresponding to the session of the UE 1, so that the source base station 1 may send downlink data of the UE 1 to the target base station 1 based on the forwarding tunnel information.

Step 704a: The target base station 1 sends the Nx tunnel information of the UPF 2 to the target UPF 1.

The UPF 2 is a UPF corresponding to a session of the UE 2 that communicates with the UE 1. The Nx tunnel information of the UPF 2 is used by the target UPF 1 to send downlink data of the UE 2 to the UPF 2. The downlink data of the UE 2 is data sent to the UE 2.

Optionally, if the Nx tunnel information of the UPF 2 is included in the context of the session of the UE 1, step 704a is specifically as follows: The target base station 1 sends the context of the session of the UE 1 to the target UPF 1.

Optionally, in step 704a, the target base station 1 further sends N3 tunnel information of the target base station 1 to the target UPF 1. The N3 tunnel information of the target base station 1 is used by the target UPF 1 to send downlink data of the UE 1 to the target base station 1. The downlink data of the UE 1 is data sent to the UE 1.

Step 705a: The target UPF 1 sends, to the target base station 1, information indicating that a UPF of the UE 1 is switched. The information includes Nx tunnel information of the target UPF 1.

The Nx tunnel information of the target UPF 1 is allocated by the target UPF 1. The Nx tunnel information of the target UPF 1 is used by the UPF 2 to send downlink data of the UE 1 to the target UPF 1.

Optionally, the information indicating that a UPF of the UE 1 is switched further includes a session endpoint identifier of the target UPF 1. The session endpoint identifier of the target UPF 1 identifies a session in the target UPF 1. The session endpoint identifier of the target UPF 1 is allocated by the target UPF 1 to the session.

Optionally, the information indicating that a UPF of the UE 1 is switched is included in an N4 container and sent to the target base station 1, and the target base station 1 does not perceive content of the N4 container.

Optionally, in step 705a, the target UPF 1 further sends N3 tunnel information of the target UPF 1 to the target base station 1. The N3 tunnel information of the target UPF 1 is used by the target base station 1 to send uplink data of the UE 1 to the target UPF 1. The uplink data of the UE 1 is data sent by the UE 1.

Step 706a: The target base station 1 sends, to the SMF, the information indicating that a UPF of the UE 1 is switched.

In an implementation, the target base station 1 sends, to the SMF or to the SMF through an AMF, a message indicating that the UE 1 is being switched. The message includes the information indicating that a UPF of the UE 1 is switched.

When the information indicating that a UPF of the UE 1 is switched is carried in the N4 container and sent to the SMF, the SMF may perceive content in the N4 container.

Step 707a: The SMF sends the Nx tunnel information of the target UPF 1 to the UPF 2, to update UPF information of the UE 1 in the UPF 2.

If the UPF 2 does not store Nx tunnel information of the UPF of the UE 1, "update the UPF information of the UE 1 in the UPF 2" herein means that the UPF 2 stores the Nx tunnel information of the UPF of the UE 1. If the UPF 2 has stored the Nx tunnel information of the UPF of the UE 1, "update the UPF information of the UE 1 in the UPF 2" herein means that the Nx tunnel information of the UPF of the UE 2 currently stored in the UPF 2 is replaced with the re-received Nx tunnel information of the target UPF 1.

The Nx tunnel information of the target UPF 1 is used by the UPF 2 to send downlink data of the UE 1 to the target UPF 1. The downlink data of the UE 1 is data sent to the UE 1.

Optionally, if an SMF of the UE 1 is different from an SMF of the UE 2, the SMF of the UE 1 sends the Nx tunnel information of the target UPF 1 to the UPF 2 through the SMF of the UE 2.

Optionally, after step 707a, the SMF further sends an end marker indication to the UPF 2. The end marker indication indicates the UPF 2 to send an end marker to the source UPF 1. If the SMF of the UE 1 is different from the SMF of the UE 2, the SMF of the UE 1 sends an end marker indication to the SMF of the UE 2, and then the SMF of the UE 2 sends the end marker indication to the UPF 2.

According to the foregoing solution, when the UE 1 is switched, the source UPF sends session context information (including the Nx tunnel information of the UPF of the UE 2) of the source UPF to the target UPF in a preparation phase before the switching, to avoid that the SMF sends the Nx tunnel information of the UPF of the UE 2 to the target UPF. This can reduce a satellite-ground interaction between the SMF and the target UPF, and therefore reduce a data transmission delay and a switching delay.

FIG. 7(b)-1 and FIG. 7(b)-2 are a schematic flowchart of a switching method according to an embodiment of this application. This embodiment may be applied to a scenario in which a UE 1 and a UE 2 are switched across satellites at the same time (for example, the scenario occurs due to satellite movement). In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2.

The method includes the following steps.

Step 701b: The source base station 1 sends a switch preparation request message to the source UPF 1. The switch preparation request message includes an identifier of a session of the UE 1.

Step 702b: The source UPF 1 sends a switch preparation response message to the source base station 1. The switch preparation response message includes Nx tunnel information of the source UPF 2 corresponding to the session.

Optionally, the Nx tunnel information of the source UPF 2 is included in a context of the session of the UE 1. The context of the session further includes at least one of a session endpoint identifier of an SMF, a packet detection rule corresponding to the session, and identification information of the SMF. The session endpoint identifier of the SMF identifies the session in the SMF. The packet detection rule corresponding to the session is used by the target UPF 1 to process an uplink data packet and/or a downlink data packet of the UE 1.

Optionally, when the session of the UE 1 corresponds to a LAN group, the switch preparation response message further includes a packet detection rule corresponding to the LAN group. The packet detection rule corresponding to the LAN group is used by the target UPF 1 to process a data packet sent to another UE other than the UE 1 in the LAN group.

Step 703b: The source base station 1 sends the Nx tunnel information of the source UPF 2 to the target base station 1.

Optionally, if the Nx tunnel information of the source UPF 2 is included in the context of the session of the UE 1, step 703b is specifically as follows: The source base station 1 sends the context of the session of the UE 1 to the target base station 1.

Optionally, after step 703b, the target base station 1 further sends, to the source base station 1, radio resource information allocated by the target base station 1 to the session of the UE 1, so that the source base station 1 sends the radio resource information to the UE 1, and the UE 1 establishes an air interface connection with the target base station 1 based on the radio resource information. In this way, the UE 1 is switched from the source base station 1 to the target base station 1.

Optionally, after step 703b, the target base station 1 further sends, to the source base station 1, forwarding tunnel information of the target base station 1 corresponding to the session of the UE 1, so that the source base station 1 may send downlink data of the UE 1 to the target base station 1 based on the forwarding tunnel information.

Step 704b: The target base station 1 sends the Nx tunnel information of the source UPF 2 to the target UPF 1.

The source UPF 2 is a UPF corresponding to a session of the UE 2 that communicates with the UE 1. The Nx tunnel information of the source UPF 2 is used by the target UPF 1 to send downlink data of the UE 2 to the source UPF 2. The downlink data of the UE 2 is data sent to the UE 2.

Optionally, if the Nx tunnel information of the source UPF 2 is included in the context of the session of the UE 1, step 704b is specifically as follows: The target base station 1 sends the context of the session of the UE 1 to the target UPF 1.

Optionally, in step 704b, the target base station 1 further sends N3 tunnel information of the target base station 1 to the target UPF 1. The N3 tunnel information of the target base station 1 is used by the target UPF 1 to send downlink data of the UE 1 to the target base station 1. The downlink data of the UE 1 is data sent to the UE 1.

Step 705b: The target UPF 1 sends, to the target base station 1, information indicating that a UPF of the UE 1 is switched. The information includes Nx tunnel information of the target UPF 1.

The Nx tunnel information of the target UPF 1 is allocated by the target UPF 1. The Nx tunnel information of the target UPF 1 is used by a UPF of the UE 2 to send downlink data of the UE 1 to the target UPF 1.

Optionally, the information indicating that a UPF of the UE 1 is switched further includes a session endpoint identifier of the target UPF 1. The session endpoint identifier of the target UPF 1 identifies a session in the target UPF 1. The session endpoint identifier of the target UPF 1 is allocated by the target UPF 1 to the session.

Optionally, the information indicating that a UPF of the UE 1 is switched is included in an N4 container and sent to the target base station 1, and the target base station 1 does not perceive content of the N4 container.

Optionally, in step 705b, the target UPF 1 further sends N3 tunnel information of the target UPF 1 to the target base station 1. The N3 tunnel information of the target UPF 1 is used by the target base station 1 to send uplink data of the UE 1 to the target UPF 1. The uplink data of the UE 1 is data sent by the UE 1.

Step 706b: The SMF receives Nx tunnel information of the target UPF 2 from the target UPF 2 through the target base station 2.

In this case, the UE 2 is also switched, and the switching of the UE 2 is earlier than the switching of the UE 1. Therefore, before step 709b, the SMF has received the Nx tunnel information of the target UPF 2 from the target UPF 2.

Step 707b: The SMF sends the Nx tunnel information of the target UPF 2 to the source UPF 1, to update UPF information of the UE 2 in the source UPF 1.

Step 708b: The source UPF 1 sends a response message for rejecting the update to the SMF.

When receiving the Nx tunnel information of the target UPF 2 from the target UPF 2, the SMF does not know that the UE 1 is also being switched. Therefore, the SMF sends the Nx tunnel information of the target UPF 2 to the source UPF 1, to update the UPF information of the UE 2 in the source UPF 1. However, the source UPF 1 knows that the UE 1 is being switched. Therefore, the source UPF 1 rejects an update, that is, sends the response message for rejecting the update to the SMF, to reject to update the UPF information of the UE 2 in the source UPF 1.

Optionally, the response message for rejecting the update carries a reject cause value, and the reject cause value is that the UE 1 is being switched.

Step 709b: The target base station 1 sends, to the SMF, the information indicating that a UPF of the UE 1 is switched.

When the information indicating that a UPF of the UE 1 is switched is carried in the N4 container and sent to the SMF, the SMF may perceive content in the N4 container.

Optionally, step 709b is specifically as follows: The target base station 1 sends, to an AMF, the information indicating that a UPF of the UE 1 is switched, and then the AMF sends a session modification request to the SMF. The session modification request includes the information indicating that a UPF of the UE 1 is switched.

After step 709b, the SMF learns that the UE 1 completes the switching, and learns that a UPF after the switching is the target UPF 1. Therefore, the following step 710b may be performed.

Step 710b: The SMF sends the Nx tunnel information of the target UPF 2 to the target UPF 1.

Optionally, because the response message for rejecting the update is received in step 708b, in or after step 710b, the SMF may send an end marker indication to the target UPF 1, and the target UPF 1 sends an end marker to the source UPF 2 according to the end marker indication.

After step 709b, the SMF learns that the UE 1 completes the switching, and learns that a UPF after the switching is the target UPF 1. Therefore, the following step 711b may be performed. There is no sequence between steps 711b and 710b.

Step 711b: The SMF sends the Nx tunnel information of the target UPF 1 to the target UPF 2.

Optionally, in or after step 711b, the SMF sends an end marker indication to the target UPF 2, and the target UPF 2 sends an end marker to the source UPF 1 according to the end marker indication.

According to the foregoing solution, when both the UE 1 and the UE 2 are switched at the same time, the SMF receives the updated Nx tunnel information of the target UPF 2 of the UE 2, and does not know that the UE 1 is being switched. In this case, the SMF sends the Nx tunnel information of the target UPF 2 to the source UPF 1 of the UE 1. After receiving the response message for rejecting the update from the source UPF 2, the SMF learns that the UE 1 is being switched. After subsequently receiving the information indicating that a UPF of the UE 1 is switched, the SMF sends the updated Nx tunnel information of the target UPF 2 of the UE 2 to the target UPF 1 of the UE 1 after the switching, to ensure normal completion of the switching.

FIG. 7(c)-1 and FIG. 7(c)-2 are a schematic flowchart of a switching method according to an embodiment of this application. This embodiment may be applied to a scenario in which a UE 1 and a UE 2 are switched across satellites at the same time (for example, the scenario occurs due to satellite movement). In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2.

The method includes the following steps.

Steps 701c to 705c are the same as steps 701b to 705b. For details, refer to the foregoing descriptions.

Step 706c: The target base station 1 sends, to an SMF, information indicating that a UPF of the UE 1 is switched.

In an implementation, the target base station 1 sends, to the SMF or to the SMF through an AMF, a message indicating that the UE 1 is being switched. The message includes the information indicating that a UPF of the UE 1 is switched.

When the information indicating that a UPF of the UE 1 is switched is carried in an N4 container and sent to the SMF, the SMF may perceive content in the N4 container.

Step 707c: The SMF receives Nx tunnel information of the target UPF 2 from the target UPF 2 through the target base station 2.

When receiving the Nx tunnel information of the target UPF 2 from the target UPF 2, the SMF has learned, according to step 706c, that the UE 1 is also being switched, and has learned that a UPF of the UE 1 after the switching is the target UPF 1. Therefore, the SMF sends the Nx tunnel information of the target UPF 2 to the target UPF 1. That is, the following step 708c is performed.

Step 708c: The SMF sends the Nx tunnel information of the target UPF 2 to the target UPF 1.

Optionally, in or after step 708c, the SMF sends an end marker indication to the target UPF 1, and the target UPF 1 sends an end marker to the source UPF 2 according to the end marker indication.

Optionally, after step 707c, the following step 709c is further performed. There is no sequence between steps 709c and 708c.

Step 709c: The SMF sends Nx tunnel information of the target UPF 1 to the target UPF 2.

Optionally, in or after step 709c, the SMF sends an end marker indication to the target UPF 2, and the target UPF 2 sends an end marker to the source UPF 1 according to the end marker indication.

According to the foregoing solution, when both the UE 1 and the UE 2 are switched at the same time, the SMF receives the updated Nx tunnel information of the target UPF 2 of the UE 2, and has learned about information of the target UPF 1 of the UE 1 after the switching. In this case, the SMF sends the Nx tunnel information of the target UPF 2 to the target UPF 1 of the UE 1, to ensure normal completion of the switching.

FIG. 7(d)-1 and FIG. 7(d)-2 are a schematic flowchart of a switching method according to an embodiment of this application. This embodiment may be applied to a scenario in which a UE 1 and a UE 2 are switched across satellites at the same time (for example, the scenario occurs due to satellite movement). In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2.

The method includes the following steps.

Steps 701d to 705d are the same as steps 701b to 705b. For details, refer to the foregoing descriptions.

Step 706d: An SMF receives Nx tunnel information of the target UPF 2 from the target UPF 2 through the target base station 2.

In this case, the UE 2 is also switched, and the switching of the UE 2 is earlier than the switching of the UE 1. Therefore, after step 705d, the SMF has received the Nx tunnel information of the target UPF 2 from the target UPF 2.

Step 707d: The SMF sends the Nx tunnel information of the target UPF 2 to the source UPF 1, to update UPF information of the UE 2 in the source UPF 1.

When receiving the Nx tunnel information of the target UPF 2 from the target UPF 2, the SMF does not know that the UE 1 is also being switched. Therefore, the SMF sends the Nx tunnel information of the target UPF 2 to the source UPF 1, to update the UPF information of the UE 2 in the source UPF 1.

Optionally, after step 706d, the SMF sends an end marker indication to the source UPF 2. The end marker indication indicates the source UPF 2 to send an end marker to the source base station 2. The source UPF 2 sends the end marker to the source base station 2.

Step 708d: The target base station 1 sends, to the SMF, information indicating that a UPF of the UE 1 is switched.

When the information indicating that a UPF of the UE 1 is switched is carried in an N4 container and sent to the SMF, the SMF may perceive content in the N4 container.

Optionally, step 708d is specifically as follows: The target base station 1 sends, to an AMF, the information indicating that a UPF of the UE 1 is switched, and then the AMF sends a session modification request to the SMF. The session modification request includes the information indicating that a UPF of the UE 1 is switched.

Step 709d: The SMF sends the Nx tunnel information of the target UPF 2 to the target UPF 1.

In an implementation, the SMF further receives Nx tunnel information that is of a UPF of the UE 2 and that is sent by the target UPF 1 according to steps 705d and 708d. The target UPF 1 receives the Nx tunnel information of the UPF of the UE 2 from the source UPF 1. In this case, step 709d is specifically as follows: If the SMF determines that the Nx tunnel information that is of the UPF of the UE 2 and that is from the target UPF 1 is different from Nx tunnel information that is of the UPF of the UE 2 and that is stored by the SMF, the SMF sends the Nx tunnel information of the target UPF 2 to the target UPF 1. For example, the Nx tunnel information that is of the UPF of the UE 2 and that is from the target UPF 1 is Nx tunnel information of the source UPF 2, and the Nx tunnel information that is of the UPF of the UE 2 and that is stored by the SMF is the Nx tunnel information of the target UPF 2. In this case, the SMF determines that the Nx tunnel information that is of the UPF of the UE 2 and that is from the target UPF 1 is different from the Nx tunnel information that is of the UPF of the UE 2 and that is stored by the SMF, and then the SMF sends the Nx tunnel information of the target UPF 2 to the target UPF 1.

After step 708d, the SMF learns that the UE 1 completes the switching, and learns that a UPF after the switching is the target UPF 1. Therefore, the following step 710d may be performed. There is no sequence between steps 710d and 709d.

Step 710d: The SMF sends Nx tunnel information of the target UPF 1 to the target UPF 2.

Optionally, after step 710d, the SMF sends an end marker indication to the source UPF 1. The end marker indication indicates the source UPF 1 to send an end marker to the source base station 1. The source UPF 1 sends the end marker to the source base station 1 according to the end marker indication.

According to the foregoing solution, when both the UE 1 and the UE 2 are switched at the same time, the SMF receives the updated Nx tunnel information of the target UPF 2 of the UE 2, and does not know that the UE 1 is being switched. In this case, the SMF sends the Nx tunnel information of the target UPF 2 to the source UPF 1 of the UE 1, to update the UPF information of the UE 2 in the source UPF 1. The source UPF 1 accepts the update and subsequently sends downlink data of the UE 2 to the target UPF 2, instead of sending the downlink data of the UE 2 to the source UPF 2. After subsequently receiving the information indicating that the UPF of the UE 1 is switched, the SMF sends the updated Nx tunnel information of the target UPF 2 of the UE 2 to the target UPF 1 of the UE 1 after the switching, to ensure normal completion of the switching.

FIG. 7(e)-1 and FIG. 7(e)-2 are a schematic flowchart of a switching method according to an embodiment of this application. This embodiment may be applied to a scenario in which a UE 1 and a UE 2 are switched across satellites at the same time (for example, the scenario occurs due to satellite movement). In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2.

The method includes the following steps.

Steps 701e to 705e are the same as steps 701b to 705b. For details, refer to the foregoing descriptions.

Step 706e: The target base station 1 sends, to an SMF, information indicating that a UPF of the UE 1 is switched.

In an implementation, the target base station 1 sends, to the SMF or to the SMF through an AMF, a message indicating that the UE 1 is being switched. The message includes the information indicating that a UPF of the UE 1 is switched.

When the information indicating that a UPF of the UE 1 is switched is carried in an N4 container and sent to the SMF, the SMF may perceive content in the N4 container.

Step 707e: The SMF receives Nx tunnel information of the target UPF 2 from the target UPF 2 through the target base station 2.

When receiving the Nx tunnel information of the target UPF 2 from the target UPF 2, the SMF has learned, according to step 706e, that the UE 1 is also being switched, and has learned that a UPF of the UE 1 after the switching is the target UPF 1. Therefore, the SMF sends the Nx tunnel information of the target UPF 2 to the target UPF 1. That is, the following step 708e is performed. In addition, the following step 709e is further performed. There is no time sequence between steps 708e and 709e.

Step 708e: The SMF sends the Nx tunnel information of the target UPF 2 to the target UPF 1.

Step 709e: The SMF sends the Nx tunnel information of the target UPF 2 to the source UPF 1.

Optionally, after step 709e, the SMF sends an end marker indication to the source UPF 2. The end marker indication indicates the source UPF 2 to send an end marker to the source base station 2. The source UPF 2 sends the end marker to the source base station 2 according to the end marker indication.

Optionally, after step 706e, the following step 710e is further performed. There is no sequence between step 710e and steps 708e and 709e.

Step 710e: The SMF sends Nx tunnel information of the target UPF 1 to the target UPF 2.

Optionally, after step 710e, the SMF sends an end marker indication to the source UPF 1. The end marker indication indicates the source UPF 1 to send an end marker to the source base station 1. The source UPF 1 sends the end marker to the source base station 1 according to the end marker indication.

According to the foregoing solution, when both the UE 1 and the UE 2 are switched at the same time, the SMF receives the updated Nx tunnel information of the target UPF 2 of the UE 2, and has learned about information of the target UPF 1 of the UE 1 after the switching. In this case, the SMF sends the Nx tunnel information of the target UPF 2 to both the target UPF 1 and the source UPF 1 of the UE 1, to ensure normal completion of the switching.

FIG. 7(f) is a schematic flowchart of a switching method according to an embodiment of this application. This embodiment may be applied to a scenario in which a UE 1 and a UE 2 are switched across satellites at the same time (for example, the scenario occurs due to satellite movement). In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2.

The method includes the following steps.

Step 701f: An SMF receives Nx tunnel information of the target UPF 2 from the target UPF 2.

The target UPF 2 may be a target UPF, after the switching, selected by the SMF for the UE 2.

Specifically, the SMF may receive the Nx tunnel information of the target UPF 2 from the target UPF 2.

Optionally, before step 701f, the SMF receives information indicating that the UE 2 is switched, and then the SMF sends Nx tunnel information of the source UPF 1 to the target UPF 2.

Step 702f: The SMF receives information indicating that the UE 1 is switched.

The SMF determines, based on the information indicating that the UE 1 is switched, that the UE 1 is being switched.

Optionally, the information indicating that the UE 1 is switched may be information used to select a UPF for the UE 1, or identification information of the target UPF 1.

Optionally, the information indicating that the UE 1 is switched may be included in a session modification request message and sent to the SMF. The SMF obtains, from the session modification request message, the information indicating that the UE 1 is switched.

It needs to be noted that there is no execution sequence between steps 701f and 702f.

Step 703f: The SMF sends the Nx tunnel information of the target UPF 2 to the source UPF 1, to update UPF information of the UE 2 in the source UPF 1.

When the SMF receives the Nx tunnel information of the target UPF 2 of the UE 2, the UE 1 is also being switched and the switching is not completed. In this case, the SMF first sends the Nx tunnel information of the target UPF 2 of the UE 2 to the source UPF 1 of the UE 1, to update the UPF information of the UE 2 in the source UPF 1 of the UE 1.

Optionally, in or after step 703f, the SMF further sends an end marker indication to the source UPF 1. The end marker indication indicates the source UPF 1 to send an end marker to the source UPF 2.

Step 704f: The SMF sends the Nx tunnel information of the target UPF 2 to the target UPF 1.

Optionally, after step 702f, the SMF may send N3 tunnel information of the target UPF 1 to the target base station 1. Therefore, the target base station 1 may send data to the target UPF 1 based on the N3 tunnel information of the target UPF 1.

According to the foregoing solution, when the UE 2 completes the switching and the SMF receives the Nx tunnel information of the target UPF of the UE 2 after the switching, if the UE 1 is also being switched and the switching of the UE 1 is not completed, the SMF first sends the Nx tunnel information of the target UPF 2 of the UE 2 to the source UPF 1 of the UE 1, so that the source UPF 1 may start to send data to the target UPF 2. It may be ensured that the switching is normally completed. In addition, because an update of Nx tunnel information of a UPF is decoupled from switching of the UPF of a UE, a data packet loss or out-of-order problem caused because both the update of the Nx tunnel information of the UPF and the switching of the UPF of the UE are performed at the same time may be avoided.

FIG. 8A and FIG. 8B are a schematic flowchart of a switching method according to an embodiment of this application. In this procedure, a satellite serving a UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving a UE 2 is not switched, and a base station 2 and a UPF 2 on a satellite 3 provide services for the UE 2. The embodiment in FIG. 8A and FIG. 8B is an improvement to the embodiment in FIG. 5A and FIG. 5B. The embodiment corresponding to FIG. 8A and FIG. 8B is also a specific implementation of the embodiment in FIG. 7(a).

The procedure includes the following steps.

Step 801: If the UE 1 is about to move out of a coverage area of the source base station 1 and the source base station 1 determines to switch the UE 1 to the target base station 1, the source base station 1 sends a switch preparation request message to the source UPF 1. Correspondingly, the source UPF 1 receives the switch preparation request message.

The switch preparation request message indicates the source UPF 1 to prepare for cross-satellite switching of the UE 1.

If the UE 1 establishes one PDU session, step 801 is performed once. The switch preparation request message includes an identifier of the PDU session.

If the UE 1 establishes a plurality of PDU sessions, step 801 may be performed for one or more times. To be specific, the source base station 1 may send one switch preparation request message to the source UPF 1 for each PDU session. The switch preparation request message includes an identifier of one PDU session. Alternatively, the source base station 1 sends one switch preparation request message for the plurality of PDU sessions of the UE. The switch preparation request message includes identifiers of the plurality of PDU sessions of the UE 1. That is, the switch preparation request message may be at a granularity of a UE, or may be at a granularity of a PDU session.

Step 802: The source UPF 1 sends a switch preparation response message to the source base station 1. Correspondingly, the source base station 1 receives the switch preparation response message.

The switch preparation response message includes context information of the PDU session of the UE 1 in the source UPF 1.

If the source base station 1 sends one switch preparation request message for each PDU session, the source UPF 1 sends one switch preparation response message for each switch preparation request message. The switch preparation response message includes context information of one PDU session. For example, the source base station 1 sends a switch preparation request message 1 to the source UPF 1, where the switch preparation request message 1 includes an identifier of a PDU session 1, and the source base station 1 sends a switch preparation request message 2 to the source UPF 1, where the switch preparation request message 2 includes an identifier of a PDU session 2. In this case, the source UPF 1 sends a switch preparation response message 1 to the source base station 1 for the switch preparation request message 1, where the switch preparation response message 1 includes context information of the PDU session 1, and the source UPF 1 sends a switch preparation response message 2 to the source base station 1 for the switch preparation request message 2, where the switch preparation response message 2 includes context information of the PDU session 2.

If the source base station 1 sends one switch preparation request message for the plurality of PDU sessions of the UE 1, the source UPF 1 sends one switch preparation response message to the source base station 1. The switch preparation response message includes context information of the plurality of PDU sessions of the UE 1. Each PDU session corresponds to context information of one PDU session.

The context information of each PDU session includes an identifier of the PDU session and all packet detection rules (Packet Detection Rules, PDRs) corresponding to the PDU session. The PDRs include an uplink PDR and a downlink PDR. The uplink PDR is used to determine a sending manner of a received uplink data packet, and the downlink PDR is used to determine a sending manner of a received downlink data packet. The uplink PDR includes Nx tunnel information of the UPF 2. Alternatively, when the PDU session is a 5G local area network (Local Area Network, LAN) session, the uplink PDR indicates to send the received uplink data packet to a 5G LAN internal interface. The downlink PDR includes information (for example, a QoS flow identity (QoS flow identity, QFI) and QoS flow description information (used by a target UPF to determine a QFI corresponding to a downlink data packet)) about a QoS flow corresponding to the PDU session.

If the PDU session is a 5G LAN session, a source interface (Source Interface) of a downlink PDR of the PDU session is a 5G LAN internal interface, a source network instance (Network Instance) of the PDR is set to an identifier of the 5G LAN, a destination interface (Destination Interface) of an uplink PDR of the PDU session is a 5G LAN internal interface, and a destination network instance (Network Instance) of the uplink PDR is set to an identifier of the 5G LAN. That is, an uplink data packet received from the PDU session is sent to the internal interface of the 5G LAN.

If the PDU session is the 5G LAN session, the switch preparation response message further includes context information of the 5G LAN session. The context information of the 5G LAN session includes a 5G LAN group-level uplink PDR. A source interface (Source Interface) of the uplink PDR is a 5G LAN internal interface (VN Internal). A source network instance (Network Instance) of the uplink PDR is set to an identifier of the 5G LAN. The PDR includes address information, and the PDR is used to send, to the UPF 2 through an Nx tunnel, a data packet whose destination address is an address included in the PDR. The context information of the 5G LAN session further includes a 5G LAN group-level downlink PDR. A destination interface (Destination Interface) of the downlink PDR is a 5G LAN internal interface (VN Internal). A destination network instance (Network Instance) of the downlink PDR is set to an identifier of the 5G LAN. The downlink PDR indicates to send, to the internal interface of the 5G LAN, a data packet received from the Nx tunnel.

The PDR of the PDU session and the PDR of the 5G LAN group level are used by the target UPF 1 to process uplink and downlink data packets.

Optionally, the context information of the PDU session further includes N4 session information, for example, an F-SEID of an SMF corresponding to the PDU session and/or a node ID of the SMF corresponding to the PDU session. The F-SEID of the SMF uniquely identifies the PDU session in the SMF. The F-SEID is short for fully qualified session endpoint identifier (Fully Qualified Session Endpoint Identifier).

The source UPF 1 may encapsulate the context information of each PDU session of the UE 1 into a context container, and the source base station 1 may not need to understand content in the container. The switch preparation response message includes one or more (identifiers of PDU sessions and context containers corresponding to the PDU sessions).

Step 803: The source base station 1 sends a switch request message to the target base station 1. Correspondingly, the target base station 1 receives the switch request message.

The switch request message includes an identifier of each PDU session and a context container corresponding to the PDU session. Alternatively, it may be understood that the switch request message includes the one or more (identifiers of PDU sessions and context containers corresponding to the PDU sessions). Herein, (the identifier of the PDU session and the context container corresponding to the PDU session) represent a combination including the identifier of the PDU session and the context container corresponding to the PDU session. Therefore, the one or more (identifiers of PDU sessions and context containers corresponding to the PDU sessions) represent one or more combinations. Each combination includes an identifier of one PDU session and a context container corresponding to the PDU session. Unified description is provided herein, and details are not described subsequently.

Step 804: The target base station 1 sends a switch preparation request message to the target UPF 1 located on a same satellite. Correspondingly, the target UPF 1 receives the switch preparation request message.

The switch preparation request message includes context information of a PDU session of the UE 1. In a specific implementation, the switch preparation request message includes an identifier of at least one PDU session of the UE 1 and a context container corresponding to the PDU session.

In addition, the switch preparation request message further includes N3 tunnel information of the target base station 1 corresponding to the at least one PDU session of the UE 1. The N3 tunnel is used by the target base station 1 to receive data of the PDU session. For example, if the target base station 1 determines that the received switch request message includes the context container corresponding to the PDU session, the target base station 1 allocates one piece of N3 tunnel information to the PDU session, and includes the identifier of the PDU session, the context container of the PDU session, and the N3 tunnel information of the target base station 1 corresponding to the PDU session in the switch preparation request message. Alternatively, the source base station 1 indicates, in the switch request message, the target base station 1 that: which PDU sessions need to be created to an N3 tunnel to the target UPF 1 (the source base station 1 knows which PDU sessions are served by the source UPF 1). In this case, the target base station 1 allocates the N3 tunnel to the PDU sessions, and includes an identifier of the PDU session, a context container of the PDU session, and N3 tunnel information of the target base station 1 corresponding to the PDU session in the switch preparation request message. Therefore, the switch preparation request message may include one or more (identifiers of PDU sessions, context containers, and N3 tunnel information of the target base station 1).

Step 805: The target UPF 1 sends a switch preparation response message to the target base station 1. Correspondingly, the target base station 1 receives the switch preparation response message.

After receiving the switch preparation request message, the target UPF 1 stores the identifier of the PDU session, context information of the PDU session, and the N3 tunnel information of the target base station 1 corresponding to the PDU session.

The switch preparation response message includes N3 tunnel information of the target UPF 1 corresponding to the PDU session of the UE 1 and an N4 container corresponding to each PDU session. In an implementation, a format of the switch preparation response message is as follows: The switch preparation response message includes the one or more (identifiers of PDU sessions, N4 containers, and N3 tunnel information of the target UPF 1).

The N3 tunnel information of the target UPF 1 is sent to the target base station 1, and the N4 container is sent to the SMF.

The target UPF 1 allocates N3 tunnel information of the target UPF 1 to each PDU session. The N3 tunnel information is used to receive data of the PDU session from the target base station 1. The N3 tunnel information that is of the target UPF 1 and that is allocated to each PDU session is carried in the switch preparation response message and sent to the target base station 1. In step 804, the target UPF 1 receives the N3 tunnel information of the target base station 1 corresponding to each PDU session. In addition, in step 805, the target base station 1 may receive the N3 tunnel information of the target UPF 1 corresponding to each PDU session. Therefore, an N3 tunnel corresponding to each PDU session is established between the target base station 1 and the target UPF 1. The N3 tunnel is used to transmit data of the PDU session. After the UE 1 successfully establishes a connection with the target base station 1, uplink data sent by the UE 1 may be directly sent to the target UPF 1 through the N3 tunnel, to avoid detour through the source UPF 1. It needs to be noted that the N3 tunnel is at a granularity of a PDU session. That is, each PDU corresponds to one N3 tunnel.

An N4 message is encapsulated in an N4 container corresponding to each PDU session. For example, the N4 message may alternatively be a PFCP session modification request message. The PFCP session modification request message is generated by the target UPF 1 for the PDU session, and is used to notify the SMF that a UPF corresponding to the PDU session is switched. The PFCP session modification request message includes N4 session information (for example, an F-SEID of an SMF and/or a node ID of the SMF, where the F-SEID of the SMF uniquely identifies the PDU session in the SMF), N4 interface information of the target UPF 1 (for example, an F-SEID of the target UPF 1 and/or a node ID of the target UPF 1, where the F-SEID of the target UPF 1 uniquely identifies the session in the target UPF 1), and target UPF 1's Nx tunnel information allocated by the target UPF 1 to the PDU session that are all corresponding to the PDU session. The Nx tunnel information of the target UPF 1 is sent to the UPF 2, and is used by the UPF 2 to send, to the target UPF 1 based on the Nx tunnel information of the target UPF 1, data that the UE 2 needs to send to the UE 1. Optionally, the PFCP session modification request message may further include the N3 tunnel information of the target UPF 1 corresponding to the PDU session. Optionally, the PFCP session modification request message may further include the N3 tunnel information of the target base station 1 corresponding to the PDU session.

Step 806: The target base station 1 sends a switch response message to the source base station 1. Correspondingly, the source base station 1 receives the switch response message.

The target base station 1 obtains, from the switch preparation response message in step 805, the N3 tunnel information of the target UPF 1 corresponding to each PDU session of the UE 1, and stores the N3 tunnel information of the target UPF 1.

In addition, the target base station 1 further sends the switch response message to the source base station 1. The switch response message includes the identifier of the PDU session of the UE 1.

In addition, the switch response message may further include radio resource information allocated by the target base station 1 to each PDU session of the UE 1.

Optionally, the switch response message may further include forwarding tunnel information of the target base station 1. The forwarding tunnel information is used by the source base station 1 to forward received data sent to the UE 1 to the target base station 1. In this way, data sent from the UE 2 to the UE 1 may arrive at the target base station 1 through a forwarding tunnel of the target base station 1, and a path of the data sent from the UE 2 to the UE 1 is as follows: UE 2 -> base station 2 -> UPF 2 -> source UPF 1 -> source base station 1 -> target base station 1. In this case, the UE 1 does not establish a connection with the target base station 1. Therefore, the data sent from the UE 2 to the UE 1 may be temporarily buffered in the target base station 1. After the connection between the target base station 1 and the UE 1 is subsequently established, the target base station 1 may send the buffered data to the UE 1.

Step 807: The source base station 1 sends a switch command to the UE 1. Correspondingly, the UE 1 receives the switch command.

When the source base station 1 receives the switch response message in step 806, the source base station 1 is triggered to send the switch command to the UE 1.

The switch command may be an RRC reconfiguration message.

The switch command includes radio resource information allocated by the target base station 1 to each PDU session of the UE 1, so that the UE 1 configures an air interface based on the radio resource information.

Step 808: The UE 1 performs synchronization with the target base station 1.

After the UE 1 performs synchronization with the target base station 1, the UE 1 may send uplink data through the target base station 1. The N3 tunnel between the target base station 1 and the target UPF 1 has been established in a switch preparation phase. Therefore, the target base station 1 may send, to the target UPF 1, the uplink data that is of the UE 1 and that is received from the UE 1. In addition, the context information that is of the PDU session and that is obtained by the target UPF 1 from the source UPF 1 includes Nx tunnel information of the UPF 2 of the UE 2. Therefore, the target UPF 1 may send the received uplink data of the UE 1 to the UPF 2, and the UPF 2 sends the uplink data to the UE 2 through the base station 2. That is, after step 808, the uplink path switching is completed.

Step 809: The UE 1 sends a switch complete indication to the target base station 1. Correspondingly, the target base station 1 receives the switch complete indication.

The switch complete indication may be an RRC reconfiguration complete message.

After receiving the switch complete indication, the target base station 1 may start to send downlink data to the UE 1. For example, the target base station 1 may send, to the UE 1, previously buffered data that needs to be sent to the UE 1. The buffered data is sent by the source base station 1 to the target base station 1.

Step 810: The target base station 1 sends a path switch request message (PATH SWITCH REQUEST) to an AMF. Correspondingly, the AMF receives the path switch request message.

The path switch request message includes the identifier of the PDU session of the UE 1 and the N4 container corresponding to each PDU session. Alternatively, it may be understood that the path switch request message includes the one or more (identifiers of PDU sessions and N4 containers). The N4 container is the N4 container in the switch preparation request message in step 805.

Step 811: The AMF sends a session modification request message to the SMF. Correspondingly, the SMF receives the session modification request message.

The SMF herein is an SMF corresponding to the PDU session. Different PDU sessions of the UE 1 may correspond to a same SMF, or may correspond to different SMFs. This is not limited in this application.

The session modification request message includes the N4 container corresponding to the PDU session. The SMF performs a corresponding operation based on the N4 message in the N4 container. For example, the SMF replaces a node ID of a UPF corresponding to the PDU session with the node ID of the target UPF 1 in the N4 message, and/or the SMF replaces an F-SEID of the UPF corresponding to the PDU session with the F-SEID of the target UPF 1 in the N4 message.

In addition, the SMF stores the Nx tunnel information of the target UPF 1, the N3 tunnel information of the target UPF 1, and the like that are carried in the N4 container.

Optionally, the session modification request message may be an Nsmf_PDUSession_SMContextUpdate Request message.

Step 812: The SMF sends a session modification request message to the UPF 2. Correspondingly, the UPF 2 receives the session modification request message.

The session modification request message includes Nx tunnel information of the target UPF 1 corresponding to a PDU session of the UE 1.

The SMF obtains, from the N4 container, the Nx tunnel information of the target UPF 1 corresponding to the PDU session of the UE 1, and sends, to the UPF 2, the Nx tunnel information of the target UPF 1 corresponding to the PDU session of the UE 1. In this way, the UPF 2 updates Nx tunnel information corresponding to the PDU session from Nx tunnel information of the source UPF 1 corresponding to the PDU session to the Nx tunnel information of the target UPF 1 corresponding to the PDU session. Subsequently, the UPF 2 directly sends, to the target UPF 1, the received data that needs to be sent by the UE 2 to the UE 1, that is, without detour through the source UPF 1 and the source base station 1.

Optionally, the session modification request message may further include an end marker indication. The end marker indication indicates the UPF 2 to send an end marker through a source path (that is, to the source UPF 1). The UPF 2 sends the end marker through the source path according to the end marker indication. The UPF 2 starts to send data through a new path (that is, to the target UPF 1). In this case, a downlink path of the UE 1 is switched as follows: UE 2 -> base station 2 -> UPF 2 -> target UPF 1 -> target base station 1 -> UE 1. In this case, switching of both uplink and downlink paths of the UE 1 is completed.

Optionally, the session modification request message may be an N4 session modification request message, namely, a PFCP Session ModificationRequest message.

It needs to be noted that if an SMF corresponding to the target UPF 1 is different from an SMF corresponding to the UPF 2, the SMF corresponding to the target UPF 1 sends, to the SMF corresponding to the UPF 2, the Nx tunnel information of the target UPF 1 corresponding to the PDU session of the UE 1, and then the SMF corresponding to the UPF 2 sends, to the UPF 2, the Nx tunnel information of the target UPF 1 corresponding to the PDU session of the UE 1. Similarly, the end marker indication is also sent by the SMF corresponding to the target UPF 1 to the SMF corresponding to the UPF 2, and then sent by the SMF corresponding to the UPF 2 to the UPF 2.

Step 813: The SMF sends a session modification response message to the AMF. Correspondingly, the AMF receives the session modification response message.

The session modification response message includes an N4 container. The N4 container includes a PFCP session modification response message. The N4 container needs to be sent to the target UPF 1.

Optionally, the session modification response message may be an Nsmf_PDUSession_SMContextUpdate Response message.

Step 814: The AMF sends a path switch response message (PATH SWITCH REQUEST ACK) to the target base station 1. Correspondingly, the target base station 1 receives the path switch response message.

The path switch response message includes an identifier of a successfully switched PDU session and an N4 container corresponding to the PDU session. The N4 container is from the session modification response message in step 813.

Step 815: The target base station 1 sends the N4 container to the target UPF 1. Correspondingly, the target UPF 1 receives the N4 container.

The N4 container includes a PFCP session modification response message.

Compared with the embodiment corresponding to FIG. 5A and FIG. 5B, the embodiment corresponding to FIG. 8A and FIG. 8B reduces a satellite-ground signaling interaction (for example, reduces 50% of satellite-ground signaling) in a switching procedure, thereby reducing load of a satellite-ground link and reducing a switching delay. In addition, the context information of the PDU session of the source UPF is sent to the target UPF in the preparation phase, and the N3 tunnel between the target base station and the target UPF is established. Therefore, detour for uplink data through the source UPF may be avoided, and a data transmission delay may be further reduced.

FIG. 9A, FIG. 9B, and FIG. 9C are a schematic flowchart of a switching method according to an embodiment of this application. This embodiment may be applied to a scenario in which a UE 1 and a UE 2 are switched across satellites at the same time (for example, the scenario occurs due to satellite movement). In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2. The embodiment in FIG. 9A, FIG. 9B, and FIG. 9C is an improvement to the embodiment in FIG. 6A and FIG. 6B. The embodiment corresponding to FIG. 9A, FIG. 9B, and FIG. 9C is also a specific implementation of the embodiment in FIG. 7(b)-1 and FIG. 7(b)-2.

This embodiment may be applied to a time sequence problem of Nx tunnel switching caused when the UE 1 and the UE 2 move across satellites at the same time.

The procedure includes the following steps.

Steps 901 to 906 are the same as steps 801 to 806.

Step 906a: An SMF sends Nx tunnel information of the target UPF 2 to the source UPF 1. Correspondingly, the source UPF 1 receives the Nx tunnel information of the target UPF 2.

Before step 906a, the UE 2 is also switched, and the SMF has received the Nx tunnel information of the target UPF 2 after the switching.

The SMF does not know that the UE 1 is being switched, and the SMF considers that the UE 1 is still served by the source UPF 1. Therefore, after receiving the Nx tunnel information of the target UPF 2 of the UE 2 after the switching, the SMF sends the Nx tunnel information of the target UPF 2 to the source UPF 1.

Step 906a may be performed in any step after step 901 and before step 911. In this embodiment, an example in which step 906a is performed after step 906 and before step 907 is used for description. A reason why step 906a is performed after step 901 is that: After step 901, the source UPF 1 may learn that the UE 1 is being switched. Therefore, when the source UPF 1 receives Nx tunnel information of the target UPF 1 from the SMF, the source UPF 1 may not update Nx tunnel information of a UPF temporarily, and may perform following step 906b. A reason why step 906a is performed before step 911 is that: After receiving a session modification request message in step 911, the SMF may learn that the UE 1 is being switched, and the SMF may not perform step 906a. In other words, before step 911, the SMF does not know that the UE 1 is being switched, and therefore the SMF performs the foregoing step 906a.

Optionally, in step 906a, the SMF may further send an end marker indication to the source UPF 1. The end marker indication indicates the source UPF 1 to send an end marker through a source path (that is, to the source UPF 2).

Step 906b: The source UPF 1 sends a reject message to the SMF. Correspondingly, the SMF receives the reject message.

The reject message may carry a cause value. The cause value is that the UE 1 is being switched.

Because the source UPF 1 rejects to update the Nx tunnel information, the source UPF 1 continues to send uplink data of the UE 1 to the source UPF 2 of the UE 2. If the end marker indication is further sent in step 906a, the source UPF 1 does not send the end marker. That is, the source UPF 1 ignores the end marker indication.

It needs to be noted that a forwarding tunnel is established between the source base station 2 and the target base station 2 in a switch preparation phase, and the source UPF 1 rejects to switch an Nx tunnel. This means that uplink data sent by the UE 1 is still sent to the source UPF 2, the source UPF 2 sends the uplink data to the source base station 2, the source base station 2 sends the uplink data to the target base station 2 through the forwarding tunnel, and then the target base station 2 sends the data of the UE 1 to the UE 2. In this case, detour for the uplink data sent by the UE 1 exists between a source satellite (namely, the satellite 3) and a target satellite (namely, the satellite 4) of the UE 2. Although the detour exists, a data packet out-of-order problem caused by concurrent switching may be avoided.

Steps 907 to 911 are the same as steps 807 to 811.

It needs to be noted that the embodiment in FIG. 8A and FIG. 8B involves only one UPF of the UE 2, namely, the UPF 2. However, the embodiment in FIG. 9A, FIG. 9B, and FIG. 9C involves two UPFs of the UE 2, namely, the source UPF 2 and the target UPF 2. For steps 901 to 906 and steps 907 to 911, refer to corresponding steps in the embodiment in FIG. 8A and FIG. 8B. The UPF 2 involved in steps 901 to 906 and steps 907 to 911 is the source UPF 2.

Step 912: The SMF sends a session modification request message to the target UPF 2. Correspondingly, the target UPF 2 receives the session modification request message.

The session modification request message includes Nx tunnel information of the target UPF 1 corresponding to a PDU session of the UE 1 and the end marker indication.

The SMF obtains, from an N4 container, the Nx tunnel information of the target UPF 1 corresponding to the PDU session of the UE 1, and sends, to the target UPF 2, the Nx tunnel information of the target UPF 1 corresponding to the PDU session of the UE 1. In this way, the target UPF 2 updates Nx tunnel information corresponding to the PDU session from Nx tunnel information of the source UPF 1 to the Nx tunnel information of the target UPF 1. Subsequently, the target UPF 2 directly sends, to the target UPF 1, the received data that needs to be sent by the UE 2 to the UE 1, that is, without detour through the source UPF 1 and the source base station 1.

The end marker indication indicates the target UPF 2 to send the end marker through the source path (that is, to the source UPF 1). The target UPF 2 sends the end marker through the source path. The target UPF 2 sends, to the target UPF 1, the received data that needs to be sent by the UE 2 to the UE 1, and the target UPF 1 sends the data to the UE 1. In this case, a downlink path of the UE 1 is switched as follows: UE 2 -> target base station 2 -> target UPF 2 -> target UPF 1 -> target base station 1 -> UE 1. In this case, switching of both uplink and downlink paths of the UE 1 is completed. The target UPF 2 obtains information of the source UPF 1 from the source UPF 2 in the switch preparation phase.

Optionally, the session modification request message may be an N4 session modification request message, namely, a PFCP Session Modification Request message.

It needs to be noted that if an SMF corresponding to the target UPF 1 is different from an SMF corresponding to the target UPF 2, the SMF corresponding to the target UPF 1 sends, to the SMF corresponding to the target UPF 2, the Nx tunnel information of the target UPF 1 corresponding to the PDU session of the UE 1 and the end marker indication, and then the SMF corresponding to the target UPF 2 sends, to the target UPF 2, the Nx tunnel information of the target UPF 1 corresponding to the PDU session of the UE 1 and the end marker indication.

Step 913: The SMF sends a session modification response message to an AMF. Correspondingly, the AMF receives the session modification response message.

The session modification response message includes an N4 container. The N4 container includes a PFCP session modification response message and the Nx tunnel information of the target UPF 2. The N4 container needs to be sent to the target UPF 1.

Optionally, the N4 container further includes an end marker indication.

Step 914: The AMF sends a path switch response message (PATH SWITCH REQUEST ACK) to the target base station 1. Correspondingly, the target base station 1 receives the path switch response message.

The path switch response message includes an identifier of a successfully switched PDU session and an N4 container corresponding to the PDU session. The N4 container is from the session modification response message in step 913.

Step 915: The target base station 1 sends the N4 container to the target UPF 1. Correspondingly, the target UPF 1 receives the N4 container.

The N4 container includes a PFCP session modification response message and Nx tunnel information of the target UPF 2, and the target UPF 1 stores the Nx tunnel information of the target UPF 2.

Optionally, if the N4 container includes an end marker indication, the target UPF 1 sends an end marker to the source UPF 2 according to the end marker indication, and starts to send data to the target UPF 2. The target UPF 1 obtains information of the source UPF 2 in the switch preparation phase.

It needs to be noted that this embodiment is described by using an example in which the UE 1 and the UE 2 are served by a same AMF and a same SMF. This embodiment is also applicable to a scenario in which the UE 1 and the UE 2 are served by different SMFs and/or different AMFs.

In this embodiment, when the source UPF 1 finds that a communication peer UPF of the UE that is being switched is also switched, the source UPF 1 does not update an Nx tunnel, and still sends data through the source path, to avoid a packet loss or out-of-order problem caused by path inconsistency with the target UPF 1. In this embodiment, before the SMF notifies the target UPF 1 to send the end marker, the UE 1 has switched a path to the target UPF 1 to send the uplink data. Therefore, before the SMF sends the end marker indication to the target UPF 1, no uplink data is sent to the source UPF 2 through the source UPF 1. In other words, the end marker sent by the target UPF 1 is a last data packet sent to the source UPF 2, and the target UPF 1 subsequently sends the data to the target UPF 2. The end marker is further sent by the source UPF 2 to the source base station 2, and then is sent by the source base station 2 to the target base station 2. After receiving the end marker through the forwarding tunnel between the source base station 2 and the target base station 2, the target base station 2 sends, to the UE 2, downlink data of the UE 2 received from the target UPF 2. In addition, a sending time of a data packet received through the forwarding tunnel is earlier than a sending time of a data packet received from the target UPF 2. Therefore, the data received through the forwarding tunnel should be first sent to the UE 2, to ensure in-order transmission of the data.

FIG. 10A, FIG. 10B, and FIG. 10C are a schematic flowchart of a switching method according to an embodiment of this application. This embodiment may be applied to a scenario in which a UE 1 and a UE 2 are switched across satellites at the same time due to satellite movement. In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2. The embodiment in FIG. 10A, FIG. 10B, and FIG. 10C is an improvement to the embodiment in FIG. 6A and FIG. 6B. The embodiment corresponding to FIG. 10A, FIG. 10B, and FIG. 10C is also a specific implementation of the embodiment in FIG. 7(c)-1 and FIG. 7(c)-2.

This embodiment may be applied to a time sequence problem of Nx tunnel switching caused when the UE 1 and the UE 2 move across satellites at the same time.

The procedure includes the following steps.

Steps 1001 to 1009 are the same as steps 801 to 809.

It needs to be noted that the embodiment in FIG. 8A and FIG. 8B involves only one UPF of the UE 2, namely, the UPF 2. However, the embodiment in FIG. 10A, FIG. 10B, and FIG. 10C involves two UPFs of the UE 2, namely, the source UPF 2 and the target UPF 2. For steps 1001 to 1009, refer to corresponding steps in the embodiment in FIG. 8A and FIG. 8B. The UPF 2 involved in steps 1001 to 1009 is the source UPF 2.

In addition, the UE 2 is also switched across satellites, and the UE 2 completes operations similar to steps 1001 to 1009.

Step 1010: The target base station 1 sends a path switch request message (PATH SWITCH REQUEST) to an AMF. Correspondingly, the AMF receives the path switch request message.

The path switch request message includes an identifier of a PDU session of the UE 1 and an N4 container corresponding to each PDU session. Alternatively, it may be understood that the path switch request message includes one or more (identifiers of PDU sessions and N4 containers).

An N4 message is encapsulated in the N4 container corresponding to each PDU session. The N4 message may be a PFCP session modification request message. The PFCP session modification request message is generated by the target UPF 1 for the PDU session, and is used to notify an SMF that a UPF corresponding to the PDU session is switched. The PFCP session modification request message includes N4 session information (for example, an F-SEID of the SMF and/or a node ID of the SMF), N4 interface information of the target UPF 1 (for example, an F-SEID of the target UPF 1 and/or a node ID of the target UPF 1, where the F-SEID of the target UPF 1 uniquely identifies the session in the target UPF 1), and target UPF 1's Nx tunnel information allocated by the target UPF 1 to the PDU session that are all corresponding to the PDU session. The Nx tunnel information of the target UPF 1 is sent to the target UPF 2, and is used by the target UPF 2 to send, to the target UPF 1, data that the UE 2 needs to send to the UE 1. Optionally, the PFCP session modification request message may further include N3 tunnel information of the target UPF 1 corresponding to the PDU session. Optionally, the PFCP session modification request message may further include N3 tunnel information of the target base station 1 corresponding to the PDU session.

Step 1011: The target base station 2 sends a path switch request message (PATH SWITCH REQUEST) to the AMF. Correspondingly, the AMF receives the path switch request message.

The path switch request message includes an identifier of a PDU session of the UE 2 and an N4 container corresponding to each PDU session. Alternatively, it may be understood that the path switch request message includes one or more (identifiers of PDU sessions and N4 containers).

An N4 message is encapsulated in the N4 container corresponding to each PDU session. The N4 message may be a PFCP session modification request message. The PFCP session modification request message is generated by the target UPF 2 for the PDU session, and is used to notify the SMF that a UPF corresponding to the PDU session is switched. The PFCP session modification request message includes N4 session information (for example, an F-SEID of the SMF and a node ID of the SMF), N4 interface information of the target UPF 2 (for example, an F-SEID of the target UPF 2 and a node ID of the target UPF 2), and target UPF 2's Nx tunnel information allocated by the target UPF 2 to the PDU session that are all corresponding to the PDU session. The Nx tunnel information of the target UPF 2 is sent to the target UPF 1, and is used by the target UPF 1 to send, to the target UPF 2, data that the UE 1 needs to send to the UE 2. Optionally, the PFCP session modification request message may further include N3 tunnel information of the target UPF 2 corresponding to the PDU session. Optionally, the PFCP session modification request message may further include N3 tunnel information of the target base station 2 corresponding to the PDU session.

Step 1012: The AMF sends a session modification request message to the SMF. Correspondingly, the SMF receives the session modification request message.

The SMF herein is an SMF corresponding to a PDU session of the UE 1. Different PDU sessions of the UE 1 may correspond to a same SMF, or may correspond to different SMFs. This is not limited in this application.

The session modification request message includes an N4 container corresponding to the PDU session of the UE 1. The N4 container is the N4 container received by the AMF in step 1010.

The SMF performs a corresponding operation based on the N4 message in the N4 container. For example, the SMF replaces a node ID of a UPF corresponding to the PDU session with the node ID of the target UPF 1 in the N4 message, and/or the SMF replaces an F-SEID of the UPF corresponding to the PDU session with the F-SEID of the target UPF 1 in the N4 message.

In addition, the SMF stores the Nx tunnel information of the target UPF 1, the N3 tunnel information of the target UPF 1, and the like.

Optionally, the session modification request message may be an Nsmf_PDUSession_SMContextUpdate Request message.

Step 1013: The SMF sends a session modification response message to the AMF. Correspondingly, the AMF receives the session modification response message.

The session modification response message includes an N4 container. The N4 container includes a PFCP session modification response message. The N4 container needs to be sent to the target UPF 1.

The session modification response message is a response message for the session modification request message in step 1012. In this case, the SMF still does not receive the Nx tunnel information of the target UPF 2 of the UE 2. Therefore, the session modification response message does not carry the Nx tunnel information of the target UPF 2.

Optionally, the session modification response message may be an Nsmf_PDUSession_SMContextUpdate Response message.

Step 1014: The AMF sends a session modification request message to the SMF. Correspondingly, the SMF receives the session modification request message.

The SMF herein is an SMF corresponding to a PDU session of the UE 2. Different PDU sessions of the UE 2 may correspond to a same SMF, or may correspond to different SMFs. This is not limited in this application.

The session modification request message includes an N4 container corresponding to the PDU session of the UE 2. The N4 container is the N4 container received by the AMF in step 1011.

The SMF performs a corresponding operation based on the N4 message in the N4 container. For example, the SMF replaces a node ID of a UPF corresponding to the PDU session with the node ID of the target UPF 2 in the N4 message, and/or the SMF replaces an F-SEID of the UPF corresponding to the PDU session with the F-SEID of the target UPF 2 in the N4 message.

In addition, the SMF stores the Nx tunnel information of the target UPF 2, the N3 tunnel information of the target UPF 2, and the like.

Optionally, the session modification request message may be an Nsmf_PDUSession_SMContextUpdate Request message.

Step 1015: The AMF sends a path switch response message (PATH SWITCH REQUEST ACK) to the target base station 1. Correspondingly, the target base station 1 receives the path switch response message.

The path switch response message includes an identifier of a PDU session of the successfully switched UE 1 and an N4 container corresponding to the PDU session. The N4 container is from the session modification response message in step 1013.

Step 1016: The SMF sends a session modification response message to the AMF. Correspondingly, the AMF receives the session modification response message.

The session modification response message includes an N4 container. The N4 container includes the Nx tunnel information of the target UPF 1 and an end marker indication. The N4 container needs to be sent to the target UPF 2. The end marker indication indicates the target UPF 2 to send an end marker through a source path (that is, to the source UPF 1) before sending data to the target UPF 1.

The session modification response message is a response message for the session modification request message in step 1014. In this case, the SMF has received the Nx tunnel information of the target UPF 1 of the UE 1. Therefore, the session modification response message carries the Nx tunnel information of the target UPF 1.

Optionally, the session modification response message may be an Nsmf_PDUSession_SMContextUpdate Response message.

Step 1017: The AMF sends a path switch response message (PATH SWITCH REQUEST ACK) to the target base station 2. Correspondingly, the target base station 2 receives the path switch response message.

The path switch response message includes an identifier of a PDU session of the successfully switched UE 2 and an N4 container corresponding to the PDU session. The N4 container is from the session modification response message in step 1016.

Step 1018: The target base station 2 sends the N4 container to the target UPF 2. Correspondingly, the target UPF 2 receives the N4 container.

The target UPF 2 sends the end marker through the source path (that is, to the source UPF 1) according to the end marker indication in the N4 container. The target UPF 2 sends, to the target UPF 1, the received data that needs to be sent by the UE 2 to the UE 1, and the target UPF 1 sends the data to the UE 1. In this case, a downlink path of the UE 2 is switched as follows: UE 2 -> target base station 2 -> target UPF 2 -> target UPF 1 -> target base station 1 -> UE 1. In this case, switching of the downlink path of the UE 1 is completed.

Step 1019: The SMF sends the Nx tunnel information of the target UPF 2 and the end marker indication to the target UPF 1. Correspondingly, the target UPF 1 receives the Nx tunnel information of the target UPF 2 and the end marker indication.

The end marker indication indicates the target UPF 1 to send the end marker through the source path (that is, to the source UPF 2) before sending data to the target UPF 2.

The target UPF 1 sends the end marker through the source path (that is, to the source UPF 2) according to the end marker indication. Subsequently, the target UPF 1 sends, to the target UPF 2, the received data that needs to be sent by the UE 1 to the UE 2, and the target UPF 2 sends the data to the UE 2. In this case, an uplink path of the UE 1 is switched as follows: UE 1 -> target base station 1 -> target UPF 1 -> target UPF 2 -> target base station 2 -> UE 2. In this case, switching of the uplink path of the UE 1 is completed.

It needs to be noted that this embodiment is described by using an example in which the UE 1 and the UE 2 are served by a same AMF and a same SMF. This embodiment is also applicable to a scenario in which the UE 1 and the UE 2 are served by different SMFs and/or different AMFs. In this embodiment, in step 1019, the SMF notifies the target UPF 1 to switch the path and send the end marker, and the target UPF 1 does not send any data packet to the source UPF 2 after sending the end marker. After receiving the end marker through a forwarding tunnel between the source base station 2 and the target base station 2, the target base station 2 sends, to the UE 2, downlink data of the UE 2 received from the target UPF 2. In addition, a sending time of a data packet received through the forwarding tunnel is earlier than a sending time of a data packet received from the target UPF 2. Therefore, the data received through the forwarding tunnel should be first sent to the UE 2, to ensure in-order transmission of the data.

FIG. 11A, FIG. 11B, and FIG. 11C are a schematic flowchart of a switching method according to an embodiment of this application. This embodiment may be applied to a scenario in which a UE 1 and a UE 2 are switched across satellites at the same time due to satellite movement. In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2. The embodiment in FIG. 11A, FIG. 11B, and FIG. 11C is an improvement to the embodiment in FIG. 6A and FIG. 6B. The embodiment corresponding to FIG. 11A, FIG. 11B, and FIG. 11C is also a specific implementation of the embodiment in FIG. 7(d)-1 and FIG. 7(d)-2.

This embodiment may be applied to a data detour problem caused when the UE 1 and the UE 2 move across satellites at the same time.

The procedure includes the following steps.

Steps 1101 to 1103 are the same as steps 801 to 803.

Step 1103a: An SMF sends Nx tunnel information of the target UPF 2 to the source UPF 1. Correspondingly, the source UPF 1 receives the Nx tunnel information of the target UPF 2.

Before step 1103a, the UE 2 is also switched, and the SMF has received the Nx tunnel information of the target UPF 2 after the switching.

The SMF does not know that the UE 1 is being switched, and the SMF considers that the UE 1 is still served by the source UPF 1. Therefore, after receiving the Nx tunnel information of the target UPF 2 of the UE 2 after the switching, the SMF sends the Nx tunnel information of the target UPF 2 to the source UPF 1.

In the embodiment in FIG. 9A, FIG. 9B, and FIG. 9C, when the switching of the source UPF 1 is not completed, the source UPF 1 rejects the Nx tunnel information of the target UPF 2. For details, refer to steps 906a and 906b. However, in the embodiment in FIG. 11A, FIG. 11B, and FIG. 11C, when the switching of the source UPF 1 is not completed, the source UPF 1 does not reject the Nx tunnel information of the target UPF 2. Subsequently, the source UPF 1 uses the Nx tunnel information of the target UPF 2 to send an uplink data packet of the UE 1 to the target UPF 2, and no longer sends the uplink data packet to the source UPF 2.

In addition, in a possible implementation, the SMF records a timestamp at which Nx tunnel information of the target UPF 1 is sent to the source UPF 1. After receiving a response message for step 1103a, the SMF notifies the source UPF 2 of the UE 2 to send an end marker to the target base station 2 of the UE 2. That is, the end marker received by the target base station 2 of the UE 2 is sent by the source UPF 2. However, in the foregoing embodiments, the end marker is sent by the source UPF 1 or the target UPF 1 of the peer UE (namely, the UE 1). When determining that the UE 1 side no longer sends data through a source path, the SMF notifies the source UPF 2 to send the end marker. As long as a data packet sent by the source UPF 1 to the source UPF 2 is earlier than the end marker that the SMF notifies the source UPF 2 to send, an out-of-order problem does not occur. The SMF first notifies the source UPF 1 to switch the path. Therefore, it may be considered that generally, the data packet sent by the source UPF 1 to the source UPF 2 is earlier than the end marker that the SMF notifies the source UPF 2 to send.

Step 1103a may be performed at any time before step 1106a. This embodiment is described by using an example in which step 1103a is performed after step 1103 and before step 1104.

Steps 1104 to 1106 are the same as steps 804 to 806.

Step 1106a: The target base station 1 sends a switch preparation request message to an AMF of the UE 1. Correspondingly, the AMF receives the switch preparation request message.

The switch preparation request message includes an identifier of the target base station 1 and an N4 container corresponding to each PDU session of the UE 1. An N4 message is encapsulated in the N4 container. The N4 message may be a PFCP session modification request message. The PFCP session modification request message is generated by the target UPF 1 for the PDU session, and is used to notify the SMF that a UPF corresponding to the PDU session is switched. The PFCP session modification request message includes N4 session information (for example, an F-SEID of the SMF and/or a node ID of the SMF), N4 interface information of the target UPF 1 (for example, an F-SEID of the target UPF 1 and/or a node ID of the target UPF 1, where the F-SEID of the target UPF 1 uniquely identifies the session in the target UPF 1), and target UPF 1's Nx tunnel information allocated by the target UPF 1 to the PDU session that are all corresponding to the PDU session. The Nx tunnel information of the target UPF 1 is sent to the target UPF 2, and is used by the target UPF 2 to send data of the UE 2 to the target UPF 1 based on the Nx tunnel information of the target UPF 1. Optionally, the PFCP session modification request message may further include N3 tunnel information of the target UPF 1 corresponding to the PDU session. Optionally, the PFCP session modification request message may further include N3 tunnel information of the target base station 1 corresponding to the PDU session.

In a possible implementation, the N4 container further includes Nx tunnel information of the source UPF 2.

Step 1106b: The AMF sends a session modification request message to the SMF. Correspondingly, the SMF receives the session modification request message.

The session modification request message includes an N4 container corresponding to a PDU session and one piece of indication information. The indication information indicates that the procedure is a switch preparation procedure.

Step 1106c: The SMF sends a session modification response message to the AMF. Correspondingly, the AMF receives the session modification response message.

The session modification response message includes an N4 container. The N4 container includes a PFCP session modification response message. The N4 container needs to be sent to the target UPF 1.

The SMF checks the timestamp at which the Nx tunnel information of the target UPF 2 is sent to the source UPF 1 last time. If a difference between the timestamp and a current moment is less than a pre-determined threshold, it indicates that the source UPF 1 receives an updated Nx tunnel message after step 1102, that is, the tunnel information of the target UPF 2. Therefore, when the Nx tunnel information of the source UPF 2 received by the target UPF 1 has expired, the SMF includes the Nx tunnel information of the target UPF 2 in the N4 container, so that the target UPF 1 stores the Nx tunnel information of the target UPF 2.

Alternatively, the SMF may not determine, based on a timestamp, whether the Nx tunnel information of the target UPF 2 is sent to the target UPF 1, but includes locally stored latest Nx tunnel information corresponding to the UE 2 in the N4 container. In this way, regardless of whether the target UPF 1 receives the latest Nx tunnel information corresponding to the UE 2 from the source UPF 1, the target UPF 1 can receive the latest Nx tunnel information corresponding to the UE 2.

Alternatively, if the N4 container sent by the target UPF 1 to the SMF includes the Nx tunnel information of the UPF 2 of the UE 2, the SMF determines whether locally stored Nx tunnel information of the UPF 2 is the same as the Nx tunnel information of the UPF 2 in the N4 container. If the locally stored Nx tunnel information of the UPF 2 is different from the Nx tunnel information of the UPF 2 in the N4 container, the N4 container of the session modification response message carries the latest Nx tunnel information corresponding to the UE 2.

Step 1106d: The AMF sends a switch preparation response message to the target base station 1. Correspondingly, the target base station 1 receives the switch preparation response message.

The AMF obtains the N4 container from the session modification response message, and then sends the switch preparation response message to the target base station 1. The switch preparation response message includes the N4 container.

Step 1106e: The target base station 1 sends the N4 container to the target UPF 1. Correspondingly, the target UPF 1 receives the N4 container.

If the N4 container includes the latest Nx tunnel information corresponding to the UE 2, that is, the Nx tunnel information of the target UPF 2, the target UPF 1 stores the Nx tunnel information, and subsequently uses the Nx tunnel information to send an uplink data packet of the UE 1.

Steps 1107 to 1111 are the same as steps 807 to 811.

It needs to be noted that the path switch request message in step 1110 may not carry the N4 container. This is because the switch preparation request message in step 1106a already carries the N4 container. If the target UPF 1 does not have content that needs to be updated, the target UPF 1 does not need to carry the N4 container.

Step 1112: The SMF sends a session modification request message to the target UPF 2. Correspondingly, the target UPF 2 receives the session modification request message.

The session modification request message includes Nx tunnel information of the target UPF 1 corresponding to a PDU session of the UE 1.

The SMF obtains, from the N4 container, the Nx tunnel information of the target UPF 1 corresponding to the PDU session of the UE 1, and sends, to the target UPF 2, the Nx tunnel information of the target UPF 1 corresponding to the PDU session of the UE 1. In this way, the target UPF 2 updates Nx tunnel information corresponding to the PDU session from Nx tunnel information of the source UPF 1 corresponding to the PDU session to the Nx tunnel information of the target UPF 1 corresponding to the PDU session. Subsequently, the target UPF 2 directly sends, to the target UPF 1, received data that needs to be sent by the UE 2 to the UE 1, that is, without detour through the source UPF 1 and the source base station 1.

Optionally, the session modification request message may be an N4 session modification request message, namely, a PFCP Session Modification Request message.

It needs to be noted that if an SMF corresponding to the target UPF 1 is different from an SMF corresponding to the target UPF 2, the SMF corresponding to the target UPF 1 sends, to the SMF corresponding to the target UPF 2, the Nx tunnel information of the target UPF 1 corresponding to the PDU session of the UE 1, and then the SMF corresponding to the target UPF 2 sends, to the target UPF 2, the Nx tunnel information of the target UPF 1 corresponding to the PDU session of the UE 1.

Step 1113 is the same as step 813.

Step 1114: After the SMF determines that the Nx tunnel information of the target UPF 1 is sent to the target UPF 2, the SMF sends an end marker indication to the source UPF 1. Correspondingly, the source UPF 1 receives the end marker indication.

The end marker indication indicates the source UPF 1 to send an end marker to the source base station 1. The end marker is forwarded by the source base station 1 to the target base station 1. In this case, the target base station 1 learns that no data is sent from the source UPF 1 to the target base station 1. Therefore, the target base station 1 may start to process data from the target UPF 1.

According to the foregoing solution, when the UE 2 is switched, the SMF sends, to the source UPF 1 in a timely manner, the latest Nx tunnel information corresponding to the UE 2. Therefore, the source UPF 1 may send data of the UE 1 to the target UPF 2 based on the latest Nx tunnel information. This avoids forwarding data through a forwarding path between the source base station 2 and the target base station 2 after the data is sent to the source UPF 2, thereby reducing data detour. In addition, in this solution, after determining that the communication peer end of the UE has switched from the source path to a target path, the SMF notifies the source UPF of the UE to send the end marker, thereby avoiding a data packet out-of-order problem.

FIG. 12A, FIG. 12B, and FIG. 12C are a schematic flowchart of a switching method according to an embodiment of this application. This embodiment may be applied to a scenario in which a UE 1 and a UE 2 are switched across satellites at the same time due to satellite movement. In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2. The embodiment in FIG. 12A, FIG. 12B, and FIG. 12C is an improvement to the embodiment in FIG. 6A and FIG. 6B. The embodiment corresponding to FIG. 12A, FIG. 12B, and FIG. 12C is also a specific implementation of the embodiment in FIG. 7(e)-1 and FIG. 7(e)-2.

This embodiment may be applied to a data detour problem caused when the UE 1 and the UE 2 move across satellites at the same time.

The procedure includes the following steps.

Steps 1201 to 1206 are the same as steps 801 to 806.

Step 1206a is the same as step 1106a.

Step 1206b is the same as step 1106b.

Step 1206c is the same as step 1106c.

Step 1206d: An AMF sends a switch preparation response message to the target base station 1. Correspondingly, the target base station 1 receives the switch preparation response message.

The switch preparation response message includes an N4 container. The N4 container includes a PFCP session modification response message. The N4 container needs to be sent to the target UPF 1.

Step 1206e: The target base station 1 sends the N4 container to the target UPF 1. Correspondingly, the target UPF 1 receives the N4 container.

In this case, an SMF does not receive Nx tunnel information of the target UPF 2 of the UE 2. Therefore, the N4 container in steps 1206c, 1206d, and 1206e does not include the Nx tunnel information of the target UPF 2.

At any moment before step 1212 and after step 1206e, if the SMF receives latest Nx tunnel information corresponding to the UE 2, that is, the Nx tunnel information of the target UPF 2, the SMF immediately sends, to the target UPF 1 and the source UPF 1, the latest Nx tunnel information corresponding to the UE 2, as shown in step A in FIG. 12B. The SMF may use an F-SEID of the target UPF 1 in the N4 container received in step 1206b to directly send a PFCP session modification request message to the target UPF 1 (that is, not through the target base station 1), to notify the target UPF 1 to use the Nx tunnel information of the target UPF 2, that is, send uplink data of the UE 1 to the target UPF 2.

In this case, the UE 1 may further continue to send the uplink data through the source base station 1. Therefore, the SMF also needs to send the Nx tunnel information of the target UPF 2 to the source UPF 1. In this way, the source UPF 1 may also directly use the Nx tunnel information of the target UPF 2, that is, send the uplink data of the UE 1 to the target UPF 2.

Steps 1207 to 1209 are the same as steps 807 to 809.

Step 1210: After the SMF determines that both the source UPF 1 and the target UPF 1 update the Nx tunnel information of the target UPF 2, the SMF sends an end marker indication to the source UPF 2. Correspondingly, the source UPF 2 receives the end marker indication.

The end marker indication indicates the source UPF 2 to send an end marker to the source base station 2. The source UPF 2 sends the end marker to the source base station 2. The end marker is forwarded by the source base station 2 to the target base station 2. In this case, the target base station 2 learns that no data is sent from the source UPF 2 to the target base station 2. Therefore, the target base station 2 may start to process data sent by a UPF 1 (the source UPF 1 or the target UPF 1).

Steps 1211 to 1215 are the same as steps 1110 to 1114.

According to the foregoing solution, when the UE 2 is switched, the SMF sends, to the source UPF 1 in a timely manner, the latest Nx tunnel information corresponding to the UE 2. Therefore, the source UPF 1 may send data of the UE 1 to the target UPF 2 based on the latest Nx tunnel information. This avoids forwarding data through a forwarding path between the source base station 2 and the target base station 2 after the data is sent to the source UPF 2, thereby reducing data detour.

FIG. 13A, FIG. 13B, and FIG. 13C are a schematic flowchart of a switching method according to an embodiment of this application. This embodiment may be applied to a scenario in which a UE 1 and a UE 2 are switched across satellites at the same time due to satellite movement. In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2. The embodiment in FIG. 13A, FIG. 13B, and FIG. 13C is an improvement to the embodiment in FIG. 6A and FIG. 6B.

This embodiment may be applied to a data detour problem caused when the UE 1 and the UE 2 move across satellites at the same time.

The procedure includes the following steps.

Steps 1301 to 1306 are the same as steps 801 to 806.

Step 1306a is the same as step 1206a.

Step 1306b is the same as step 1206b.

Step 1306c is the same as step 1206c.

Step 1306d is the same as step 1206d.

Step 1306e is the same as step 1206e.

In this case, an SMF does not receive Nx tunnel information of the target UPF 2 of the UE 2. Therefore, the N4 container in steps 1306c, 1306d, and 1306e does not include the Nx tunnel information of the target UPF 2.

Steps 1307 to 1309 are the same as steps 807 to 809.

Step 1310: The target base station 1 sends a path switch request message (PATH SWITCH REQUEST) to an AMF. Correspondingly, the AMF receives the path switch request message.

The path switch request message includes an identifier of a PDU session of the UE 1.

Step 1311: The UE 2 is also switched, and the target base station 2 of the UE 2 sends a path switch request message (PATH SWITCH REQUEST) to the AMF. Correspondingly, the AMF receives the path switch request message.

The path switch request message includes an identifier of a PDU session of the UE 2.

Step 1312: The AMF sends a session modification request message to the SMF. Correspondingly, the SMF receives the session modification request message.

The SMF herein is an SMF corresponding to a PDU session of the UE 1. Different PDU sessions of the UE 1 may correspond to a same SMF, or may correspond to different SMFs. This is not limited in this application.

Optionally, the session modification request message may be an Nsmf_PDUSession_SMContextUpdate Request message.

This message indicates the SMF to switch the path.

Step 1313: The SMF sends Nx tunnel information of the target UPF 1 to the target UPF 2 and the source UPF 2.

Step 1314: The SMF sends an end marker indication to the source UPF 1. Correspondingly, the source UPF 1 receives the end marker indication.

The end marker indication indicates the source UPF 1 to send an end marker to the source base station 1. The end marker is forwarded by the source base station 1 to the target base station 1. In this case, the target base station 1 learns that no data is sent from the source UPF 1 to the target base station 1. Therefore, the target base station 1 may start to process data from the target UPF 1.

Herein, assume that before step 1314, all data packets sent by the source UPF 2 or the target UPF 2 to the source UPF 1 already arrive at the source UPF 1.

Step 1315: The SMF sends a session modification response message to the AMF. Correspondingly, the AMF receives the session modification response message.

The session modification response message includes an N4 container. The N4 container includes a PFCP session modification response message. The N4 container needs to be sent to the target UPF 1.

Step 1316: The AMF sends a session modification request message to the SMF. Correspondingly, the SMF receives the session modification request message.

The SMF herein is an SMF corresponding to a PDU session of the UE 2. Different PDU sessions of the UE 2 may correspond to a same SMF, or may correspond to different SMFs. This is not limited in this application.

Optionally, the session modification request message may be an Nsmf_PDUSession_SMContextUpdate Request message.

This message indicates the SMF to switch the path.

Step 1317: The AMF sends a path switch response message (PATH SWITCH REQUESTACK) to the target base station 1. Correspondingly, the target base station 1 receives the path switch response message.

Step 1318. The SMF sends the Nx tunnel information of the target UPF 2 to the target UPF 1. Correspondingly, the target UPF 1 receives the Nx tunnel information of the target UPF 2.

Step 1319: The SMF sends an end marker indication to the source UPF 2. Correspondingly, the source UPF 2 receives the end marker indication.

The end marker indication indicates the source UPF 2 to send an end marker to the source base station 2. The source UPF 2 sends the end marker to the source base station 2. The end marker is forwarded by the source base station 2 to the target base station 2. In this case, the target base station 2 learns that no data is sent from the source UPF 2 to the target base station 2. Therefore, the target base station 2 may start to process data sent by a UPF 1 (the source UPF 1 or the target UPF 1).

Herein, assume that after step 1318, all data sent by the target UPF 1 to the source UPF 2 already arrives at the source UPF 2.

Step 1320: The SMF sends a session modification response message to the AMF. Correspondingly, the AMF receives the session modification response message.

The session modification response message is a response to step 1316.

Step 1321: The AMF sends a path switch response message (PATH SWITCH REQUEST ACK) to the target base station 2. Correspondingly, the target base station 2 receives the path switch response message.

According to the foregoing solution, when the UE 2 is switched, the SMF sends, to the source UPF 1 in a timely manner, latest Nx tunnel information corresponding to the UE 2. Therefore, the source UPF 1 may send data of the UE 1 to the target UPF 2 based on the latest Nx tunnel information. This avoids forwarding data through a forwarding path between the source base station 2 and the target base station 2 after the data is sent to the source UPF 2, thereby reducing data detour.

FIG. 14A, FIG. 14B, and FIG. 14C are a schematic flowchart of a switching method according to an embodiment of this application. This embodiment may be applied to a scenario in which a UE 1 and a UE 2 are switched across satellites at the same time due to satellite movement. In this procedure, a satellite serving the UE 1 is switched. Before switching, a source base station 1 and a source UPF 1 on a satellite 1 provide services for the UE 1. After the switching, a target base station 1 and a target UPF 1 on a satellite 2 provide services for the UE 1. A satellite serving the UE 2 is also switched. Before switching, a source base station 2 and a source UPF 2 on a satellite 3 provide services for the UE 2. After the switching, a target base station 2 and a target UPF 2 on a satellite 4 provide services for the UE 2. The embodiment in FIG. 14A, FIG. 14B, and FIG. 14C is an improvement to the embodiment in FIG. 6A and FIG. 6B. The embodiment corresponding to FIG. 14A, FIG. 14B, and FIG. 14C is also a specific implementation of the embodiment in FIG. 7(f).

In this embodiment, a switching procedure is not optimized. In a switching procedure of a UE, both uplink and downlink data of the UE is sent through a source UPF. In a path switching procedure, an SMF reselects a UPF deployed on a same satellite with a target base station as a target UPF, and switches from a UPF that currently corresponds to the UE to the UPF.

The procedure includes the following steps.

Step 1401: After the source base station 1 determines that the UE 1 needs to be switched, the source base station 1 sends a switch request message to a target base station 1. Correspondingly, the target base station 1 receives the switch request message.

The switch request message includes N3 tunnel information of the source UPF 1.

Step 1402: The target base station 1 sends a switch response message to the source base station 1. Correspondingly, the source base station 1 receives the switch response message.

In the process of steps 1401 and 1402, a forwarding tunnel between the source base station 1 and the target base station 1 may be established. Therefore, downlink data sent to the UE 1 may be sent by the source base station 1 to the target base station 1 through the forwarding tunnel, and the target base station 1 temporarily buffers the downlink data.

Step 1403: The source base station 1 sends a switch command to the UE 1. Correspondingly, the UE 1 receives the switch command.

The switch command may be an RRC reconfiguration message.

Step 1404: The UE 1 performs synchronization with the target base station 1.

After receiving the switch command, the UE 1 initiates a synchronization process with the target base station 1, to access the target base station 1.

Step 1405: The UE 1 sends a switch complete indication to the target base station 1. Correspondingly, the target base station 1 receives the switch complete indication.

The switch complete indication may be an RRC reconfiguration complete message.

In this case, the target base station 1 may send downlink data to the UE 1.

The UE 1 may send uplink data through the target base station 1. The target base station 1 may use the received N3 tunnel information of the source UPF 1 in step 1401 to send the uplink data to the source UPF 1, and then the source UPF 1 sends the uplink data to the source UPF 2.

Step 1406: The target base station 2 sends a path switch request message (PATH SWITCH REQUEST) to an AMF. Correspondingly, the AMF receives the path switch request message.

The UE 2 is also switched across satellites. For a cross-satellite switching procedure of the UE 2, refer to steps 1401 to 1404. Then, the target base station 2 of the UE 2 performs step 1406.

The path switch request includes information used for UPF selection, for example, may be identification information of the target base station 2 or identification information of the satellite 4. Alternatively, the path switch request includes identification information of the target UPF 2.

In addition, the path switch request further includes N3 tunnel information of the target base station 2.

Step 1407: The AMF sends a session modification request message to an SMF. Correspondingly, the SMF receives the session modification request message.

The session modification request message includes the information used for UPF selection or the identification information of the target UPF 2.

In addition, the path switch request further includes the N3 tunnel information of the target base station 2.

Optionally, the session modification request message may be an Nsmf_PDUSession_SMContextUpdate Request message.

Step 1407a: The SMF selects the target UPF 2.

For example, if the session modification request message includes the information used for UPF selection and the information used for UPF selection is the identification information of the target base station 2, the SMF may send a query request to an NRF, where the query request carries the identification information of the target base station 2, and the NRF returns the identification information of the target UPF 2 deployed on a same satellite with the target base station 2 to the SMF.

For another example, if the session modification request message includes the information used for UPF selection and the information used for UPF selection is the identification information of the satellite 4, the SMF may send a query request to the NRF, where the query request carries the identification information of the satellite 4, and the NRF returns the identification information of the target UPF 2 deployed on the satellite 4 to the SMF.

For another example, if the session modification request message includes the identification information of the target UPF 2, the SMF may directly select the target UPF 2.

Step 1408: The target base station 1 sends a path switch request message (PATH SWITCH REQUEST) to the AMF. Correspondingly, the AMF receives the path switch request message.

The path switch request includes the information used for UPF selection, for example, may be identification information of the target base station 1 or identification information of the satellite 2. Alternatively, the path switch request includes identification information of the target UPF 1.

In addition, the path switch request further includes N3 tunnel information of the target base station 1.

Step 1409a: The SMF sends a PFCP session establishment request message to the target UPF 2. Correspondingly, the target UPF 2 receives the PFCP session establishment request message.

The PFCP session establishment request message includes Nx tunnel information of the source UPF 1 and the N3 tunnel information of the target base station 2.

Because the SMF does not receive Nx tunnel information of the target UPF 1, the SMF still sends the Nx tunnel information of the source UPF 1 to the target UPF 2.

Step 1409b: The target UPF 2 sends a PFCP session establishment response message to the SMF. Correspondingly, the SMF receives the PFCP session establishment response message.

The PFCP session establishment response message includes N3 tunnel information of the target UPF 2 and Nx tunnel information of the target UPF 2.

Step 1410: The AMF sends a session modification request message to the SMF. Correspondingly, the SMF receives the session modification request message.

The session modification request message includes the information used for UPF selection or the identification information of the target UPF 1.

In addition, the path switch request further includes the N3 tunnel information of the target base station 1.

Optionally, steps 1410 and 1409b may be performed concurrently. That is, the messages arrive at the SMF almost at the same time.

Optionally, the session modification request message may be an Nsmf_PDUSession_SMContextUpdate Request message.

Step 1410a: The SMF selects the target UPF 1.

For example, if the session modification request message includes the information used for UPF selection and the information used for UPF selection is the identification information of the target base station 1, the SMF may send a query request to an NRF, where the query request carries the identification information of the target base station 1, and the NRF returns the identification information of the target UPF 1 deployed on a same satellite with the target base station 1 to the SMF.

For another example, if the session modification request message includes the information used for UPF selection and the information used for UPF selection is the identification information of the satellite 2, the SMF may send a query request to the NRF, where the query request carries the identification information of the satellite 2, and the NRF returns the identification information of the target UPF 1 deployed on the satellite 2 to the SMF.

For another example, if the session modification request message includes the identification information of the target UPF 1, the SMF may directly select the target UPF 1.

Step 1411: The SMF sends an N4 update message to the source UPF 1. Correspondingly, the source UPF 1 receives the N4 update message.

The N4 update message includes the Nx tunnel information of the target UPF 2 and an end marker indication.

According to a principle of preferentially updating an Nx tunnel, even if the SMF already receives the switching of the UE 1, the SMF suspends processing of the switching procedure of the UE 1 and preferentially sends the Nx tunnel information of the target UPF 2 to the source UPF 1. To be specific, if a path switching procedure of the UE 1 is being performed, after the SMF receives the Nx tunnel information of the target UPF of the UE 2 and before the SMF sends a session update response message (step 1417), the SMF sends the Nx tunnel information of the target UPF 2 and the end marker indication to the source UPF 1.

The end marker indication indicates the source UPF 1 to send an end marker through a source path (through the source UPF 2). The source UPF 1 sends the end marker through the source path (through the source UPF 2) according to the end marker indication. The source UPF 1 starts to send, through a target path (through the target UPF 2), received data (that is, downlink data of the UE 2) that needs to be sent by the UE 1 to the UE 2. In this case, the downlink data of the UE 2 is directly sent to the UE 2 through the target UPF 2 and the target base station 2, and is not forwarded through the source UPF 2 and the source base station 2.

Step 1412a: The SMF sends a PFCP session establishment request message to the target UPF 1. Correspondingly, the target UPF 1 receives the PFCP session establishment request message.

The PFCP session establishment request message includes the N3 tunnel information of the target base station 1 and the Nx tunnel information of the target UPF 2.

Step 1412b: The target UPF 1 sends a PFCP session establishment response message to the SMF. Correspondingly, the SMF receives the PFCP session establishment response message.

The PFCP session establishment response message includes N3 tunnel information of the target UPF 1 and Nx tunnel information of the target UPF 1.

Step 1413: The SMF sends an N4 update message to the source UPF 2. Correspondingly, the source UPF 2 receives the N4 update message.

The N4 update message includes the Nx tunnel information of the target UPF 1 and the end marker indication.

Path switching of the UE 2 is not completed, and the target base station 2 still sends uplink data of the UE 2 to the source UPF 2. Therefore, the SMF suspends a path switching procedure of the UE 2, and sends the Nx tunnel information of the target UPF 1 to the source UPF 2. To be specific, if a path switching procedure of the UE 2 is being performed, after the SMF receives the Nx tunnel information of the target UPF 1 and before the SMF sends a session update response message (step 1415), the SMF sends the Nx tunnel information of the target UPF 1 and the end marker indication to the source UPF 2.

The end marker indication indicates the source UPF 2 to send the end marker through the source path (through the source UPF 1). The source UPF 2 sends the end marker through the source path (through the source UPF 1) according to the end marker indication. The source UPF 2 starts to send, through the target path (through the target UPF 1), received data (that is, downlink data of the UE 1) that needs to be sent by the UE 2 to the UE 1. In this case, the source UPF 2 starts to send, through a new path (through the target UPF 2), data that is received from the UE 2 and that needs to be sent to the UE 1, that is, the downlink data of the UE 1.

Step 1414: The SMF sends the Nx tunnel information of the target UPF 1 to the target UPF 2. Correspondingly, the target UPF 2 receives the Nx tunnel information of the target UPF 1.

In step 1409a, the Nx tunnel information of the source UPF 1 is sent to the target UPF 2. Therefore, herein, the SMF needs to notify the target UPF 2 to update Nx tunnel information.

Step 1415: The SMF sends a session modification response message to the AMF. Correspondingly, the AMF receives the session modification response message.

The session modification response message is a session modification response for the UE 2.

The session modification response message includes the N3 tunnel information of the target UPF 2.

Optionally, the session modification response message may be an Nsmf_PDUSession_SMContextUpdate Response message.

Step 1416: The AMF sends a path switch response message (PATH SWITCH REQUEST ACK) to the target base station 2. Correspondingly, the target base station 2 receives the path switch response message.

The path switch response message includes the N3 tunnel information of the target UPF 2.

In this case, the data sent by the UE 2 to the UE 1 is directly sent by the target base station 2 to the target UPF 2, without detour through the source UPF 2.

Step 1417: The SMF sends a session modification response message to the AMF. Correspondingly, the AMF receives the session modification response message.

The session modification response message is a session modification response for the UE 1.

The session modification response message includes the N3 tunnel information of the target UPF 1.

Optionally, the session modification response message may be an Nsmf_PDUSession_SMContextUpdate Response message.

Step 1418: The AMF sends a path switch response message to the target base station 1. Correspondingly, the target base station 1 receives the path switch response message.

The path switch response message includes the N3 tunnel information of the target UPF 1.

According to the foregoing solution, if the SMF receives new Nx tunnel information in a path switching procedure of a UE, the SMF first suspends the path switching procedure, preferentially sends the new Nx tunnel information to a source UPF. After the Nx path switching is completed, the SMF continues the path switching procedure. Therefore, if the UEs at two communication ends are concurrently switched, Nx tunnel switching is earlier than UPF switching of the UE, which is equivalent to decoupling the Nx tunnel switching from the UPF switching, thereby avoiding a case in which some data packets are lost or an out-of-order problem occurs because the UPF switching is performed at the same time when the Nx path switching is performed.

It may be understood that, to implement the functions in the foregoing embodiments, the session management network element, the user plane network element, or the access network device includes a corresponding hardware structure and/or software module for performing each function. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on a particular application scenario and a design constraint of the technical solutions.

FIG. 15 and FIG. 16 are schematic diagrams of structures of possible communication apparatuses according to embodiments of this application. These communication apparatuses may be configured to implement a function of the session management network element, the user plane network element, or the access network device in the method embodiments in FIG. 7(a) to FIG. 7(f) and FIG. 8A and FIG. 8B to FIG. 14A, FIG. 14B, and FIG. 14C, and therefore can also achieve beneficial effects of the foregoing method embodiments. In embodiments of this application, the communication apparatus may be a session management network element, a user plane network element, or an access network device, or may be a module (for example, a chip) used in a session management network element, a user plane network element, or an access network device.

As shown in FIG. 15, a communication apparatus 1500 includes a processing unit 1510 and a transceiver unit 1520. The communication apparatus 1500 is configured to implement a function of the session management network element, the user plane network element, or the access network device in the foregoing method embodiments.

In a first embodiment, the communication apparatus is configured to perform a function of a session management network element. The transceiver unit 1520 is configured to: receive, through a target access network device, information that is from a target user plane network element of a first terminal device and that indicates that a user plane network element of the first terminal device is switched, where the information includes tunnel information of the target user plane network element of the first terminal device; and send the tunnel information of the target user plane network element of the first terminal device to a user plane network element of a second terminal device, to update user plane network element information of the first terminal device in the user plane network element of the second terminal device, where the tunnel information of the target user plane network element of the first terminal device is used to send downlink data of the first terminal device to the target user plane network element of the first terminal device.

In a possible implementation, the transceiver unit 1520 is further configured to send an end marker indication to the user plane network element of the second terminal device. The end marker indication indicates to send an end marker to a source user plane network element of the first terminal device.

In a possible implementation, the second terminal device is switched, and the user plane network element of the second terminal device is a target user plane network element of the second terminal device; and the transceiver unit 1520 is further configured to: before receiving, through the target access network device, the information that is from a target user plane network element of a first terminal device and that indicates that a user plane network element of the first terminal device is switched, receive tunnel information of the target user plane network element of the second terminal device; send the tunnel information of the target user plane network element of the second terminal device to the source user plane network element of the first terminal device, to update user plane network element information of the second terminal device in the source user plane network element of the first terminal device; and receive an response message for rejecting the update from the source user plane network element of the first terminal device.

In a possible implementation, the transceiver unit 1520 is further configured to: after receiving, through the target access network device, the information that is from a target user plane network element of a first terminal device and that indicates that a user plane network element of the first terminal device is switched, send the tunnel information of the target user plane network element of the second terminal device to the target user plane network element of the first terminal device.

In a possible implementation, the second terminal device is switched, and the user plane network element of the second terminal device is a target user plane network element of the second terminal device; and the transceiver unit 1520 is further configured to: after receiving, through the target access network device, the information that is from a target user plane network element of a first terminal device and that indicates that a user plane network element of the first terminal device is switched, receive tunnel information of the target user plane network element of the second terminal device; and send the tunnel information of the target user plane network element of the second terminal device to the target user plane network element of the first terminal device.

In a possible implementation, the transceiver unit 1520 is further configured to send an end marker indication to the target user plane network element of the first terminal device. The end marker indication indicates to send an end marker to a source user plane network element of the second terminal device.

In a possible implementation, the transceiver unit 1520 is configured to receive a session modification request from a mobility management network element. The session modification request includes the information indicating that a user plane network element of the first terminal device is switched.

In a possible implementation, the second terminal device is switched, and the user plane network element of the second terminal device is a target user plane network element of the second terminal device; and the transceiver unit 1520 is further configured to: before receiving, through the target access network device, the information that is from a target user plane network element of a first terminal device and that indicates that a user plane network element of the first terminal device is switched, receive tunnel information of the target user plane network element of the second terminal device; and send the tunnel information of the target user plane network element of the second terminal device to a source user plane network element of the first terminal device.

In a possible implementation, the transceiver unit 1520 is further configured to send an end marker indication to the source user plane network element of the first terminal device. The end marker indication indicates to send an end marker to a source access network device of the first terminal device.

In a possible implementation, the transceiver unit 1520 is further configured to send an end marker indication to a source user plane network element of the second terminal device. The end marker indication indicates to send an end marker to a source access network device of the second terminal device.

In a possible implementation, the transceiver unit 1520 is further configured to: after receiving, through the target access network device, the information that is from a target user plane network element of a first terminal device and that indicates that a user plane network element of the first terminal device is switched, send the tunnel information of the target user plane network element of the second terminal device to the target user plane network element of the first terminal device.

In a possible implementation, the transceiver unit 1520 is further configured to: receive tunnel information of the user plane network element of the second terminal device from the target user plane network element of the first terminal device; and if the tunnel information of the user plane network element of the second terminal device from the target user plane network element of the first terminal device is different from the tunnel information that is of the user plane network element of the second terminal device and that is stored by the session management network element, send the tunnel information of the target user plane network element of the second terminal device to the target user plane network element of the first terminal device.

In a possible implementation, the transceiver unit 1520 is further configured to: after receiving, through the target access network device, the information that is from a target user plane network element of a first terminal device and that indicates that a user plane network element of the first terminal device is switched, receive tunnel information of a target user plane network element of the second terminal device; and send the tunnel information of the target user plane network element of the second terminal device to a source user plane network element of the first terminal device and the target user plane network element of the first terminal device.

In a possible implementation, the transceiver unit 1520 is further configured to send an end marker indication to the source user plane network element of the first terminal device. The end marker indication indicates to send an end marker to a source access network device of the first terminal device.

In a possible implementation, the transceiver unit 1520 is configured to receive a message that is from a mobility management network element or the target access network device and that indicates that the first terminal device is being switched. The message includes the information indicating that a user plane network element of the first terminal device is switched.

In a second embodiment, the communication apparatus is configured to perform a function of a target user plane network element of a first terminal device. The transceiver unit 1520 is configured to: receive first tunnel information of a user plane network element of a second terminal device from a source user plane network element of the first terminal device through a target access network device, where the first tunnel information of the user plane network element of the second terminal device is used to send downlink data of the second terminal device to the user plane network element of the second terminal device; and send first tunnel information of the target user plane network element of the first terminal device to a session management network element through the target access network device, where the first tunnel information of the target user plane network element of the first terminal device is used to send downlink data of the first terminal device to the target user plane network element of the first terminal device.

In a possible implementation, the first tunnel information of the user plane network element of the second terminal device is included in a context of a session of the first terminal device. The context of the session further includes at least one of a session endpoint identifier of the session management network element, a packet detection rule corresponding to the session, and identification information of the session management network element. The session endpoint identifier of the session management network element identifies the session in the session management network element. The packet detection rule corresponding to the session is used by the target user plane network element of the first terminal device to process an uplink data packet and/or a downlink data packet of the first terminal device.

In a possible implementation, the session corresponds to a local area network LAN group. The transceiver unit 1520 is further configured to receive a packet detection rule corresponding to the LAN group from the source user plane network element of the first terminal device through the target access network device. The packet detection rule corresponding to the LAN group is used by the target user plane network element to process a data packet sent to another UE in the LAN group.

In a possible implementation, the transceiver unit 1520 is configured to send, to the session management network element through the target access network device, information indicating that a user plane network element of the first terminal device is switched. The information includes the first tunnel information of the target user plane network element of the first terminal device.

In a possible implementation, the information further includes a session endpoint identifier of the target user plane network element of the first terminal device. The session endpoint identifier of the target user plane network element of the first terminal device identifies the session in the target user plane network element of the first terminal device.

In a possible implementation, the processing unit 1510 is configured to allocate the first tunnel information of the target user plane network element.

In a possible implementation, the transceiver unit 1520 is further configured to: receive tunnel information of the target access network device from the target access network device; and send second tunnel information of the target user plane network element to the target access network device, where the second tunnel information of the target user plane network element is used by the target access network device of the first terminal device to send uplink data of the first terminal device to the target user plane network element.

In a possible implementation, the transceiver unit 1520 is further configured to: receive first tunnel information of a target user plane network element of the second terminal device from the session management network element; and send downlink data of the second terminal device to the target user plane network element of the second terminal device.

In a possible implementation, the transceiver unit 1520 is further configured to: receive an end marker indication from the session management network element; and send an end marker to a source user plane network element of the second terminal device according to the end marker indication.

In a third embodiment, the communication apparatus is configured to perform a function of a source access network device of a first terminal device. The transceiver unit 1520 is configured to: send a switch preparation request message to a source user plane network element of the first terminal device, where the switch preparation request message includes an identifier of a session of the first terminal device; receive a switch preparation response message from the source user plane network element, where the switch preparation response message includes tunnel information of a user plane network element of a second terminal device corresponding to the session; and send the tunnel information of the user plane network element of the second terminal device to a target user plane network element of the first terminal device through a target access network device.

In a possible implementation, the transceiver unit 1520 is further configured to: receive, from the target access network device, radio resource information allocated by the target access network device to the session; and send the radio resource information to the first terminal device.

In a possible implementation, the transceiver unit 1520 is further configured to: receive, from the target access network device, forwarding tunnel information of the target access network device corresponding to the session; and send downlink data of the first terminal device to the target access network device based on the forwarding tunnel information.

In a fourth embodiment, the communication apparatus is configured to perform a function of a target access network device of a first terminal device. The transceiver unit 1520 is configured to: receive tunnel information of a user plane network element of a second terminal device from a source user plane network element of the first terminal device through a source access network device; and send the tunnel information of the user plane network element of the second terminal device to a target user plane network element of the first terminal device.

In a possible implementation, the transceiver unit 1520 is further configured to: receive information that is from the target user plane network element of the first terminal device and that indicates that a user plane network element of the first terminal device is switched, where the information includes tunnel information of the target user plane network element of the first terminal device; and send the information to a session management network element.

In a possible implementation, the information further includes a session endpoint identifier of the target user plane network element of the first terminal device. The session endpoint identifier of the target user plane network element of the first terminal device identifies a session in the target user plane network element of the first terminal device.

In a possible implementation, the tunnel information of the user plane network element of the second terminal device is included in a context of a session of the first terminal device. The context of the session further includes at least one of a session endpoint identifier of the session management network element, a packet detection rule corresponding to the session, and identification information of the session management network element. The session endpoint identifier of the session management network element identifies the session in the session management network element. The packet detection rule corresponding to the session is used by the target user plane network element of the first terminal device to process an uplink data packet and/or a downlink data packet of the first terminal device.

In a possible implementation, the session corresponds to a local area network LAN group. The transceiver unit 1520 is further configured to: receive a packet detection rule corresponding to the LAN group from the source user plane network element of the first terminal device, where the packet detection rule corresponding to the LAN group is used by the target user plane network element of the first terminal device to process a data packet sent to another UE in the LAN group; and send, to the target user plane network element of the first terminal device, the packet detection rule corresponding to the LAN group.

In a fifth embodiment, the communication apparatus is configured to perform a function of a session management network element. The transceiver unit 1520 is configured to: receive information indicating that a first terminal device is switched; receive first tunnel information of a target user plane network element from the target user plane network element of a second terminal device; send the first tunnel information of the target user plane network element of the second terminal device to a source user plane network element of the first terminal device, to update user plane network element information of the second terminal device in the source user plane network element of the first terminal device; send the first tunnel information of the target user plane network element of the second terminal device to a target user plane network element of the first terminal device; and send second tunnel information of the target user plane network element of the first terminal device to a target base station of the first terminal device.

In a possible implementation, the transceiver unit 1520 is further configured to: before receiving the first tunnel information of the target user plane network element of the second terminal device from the target user plane network element of the second terminal device, receive information indicating that the second terminal device is switched; and send first tunnel information of the source user plane network element of the first terminal device to the target user plane network element of the second terminal device.

In a possible implementation, the transceiver unit 1520 is further configured to send an end marker indication to the source user plane network element of the first terminal device. The end marker indication indicates to send an end marker to a source user plane network element of the second terminal device.

For more detailed descriptions about the processing unit 1510 and the transceiver unit 1520, directly refer to related descriptions in the foregoing method embodiments. Details are not described herein again.

As shown in FIG. 16, a communication apparatus 1600 includes a processor 1610 and an interface circuit 1620. The processor 1610 and the interface circuit 1620 are coupled to each other. It may be understood that the interface circuit 1620 may be a transceiver or an input/output interface. Optionally, the communication apparatus 1600 may further include a memory 1630, configured to store instructions executed by the processor 1610, or input data required by the processor 1610 to run instructions, or data generated after the processor 1610 runs instructions.

When the communication apparatus 1600 is configured to implement the foregoing method embodiments, the processor 1610 is configured to implement a function of the processing unit 1510, and the interface circuit 1620 is configured to implement a function of the transceiver unit 1520.

It may be understood that the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

The method steps in embodiments of this application may be implemented by hardware, or may be implemented by the processor executing a software instruction. The software instruction may include a corresponding software module. The software module may be stored in a random access memory, a flash, a read-only memory, a programmable read-only memory, an erasable programmable read-only memory, an electrically erasable programmable read-only memory, a register, a hard disk, a removable hard disk, a CD-ROM, or a storage medium in any other form well-known in the art. For example, a storage medium is coupled to the processor, so that the processor can read information from the storage medium or write information into the storage medium. Certainly, the storage medium may alternatively be a component of the processor. The processor and the storage medium may be disposed in an ASIC. In addition, the ASIC may be located in a base station or a terminal. Certainly, the processor and the storage medium may exist in the base station or the terminal as discrete components.

All or some of the foregoing embodiments may be implemented by software, hardware, firmware, or any combination thereof. When software is used for implementation, all or some of the embodiments may be implemented in a form of a computer program product. The computer program product includes one or more computer programs and instructions. When the computer programs or instructions are loaded and executed on a computer, all or some of the procedures or functions in embodiments of this application are executed. The computer may be a general-purpose computer, a dedicated computer, a computer network, a base station, a user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wireline manner or in a wireless manner. The computer-readable storage medium may be any usable medium accessible by a computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid state disk. The computer-readable storage medium may be a volatile or non-volatile storage medium, or may include two types of storage media: a volatile storage medium and a non-volatile storage medium.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

In this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. In the text descriptions of this application, the character "/" generally indicates an "or" relationship between the associated objects. In a formula in this application, the character "/" indicates a "division" relationship between the associated objects.

It may be understood that various numbers in embodiments of this application are merely used for differentiation for ease of description, and are not used to limit the scope of embodiments of this application. The sequence numbers of the foregoing processes do not mean execution sequences, and the execution sequences of the processes should be determined based on functions and internal logic of the processes.

## Claims

1. A switching method, wherein the method is applied to switching from a source access network device to a target access network device by a first terminal device, and comprises:
receiving, by a session management network element via the target access network device, information that is from a target user plane network element of the first terminal device and that indicates that a user plane network element of the first terminal device is switched, wherein the information indicating that a user plane network element of the first terminal device is switched comprises tunnel information of the target user plane network element of the first terminal device; and
sending, by the session management network element, the tunnel information of the target user plane network element of the first terminal device to a user plane network element of a second terminal device, to update user plane network element information of the first terminal device in the user plane network element of the second terminal device, wherein the tunnel information of the target user plane network element of the first terminal device is used to send downlink data of the first terminal device to the target user plane network element of the first terminal device.

2. The method according to claim 1, wherein the method further comprises:
sending, by the session management network element, an end marker indication to the user plane network element of the second terminal device, wherein the end marker indication indicates to send an end marker to a source user plane network element of the first terminal device.

3. The method according to claim 1 or 2, wherein the second terminal device is switched, and the user plane network element of the second terminal device is a target user plane network element of the second terminal device; and
before the receiving, by a session management network element via the target access network device, information that is from a target user plane network element of the first terminal device and that indicates that a user plane network element of the first terminal device is switched, the method further comprises:
receiving, by the session management network element, tunnel information of the target user plane network element of the second terminal device;
sending, by the session management network element, the tunnel information of the target user plane network element of the second terminal device to the source user plane network element of the first terminal device, to update user plane network element information of the second terminal device in the source user plane network element of the first terminal device; and
receiving, by the session management network element from the source user plane network element of the first terminal device, a response message for rejecting the update.

4. The method according to claim 3, wherein after the receiving, by a session management network element via the target access network device, information that is from a target user plane network element of the first terminal device and that indicates that a user plane network element of the first terminal device is switched, the method further comprises:
sending, by the session management network element, the tunnel information of the target user plane network element of the second terminal device to the target user plane network element of the first terminal device.

5. The method according to claim 1 or 2, wherein the second terminal device is switched, and the user plane network element of the second terminal device is a target user plane network element of the second terminal device; and
after the receiving, by a session management network element via the target access network device, information that is from a target user plane network element of the first terminal device and that indicates that a user plane network element of the first terminal device is switched, the method further comprises:
receiving, by the session management network element, tunnel information of the target user plane network element of the second terminal device; and
sending, by the session management network element, the tunnel information of the target user plane network element of the second terminal device to the target user plane network element of the first terminal device.

6. The method according to claim 4 or 5, wherein the method further comprises:
sending, by the session management network element, an end marker indication to the target user plane network element of the first terminal device, wherein the end marker indication indicates to send an end marker to a source user plane network element of the second terminal device.

7. The method according to any one of claims 4 to 6, wherein the receiving, by a session management network element via the target access network device, information that is from a target user plane network element of the first terminal device and that indicates that a user plane network element of the first terminal device is switched comprises:
receiving, by the session management network element, a session modification request from a mobility management network element, wherein the session modification request comprises the information indicating that a user plane network element of the first terminal device is switched.

8. The method according to claim 1, wherein the second terminal device is switched, and the user plane network element of the second terminal device is a target user plane network element of the second terminal device; and before the receiving, by a session management network element via the target access network device, information that is from a target user plane network element of the first terminal device and that indicates that a user plane network element of the first terminal device is switched, the method further comprises:
receiving, by the session management network element, tunnel information of the target user plane network element of the second terminal device; and
sending, by the session management network element, the tunnel information of the target user plane network element of the second terminal device to a source user plane network element of the first terminal device.

9. The method according to claim 8, wherein the method further comprises:
sending, by the session management network element, an end marker indication to the source user plane network element of the first terminal device, wherein the end marker indication indicates to send an end marker to the source access network device of the first terminal device.

10. The method according to claim 8, wherein the method further comprises:
sending, by the session management network element, an end marker indication to a source user plane network element of the second terminal device, wherein the end marker indication indicates to send an end marker to a source access network device of the second terminal device.

11. The method according to any one of claims 8 to 10, wherein after the receiving, by a session management network element via the target access network device, information that is from a target user plane network element of the first terminal device and that indicates that a user plane network element of the first terminal device is switched, the method further comprises:
sending, by the session management network element, the tunnel information of the target user plane network element of the second terminal device to the target user plane network element of the first terminal device.

12. The method according to claim 11, wherein the method further comprises:
receiving, by the session management network element, tunnel information of the source user plane network element of the second terminal device from the target user plane network element of the first terminal device; and
the sending, by the session management network element, the tunnel information of the target user plane network element of the second terminal device to the target user plane network element of the first terminal device comprises:
if the tunnel information of the source user plane network element of the second terminal device from the target user plane network element of the first terminal device is different from the tunnel information that is of the target user plane network element of the second terminal device and that is stored by the session management network element, sending, by the session management network element, the tunnel information of the target user plane network element of the second terminal device to the target user plane network element of the first terminal device.

13. The method according to claim 1, wherein after the receiving, by a session management network element via the target access network device, information that is from a target user plane network element of the first terminal device and that indicates that a user plane network element of the first terminal device is switched, the method further comprises:
receiving, by the session management network element, tunnel information of a target user plane network element of the second terminal device; and
sending, by the session management network element, the tunnel information of the target user plane network element of the second terminal device to a source user plane network element of the first terminal device and the target user plane network element of the first terminal device.

14. The method according to claim 13, wherein the method further comprises:
sending, by the session management network element, an end marker indication to the source user plane network element of the first terminal device, wherein the end marker indication indicates to send an end marker to the source access network device of the first terminal device.

15. The method according to any one of claims 8 to 14, wherein the receiving, by a session management network element via the target access network device, information that is from a target user plane network element of the first terminal device and that indicates that a user plane network element of the first terminal device is switched comprises:
receiving, by the session management network element, a message that is from a mobility management network element or the target access network device and that indicates that the first terminal device is being switched, wherein the message comprises the information indicating that a user plane network element of the first terminal device is switched.

16. A switching method, wherein the method is applied to switching from a source access network device to a target access network device by a first terminal device, and comprises:
receiving, by a target user plane network element of the first terminal device, first tunnel information of a user plane network element of a second terminal device from a source user plane network element of the first terminal device via the target access network device, wherein the first tunnel information of the user plane network element of the second terminal device is used to send downlink data of the second terminal device to the user plane network element of the second terminal device; and
sending, by the target user plane network element, first tunnel information of the target user plane network element of the first terminal device to a session management network element via the target access network device, wherein the first tunnel information of the target user plane network element of the first terminal device is used to send downlink data of the first terminal device to the target user plane network element of the first terminal device.

17. The method according to claim 16, wherein the first tunnel information of the user plane network element of the second terminal device is comprised in a context of a session of the first terminal device, the context of the session further comprises at least one of a session endpoint identifier of the session management network element, a packet detection rule corresponding to the session, or identification information of the session management network element, the session endpoint identifier of the session management network element identifies the session in the session management network element, and the packet detection rule corresponding to the session is used by the target user plane network element of the first terminal device to process an uplink data packet and/or a downlink data packet of the first terminal device.

18. The method according to claim 17, wherein the session corresponds to a local area network LAN group, and the method further comprises:
receiving, by the target user plane network element, a packet detection rule corresponding to the LAN group from the source user plane network element of the first terminal device via the target access network device, wherein the packet detection rule corresponding to the LAN group is used by the target user plane network element to process a data packet sent to another UE in the LAN group.

19. The method according to any one of claims 16 to 18, wherein the sending, by the target user plane network element, first tunnel information of the target user plane network element of the first terminal device to a session management network element via the target access network device comprises:
sending, by the target user plane network element to the session management network element via the target access network device, information indicating that a user plane network element of the first terminal device is switched, wherein the information indicating that a user plane network element of the first terminal device is switched comprises the first tunnel information of the target user plane network element of the first terminal device.

20. The method according to claim 19, wherein the information indicating that a user plane network element of the first terminal device is switched further comprises a session endpoint identifier of the target user plane network element of the first terminal device, and the session endpoint identifier of the target user plane network element of the first terminal device identifies the session in the target user plane network element of the first terminal device.

21. The method according to any one of claims 16 to 20, wherein the method further comprises:
receiving, by the target user plane network element, tunnel information of the target access network device from the target access network device; and
sending, by the target user plane network element, second tunnel information of the target user plane network element to the target access network device, wherein the second tunnel information of the target user plane network element is used by the target access network device of the first terminal device to send uplink data of the first terminal device to the target user plane network element.

22. The method according to any one of claims 16 to 21, wherein the method further comprises:
receiving, by the target user plane network element, first tunnel information of a target user plane network element of the second terminal device from the session management network element; and
sending, by the target user plane network element, downlink data of the second terminal device to the target user plane network element of the second terminal device.

23. The method according to any one of claims 16 to 22, wherein the method further comprises:
receiving, by the target user plane network element, an end marker indication from the session management network element; and
sending, by the target user plane network element, an end marker to a source user plane network element of the second terminal device according to the end marker indication.

24. A communication apparatus, comprising a module configured to perform the method according to any one of claims 1 to 15.

25. A communication apparatus, comprising a module configured to perform the method according to any one of claims 16 to 23.

26. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 1 to 15 through a logic circuit or by executing code instructions.

27. A communication apparatus, comprising a processor and an interface circuit, wherein the interface circuit is configured to: receive a signal from another communication apparatus other than the communication apparatus and transmit the signal to the processor, or send a signal from the processor to another communication apparatus other than the communication apparatus, and the processor is configured to implement the method according to any one of claims 16 to 23 through a logic circuit or by executing code instructions.

28. A computer program product, comprising a computer program, wherein when the computer program is executed by a communication apparatus, the method according to any one of claims 1 to 23 is implemented.

29. A computer-readable storage medium, wherein the storage medium stores a computer program or instructions; and when the computer program or the instructions are executed by a communication apparatus, the method according to any one of claims 1 to 23 is implemented.

30. A communication system, comprising the session management network element and the target user plane network element of the first terminal device according to any one of claims 1 to 15, wherein
the target user plane network element of the first terminal device is configured to send, to the session management network element via a target access network device of the first terminal, information indicating that a user plane network element of the first terminal device is switched, wherein the information indicating that a user plane network element of the first terminal device is switched comprises tunnel information of the target user plane network element of the first terminal device.
